# EUROPEAN PATENT APPLICATION

(11) **EP 2 958 281 A1**
(43) Date of publication of application: **23.12.2015**
(21) Application number: 14762661.8
(22) Date of filing: 07.03.2014
(51) Int. Cl.: H04L 12/741

(54) **CONTAINER NAME SERVER AND CONTAINER NAME ANALYSIS METHOD**

(30) Priority: 11.03.2013 CN 201310075826
(71) Applicant: Huawei Technologies Co., Ltd., Longgang District Shenzhen, Guangdong 518129 (CN)
(72) Inventor: FAN, Lingyuan, Shenzhen Guangdong 518129 (CN); YAO, Chunfeng, Shenzhen Guangdong 518129 (CN); YAN, Zhefeng, Shenzhen Guangdong 518129 (CN)
(74) Representative: Epping - Hermann - Fischer
(86) International application number: PCT/CN2014/073083
(87) International publication number: WO 2014/139378

(57) **Abstract**

Embodiments of the present invention provide a container name server and a method for container name resolution. The container name server includes: a network interface configured to receive a resolution request packet sent by a network node, where the resolution request packet includes a container identification of a container to be resolved; and an execution engine configured to acquire a container identification of an access container of the container to be resolved according to the container identification of the container to be resolved. In embodiments of the present invention, possibilities for solving problems such as scalability and mobility support caused by routing based completely on a content name are provided by introducing a container name server and taking the container name server as a name resolution system in an ICN network.

## Description

This application claims priority to Chinese Patent Application No. 201310075826.X, filed with the Chinese Patent Office on March 11, 2013 and entitled "CONTAINER NAME SERVER AND METHOD FOR CONTAINER NAME RESOLUTION", which is hereby incorporated by reference in its entirety.

### TECHNICAL FIELD

Embodiments of the present invention relate to the field of communications and, more particularly, to a method and a system for name resolution of an information centric network.

### BACKGROUND

An internet protocol (Internet Protocol, "IP" for short) has achieved a great success in promoting the internet everywhere, however, when the IP emerges at the beginning, a "terminal" is placed at a core position, each IP packet identified by a destination IP address and a source IP address bears a session between two terminals, thus the IP is a terminal centric network protocol. Nowadays, people use the internet mainly for information acquisition rather than the session between terminals, for instance, as a matter of fact, applications such as network news, search engines, online music, online video, blog, micro-blog, social networking sites and network forums mainly target at generating, propagating and sharing various information, and people are not concerned about where to acquire the information when acquiring the information, this is a completely new mode which is information or content centric. In order to solve a problem that the internet applications in the information centric mode and the IP in the terminal centric mode do not match, the research community attempts to redefine the waist of internet's hourglass model, and the research directly caters to a new information and content oriented future internet architecture.

In all information centric network (Information Centric Network, "ICN" for short) architectures, a named data network (Named Data Network, "NDN" for short) has a relatively great influence, and the NDN evolves from a content centric networking (Content Centric Networking, "CCN" for short) research led by Van Jacobson. The NDN and the CCN believe that the future network should be based on directly content-based naming and routing, and uses structurized content naming similar to a URL, realizes a cache function in an NDN router through a content store (Content Store, "CS" for short), and looks up and determines a next hop through the longest content name prefix match of a requested content's content name in a forwarding information base (Forwarding Information Base, "FIB" for short). The NDN is also devoted to implementing content name-based forwarding based on current IP routers and Ethernet forwarding engines.

In the current NDN/CCN solution, there isn't a name resolution system which performs routing based on a prefix of a content name completely, thereby causing problems such as scalability and mobility support of routing.

### SUMMARY

Embodiments of the present invention provide a container name server and a method for container name resolution, which provide possibilities for solving problems such as routing scalability and mobility caused by the container name.

In a first aspect, a container name server is provided, including:
a network interface, configured to receive a resolution request packet sent by a network node, where the resolution request packet includes a container identification of a container to be resolved; and
an execution engine, configured to acquire a container identification of an access container of the container to be resolved according to the container identification of the container to be resolved.

According to the first aspect, in an implementation mode of the first aspect, the network interface is further configured to send a resolution response packet to the network node sending the resolution request packet, where the resolution response packet includes the container identification of the access container of the container to be resolved.

According to the first aspect and its implementation mode above, in another implementation mode of the first aspect, the network interface is specifically configured to receive the resolution request packet sent by the network node, where the resolution request packet is an interest packet; and send the resolution response packet to the network node sending the resolution request packet, where the resolution response packet is a data packet.

According to the first aspect and its implementation modes above, in another implementation mode of the first aspect, the container name server further includes a database, the execution engine is specifically configured to query the database for the container identification of the access container of the container to be resolved according to the container identification of the container to be resolved, where the database stores a mapping relationship between the container to be resolved and the access container of the container to be resolved.

According to the first aspect and its implementation modes above, in another implementation of the first aspect, the network interface is further configured to receive a registration request packet sent by the network node, where the registration request packet includes a container identification of a container to be registered and a container identification of an access container of the container to be registered; and the execution engine is further configured to store a mapping relationship between the container to be registered and the access container of the container to be registered so as to acquire the container identification of the access container of the container to be registered according to the container identification of the container to be registered.

According to the first aspect and its implementation modes above, in another implementation mode of the first aspect, the network interface is specifically configured to receive the registration request packet sent by the network node, where the registration request packet is an interest packet.

According to the first aspect and its implementation modes above, in another implementation mode of the first aspect, the network interface is further configured to send a registration response packet to the network node sending the registration request packet, where the registration response packet includes information used to indicate whether registration is successful and information used to indicate that information in the registration response packet is un-cacheable.

According to the first aspect and its implementation modes above, in another implementation mode of the first aspect, the network interface is specifically configured to send the registration response packet to the network node sending the registration request packet, where the registration response packet is a data packet.

According to the first aspect and its implementation modes above, in another implementation mode of the first aspect, the network interface is further configured to receive an unregistration request packet sent by the network node, where the unregistration request packet includes a container identification of a container to be unregistered and a container identification of an access container of the container to be unregistered; the execution engine is further configured to delete from the database a mapping relationship between the container to be unregistered and the access container of the container to be unregistered.

According to the first aspect and its implementation modes above, in another implementation mode of the first aspect, the network interface is specifically configured to receive the unregistration request packet sent by the network node, where the unregistration request packet is an interest packet.

According to the first aspect and its implementation modes above, in another implementation mode of the first aspect, the execution engine is specifically configured to query from a database for the container identification of the access container of the container to be resolved according to the container identification of the container to be resolved; and when the container identification of the access container is not found, determine an authority container name server of the container to be resolved according to the container identification of the container to be resolved, where the authority container name server is configured to register, unregister and resolve the container to be resolved; the network interface is further configured to forward the resolution request packet to the authority container name server.

According to the first aspect and its implementation modes above, in another implementation mode of the first aspect, the container is a storage space which is configured to store a group of content.

According to the first aspect and its implementation modes above, in another implementation mode of the first aspect, the container includes at least one routing node, and through one or more routing nodes of the at least one routing node, content stored by the container can be routed to within the container, or the content stored by the container can be routed to via the container.

According to the first aspect and its implementation modes above, in another implementation mode of the first aspect, content stored by the container is corresponding to one or more attribute containers, and the attribute container of the content is a container which can directly route to the content.

According to the first aspect and its implementation modes above, in another implementation mode of the first aspect, the container is an access container of one or more first further containers; and/or one or more second further containers are access containers of the container; where, the access container is a container which includes a further container in a topological relation and in which there is a forwarding entry routing a content request packet corresponding to the content stored by the container to the further container.

In a second aspect, a network node is provided, including: an execution engine, configured to acquire a resolution request packet, where the resolution request packet includes a container identification of a container to be resolved, and a network interface, configured to send the resolution request packet to a container name server, so that the container name server acquires a container identification of an access container of the container to be resolved according to the container identification of the container to be resolved; or an execution engine, configured to acquire a registration request packet, where the registration request packet includes a container identification of a container to be registered and a container identification of an access container of the container to be registered, and a network interface, configured to send the registration request packet to an authority container name server of the container to be registered, so that the authority container name server stores a mapping relationship between the container to be registered and the access container of the container to be registered; or an execution engine, configured to acquire an unregistration request packet, where the unregistration request packet includes a container identification of a container to be unregistered and a container identification of an access container of the container to be unregistered, and a network interface, configured to send the unregistration request packet to an authority container name server of the container to be unregistered, so that the authority container name server deletes from a database a mapping relationship between the container to be unregistered and the access container of the container to be unregistered according to the container identification of the access container of the container to be unregistered.

According to the second aspect, in an implementation mode of the second aspect, the network interface is further configured to receive a resolution response packet corresponding to the resolution request packet, where the resolution response packet includes the container identification of the access container of the container to be resolved.

According to the second aspect and its implementation mode above, in another implementation mode of the second aspect, the resolution request packet is an interest packet, and the resolution response packet is a data packet.

According to the second aspect and its implementation modes above, in another implementation mode of the second aspect, the network interface is further configured to receive a registration response packet corresponding to the registration request packet, where the registration response packet includes information used to indicate whether registration is successful and information used to indicate that information in the registration response packet is un-cacheable.

According to the second aspect and its implementation modes above, in another implementation mode of the second aspect, the registration request packet is an interest packet, and the registration response packet is a data packet.

According to the second aspect and its implementation modes above, in another implementation mode of the second aspect, the network interface is further configured to receive an unregistration response packet corresponding to the unregistration request packet, where the response packet includes information used to indicate whether unregistration is successful and information used to indicate that information in the registration response packet is un-cacheable.

According to the second aspect and its implementation modes above, in another implementation mode of the second aspect, the unregistration request packet is an interest packet, and the unregistration response packet is a data packet.

According to the second aspect and its implementation modes above, in another implementation mode of the second aspect, the network interface is further configured to receive a content request packet, where the content request packet carries a content name of requested content and container information of the requested content, and the container information of the requested content includes a container identification which is used to identify a container storing the requested content; the execution engine is specifically configured to generate the resolution request packet, where the container identification of the container to be resolved is a container identification of the container of the requested content.

According to the second aspect and its implementation modes above, in another implementation mode of the second aspect, the container information of the requested content further includes a resolution identification corresponding to the container identification, the resolution identification is used to identify whether a container corresponding to the container identification is resolvable, the network interface is further configured to receive a resolution result sent by the container name server, where the resolution result includes the container identification of the access container of the container to be resolved; the execution engine is further configured to match the container identification in the container information of the requested content and container identifications of access containers of all resolvable containers of the requested content with a preset container identification in a forwarding information base FIB to determine whether there is in the FIB a forwarding entry matching the container identification in the container information of the requested content and the container identifications of the access containers; the network interface is further configured to: when there is in the FIB a forwarding entry matching the container identification in the container information of the requested content or the container identification of the access container of the container to be resolved, send the content request packet according to an interface in the matching forwarding entry.

According to the second aspect and its implementation modes above, in another implementation mode of the second aspect, the execution engine is further configured to add container information of the access containers of all resolvable containers of the requested content acquired through resolution into the container information of the requested content.

According to the second aspect and its implementation modes above, in another implementation mode of the second aspect, the container information further includes a resolution identification corresponding to the container identification, where the resolution identification is used to identify whether a container corresponding to the container identification is resolvable; the execution engine is further configured to determine whether there is in an FIB a forwarding entry matching the container identification in the container information of the requested content, where the forwarding entry in the FIB includes a preset container identification and an interface corresponding to the preset container identification; when there isn't in the FIB the forwarding entry matching the container identification in the container information of the requested content, acquire the container identification of the access container of the container from the container name server through resolution according to the resolution identification; match the container identification of the access container acquired through the resolution with the preset container identification in the FIB to determine whether there is in the FIB a forwarding entry matching the container identification of the access container acquired through the resolution.

According to the second aspect and its implementation modes above, in another implementation mode of the second aspect, the execution engine is further configured to add container information of the access container acquired through the resolution into the container information of the requested content.

According to the second aspect and its implementation modes above, in another implementation mode of the second aspect, the container is a storage space which is configured to store a group of content.

According to the second aspect and its implementation modes above, in another implementation mode of the second aspect, the container includes at least one routing node, and through one or more routing nodes of the at least one routing node, content stored by the container can be routed to within the container, or the content stored by the container can be routed to via the container.

According to the second aspect and its implementation modes above, in another implementation mode of the second aspect, content stored by the container is corresponding to one or more attribute containers, and the attribute container of the content is a container which can directly route to the content.

According to the second aspect and its implementation modes above, in another implementation mode of the second aspect, the container is an access container of one or more first further containers; and/or one or more second further containers are access containers of the container; where the access container is a container which includes a further container in a topological relation and in which there is a forwarding entry routing a content request packet corresponding to the content stored by the container to the further container.

According to the second aspect and its implementation modes above, in another implementation mode of the second aspect, the FIB includes a global container forwarding entry, where the global container forwarding entry includes a container identification of a global container and a first interface corresponding to the container identification of the global container, the first interface is an interface which connects the current node to a next hop routing node to reach the global container, the global container is a globally routable container, and the global container includes a topology-related global container and/or a topology-unrelated global container.

According to the second aspect and its implementation modes above, in another implementation mode of the second aspect, the FIB further includes a topology-related container forwarding entry which is used to perform routing based on the topology-related container, and through the topology-related container forwarding entry, a route of a lower level container of a container to which the current node belongs is enabled to serve as an internal route of the current node without diffusing out of the container to which the current node belongs; where the topology-related container is a container which forms a topological relation with a further container, and the topological relation includes: a higher level container including one or more lower level containers, and/or a lower level container being included by one or more higher level containers.

According to the second aspect and its implementation modes above, in another implementation mode of the second aspect, the topology-related container forwarding entry includes a container identification of the lower level container of the container to which the current node belongs and a second interface corresponding to the container identification of the lower level container, where the second interface is an interface which connects the current node to the lower level container; through the topology-related container forwarding entry, the route of the lower level container of the container to which the current node belongs being enabled to serve as the internal route of the current node without diffusing out of the container to which the current node belongs, includes: through the container identification of the lower level container and the second interface corresponding to the container identification of the lower level container in the topology-related container forwarding entry, the route of the lower level container of the container to which the current node belongs is enabled to serve as the internal route of the current node without diffusing out of the container to which the current node belongs.

According to the second aspect and its implementation modes above, in another implementation mode of the second aspect, a container identification corresponding to the topology-related container has a nature which can reflect a level of the topology-related container, thus indicating the topological relation formed between the topology-related container and a further container.

According to the second aspect and its implementation modes above, in another implementation mode of the second aspect, the FIB further includes a topology-unrelated small container forwarding entry, where the topology-unrelated small container forwarding entry includes a container identification of a topology-unrelated small container and a third interface corresponding to the container identification of the topology-unrelated small container, and the third interface is an interface which connects the current node to a next hop routing node to reach the topology-unrelated small container.

In a third aspect, a method for container name resolution is provided, including: receiving a resolution request packet sent by a network node, where the resolution request packet includes a container identification of a container to be resolved; and acquiring a container identification of an access container of the container to be resolved according to the container identification of the container to be resolved.

According to the third aspect, in an implementation mode of the third aspect, further including: sending a resolution response packet to the network node sending the resolution request packet, where the resolution response packet includes the container identification of the access container of the container to be resolved.

According to the third aspect and its implementation mode above, in another implementation mode of the third aspect, the receiving the resolution request packet sent by the network node includes: receiving the resolution request packet sent by the network node, where the resolution request packet is an interest packet; and the sending the resolution response packet to the network node sending the resolution request packet includes: sending the resolution response packet to the network node sending the resolution request packet, where the resolution response packet is a data packet.

According to the third aspect and its implementation modes above, in another implementation mode of the third aspect, the acquiring the container identification of the access container of the container to be resolved according to the container identification of the container to be resolved includes: querying a database for the container identification of the access container of the container to be resolved according to the container identification of the container to be resolved, where the database stores a mapping relationship between the container to be resolved and the access container of the container to be resolved.

According to the third aspect and its implementation modes above, in another implementation mode of the third aspect, further including: receiving a registration request packet sent by the network node, where the registration request packet includes a container identification of a container to be registered and a container identification of an access container of the container to be registered; and storing a mapping relationship between the container to be registered and the access container of the container to be registered to acquire the container identification of the access container of the container to be registered according to the container identification of the container to be registered.

According to the third aspect and its implementation modes above, in another implementation mode of the third aspect, the receiving the registration request packet sent by the network node includes: receiving the registration request packet sent by the network node, where the registration request packet is an interest packet.

According to the third aspect and its implementation modes above, in another implementation mode of the third aspect, further including: sending a registration response packet to the network node sending the registration request packet, where the registration response packet includes information which is configure to indicate whether registration is successful and information used to indicate that information in the registration response packet is un-cacheable.

According to the third aspect and its implementation modes above, in another implementation mode of the third aspect, the sending the registration response packet to the network node sending the registration request packet includes: sending the registration response packet to the network node sending the registration request packet, where the registration response packet is a data packet.

According to the third aspect and its implementation modes above, in another implementation mode of the third aspect, further including: receiving an unregistration request packet sent by the network node, where the unregistration request packet includes a container identification of a container to be unregistered and a container identification of an access container of the container to be unregistered; deleting from a database a mapping relationship between the container to be unregistered and the access container of the container to be unregistered.

According to the third aspect and its implementation modes above, in another implementation mode of the third aspect, the receiving the unregistration request packet sent by the network node includes: receiving the unregistration request packet sent by the network node, where the unregistration request packet is an interest packet.

According to the third aspect and its implementation modes above, in another implementation mode of the third aspect, the acquiring the container identification of the access container of the container to be resolved according to the container identification of the container to be resolved includes: querying a database for the container identification of the access container of the container to be resolved according to the container identification of the container to be resolved; when the container identification of the access container is not queried, determining an authority container name server of the container to be resolved according to the container identification of the container to be resolved, where the authority container name server is configured to register, unregister and resolve the container to be resolved; forwarding the resolution request packet to the authority container name server.

According to the third aspect and its implementation modes above, in another implementation mode of the third aspect, the container is a storage space which is configured to store a group of content.

According to the third aspect and its implementation modes above, in another implementation mode of the third aspect, the container includes at least one routing node, and through one or more routing nodes of the at least one routing node, content stored by the container can be routed to within the container, or the content stored by the container can be routed to via the container.

According to the third aspect and its implementation modes above, in another implementation mode of the third aspect, content stored by the container are corresponding to one or more attribute containers, and the attribute container of the content is a container which can directly route to the content.

According to the third aspect and its implementation modes above, in another implementation mode of the third aspect, the container is an access container of one or more first further containers; and/or one or more second further containers are access containers of the container; where the access container is a container which includes a further container in a topological relation and in which there is a forwarding entry routing a content request packet corresponding to the content stored by the container to the further container.

In a fourth aspect, a method for container name resolution is provided, including: acquiring a resolution request packet, where the resolution request packet includes a container identification of a container to be resolved, and sending the resolution request packet to a container name server, so that the container name server acquires a container identification of an access container of the container to be resolved according to the container identification of the container to be resolved; or acquiring a registration request packet, where the registration request packet includes a container identification of a container to be registered and a container identification of an access container of the container to be registered, and sending the registration request packet to an authority container name server of the container to be registered, so that the authority container name server stores a mapping relationship between the container to be registered and the access container of the container to be registered; or acquiring an unregistration request packet, where the unregistration request packet includes a container identification of a container to be unregistered and a container identification of an access container of the container to be unregistered, and sending the unregistration request packet to an authority container name server of the container to be unregistered, so that the authority container name server deletes from a database a mapping relationship between the container to be unregistered and the access container of the container to be unregistered according to the container identification of the access container of the container to be unregistered.

According to the fourth aspect, in an implementation mode of the fourth aspect, further including: receiving a resolution response packet corresponding to the resolution request packet, where the resolution response packet includes the container identification of the access container of the container to be resolved.

According to the fourth aspect and its implementation mode above, in another implementation mode of the fourth aspect, the resolution request packet is an interest packet, and the resolution response packet is a data packet.

According to the fourth aspect and its implementation modes above, in another implementation mode of the fourth aspect, further including: receiving a registration response packet corresponding to the registration request packet, where the registration response packet includes information used to indicate whether registration is successful and information used to indicate that information in the registration response packet is un-cacheable.

According to the fourth aspect and its implementation modes above, in another implementation mode of the fourth aspect, the registration request packet is an interest packet, and the registration response packet is a data packet.

According to the fourth aspect and its implementation modes above, in another implementation mode of the fourth aspect, further including: receiving an unregistration response packet corresponding to the unregistration request packet, where the response packet includes information used to indicate whether unregistration is successful and information used to indicate that information in the registration response packet is un-cacheable.

According to the fourth aspect and its implementation modes above, in another implementation mode of the fourth aspect, the unregistration request packet is an interest packet, and the unregistration response packet is a data packet.

According to the fourth aspect and its implementation modes above, in another implementation mode of the fourth aspect, the acquiring the resolution request packet includes: receiving a content request packet, where the content request packet carries a content name of requested content and container information of the requested content, and the container information of the requested content includes a container identification which is used to identify a container storing the requested content; generating the resolution request packet, where the container identification of the container to be resolved is a container identification of the container of the requested content.

According to the fourth aspect and its implementation modes above, in another implementation mode of the fourth aspect, the container information of the requested content further includes a resolution identification corresponding to the container identification, the resolution identification is used to identify whether a container corresponding to the container identification is resolvable, the method further includes: receiving a resolution result sent by the container name server, where the resolution result includes the container identification of the access container of the container to be resolved; matching the container identification in the container information of the requested content and container identifications of access containers of all resolvable containers of the requested content with a preset container identification in a forwarding information base FIB to determine whether there is in the FIB a forwarding entry matching the container identification in the container information of the requested content and the container identifications of the access containers; when there is in the FIB a forwarding entry matching the container identification in the container information of the requested content or the container identification of the access container of the container to be resolved, sending the content request packet according to an interface in the matching forwarding entry.

According to the fourth aspect and its implementation modes above, in another implementation mode of the fourth aspect, the method further includes: adding container information of the access containers of all resolvable containers of the requested content acquired through resolution into the container information of the requested content.

According to the fourth aspect and its implementation modes above, in another implementation mode of the fourth aspect, the container information further includes a resolution identification corresponding to the container identification, where the resolution identification is used to identify whether a container corresponding to the container identification is resolvable; the method further includes: determining whether there is in an FIB a forwarding entry matching the container identification in the container information of the requested content, where the forwarding entry in the FIB includes a preset container identification and an interface corresponding to the preset container identification; when there isn't in the FIB the forwarding entry matching the container identification in the container information of the requested content, acquiring the container identification of the access container of the container from the container name server through resolution according to the resolution identification; matching the container identification of the access container acquired through the resolution with the preset container identification in the FIB to determine whether there is in the FIB a forwarding entry matching the container identification of the access container acquired through the resolution.

According to the fourth aspect and its implementation modes above, in another implementation mode of the fourth aspect, the method further includes: adding container information of the access container acquired through the resolution into the container information of the requested content.

According to the fourth aspect and its implementation modes above, in another implementation mode of the fourth aspect, the container is a storage space which is configured to store a group of content.

According to the fourth aspect and its implementation modes above, in another implementation mode of the fourth aspect, the container includes at least one routing node, and through one or more routing nodes in the at least one routing node, content stored by the container can be routed to within the container, or the content stored by the container can be routed to via the container.

According to the fourth aspect and its implementation modes above, in another implementation mode of the fourth aspect, content stored by the container are corresponding to one or more attribute containers, and the attribute container of the content is a container which can directly route to the content.

According to the fourth aspect and its implementation modes above, in another implementation mode of the fourth aspect, the container is an access container of one or more first further containers; and/or one or more second further containers are access containers of the container; where the access container is a container which includes a further container in a topological relation and in which there is a forwarding entry routing a content request packet corresponding to the content stored by the container to the further container.

According to the fourth aspect and its implementation modes above, in another implementation mode of the fourth aspect, the FIB includes a global container forwarding entry, where the global container forwarding entry includes a container identification of a global container and a first interface corresponding to the container identification of the global container, the first interface is an interface which connects the current node to a next hop routing node to reach the global container, the global container is a globally routable container, and the global container includes a topology-related global container and/or a topology-unrelated global container.

According to the fourth aspect and its implementation modes above, in another implementation mode of the fourth aspect, the FIB further includes a topology-related container forwarding entry which is used to perform routing based on the topology-related container, and through the topology-related container forwarding entry, a route of a lower level container of a container to which the current node belongs is enabled to serve as an internal route of the current node without diffusing out of the container to which the current node belongs; where the topology-related container is a container which forms a topological relation with a further container, and the topological relation includes: a higher level container including one or more lower level containers, and/or a lower level container being included by one or more higher level containers.

According to the fourth aspect and its implementation modes above, in another implementation mode of the fourth aspect, the topology-related container forwarding entry includes a container identification of the lower level container of the container to which the current node belongs and a second interface corresponding to the container identification of the lower level container, where the second interface is an interface which connects the current node to the lower level container; through the topology-related container forwarding entry, the route of the lower level container of the container to which the current node belongs being enabled to serve as the internal route of the current node without diffusing out of the container to which the current node belongs, includes: through the container identification of the lower level container and the second interface corresponding to the container identification of the lower level container in the topology-related container forwarding entry, the route of the lower level container of the container to which the current node belongs is enabled to serve as the internal route of the current node without diffusing out of the container to which the current node belongs.

According to the fourth aspect and its implementation modes above, in another implementation mode of the fourth aspect, a container identification corresponding to the topology-related container has a nature which can reflect a level of the topology-related container, thus indicating the topological relation formed between the topology-related container and a further container.

According to the fourth aspect and its implementation modes above, in another implementation mode of the fourth aspect, the FIB further includes a topology-unrelated small container forwarding entry, where the topology-unrelated small container forwarding entry includes a container identification of a topology-unrelated small container and a third interface corresponding to the container identification of the topology-unrelated small container, and the third interface is an interface which connects the current node to a next hop routing node to reach the topology-unrelated small container.

In embodiments of the present invention, possibilities for solving problems such as scalability and mobility support caused by routing totally based on a content name are provided by introducing a container name server and taking the container name server as a name resolution system in an ICN network.

### BRIEF DESCRIPTION OF DRAWINGS

In order to make technical solutions in embodiments of the present invention or the prior art clearer, accompanying drawings used for description of embodiments of the present invention or the prior art will be briefly described hereunder. Obviously, the described drawings are merely some embodiments of present invention. For persons skilled in the art, other drawings may be obtained based on these drawings without any creative effort.
FIG. 1 is a schematic diagram of a container name resolution system according to an embodiment of the present invention.
FIG. 2 is a container name server according to an embodiment of the present invention.
FIG. 3 is a schematic diagram of a data storage form in a container name server according to an embodiment of the present invention.
FIG. 4 is a network node according to an embodiment of the present invention.
FIG. 5 is a method for container name resolution according to an embodiment of the present invention.
FIG. 6 is a flow chart of a request for registration/unregistration of a target container according to an embodiment of the present invention.
FIG. 7 is a flow chart of a request for resolution of a target container according to an embodiment of the present invention.
FIG. 8 is a flow chart of operation of an execution engine of a container name server according to an embodiment of the present invention.
FIG. 9 is a schematic flowchart diagram of a routing and forwarding method according to an embodiment of the present invention.
FIG. 10(a) is a schematic diagram of a tree structure formed between a content name and a container set according to an embodiment of the present invention.
FIG. 10(b) is a schematic structural diagram of a directed acyclic graph formed between a content name and a container set according to an embodiment of the present invention.
FIG. 11 is another schematic flowchart diagram of a routing and forwarding method according to an embodiment of the present invention.
FIG. 12 is still another schematic flowchart diagram of a routing and forwarding method according to an embodiment of the present invention.
FIG. 13 is still another schematic flowchart diagram of a routing and forwarding method according to an embodiment of the present invention.
FIG. 14 is still another schematic flowchart diagram of a routing and forwarding method according to an embodiment of the present invention.
FIG. 15 is a schematic flowchart diagram of a routing and forwarding method according to another embodiment of the present invention.
FIG. 16 is a schematic diagram of a content request packet and a data packet according to an embodiment of the present invention.
FIG. 17 is a schematic flowchart diagram of a routing and forwarding method according to still another embodiment of the present invention.
FIG. 18 is a schematic flowchart diagram of a routing and forwarding method according to still another embodiment of the present invention.
FIG. 19 is a schematic flowchart diagram of a routing and forwarding method according to still another embodiment of the present invention.
FIG. 20 is a schematic diagram of network architecture according to an embodiment of the present invention.
FIG. 21 is a schematic flowchart diagram of a method for processing a content request according to an embodiment of the present invention.
FIG. 22 is another schematic flowchart diagram of a method for processing a content request according to an embodiment of the present invention.
FIG. 23 is a schematic flowchart diagram of a method for establishing a routing table according to an embodiment of the present invention.
FIG. 24 is a schematic flowchart diagram of a method for acquiring content according to an embodiment of the present invention.
FIG. 25 is another schematic flowchart diagram of a method for acquiring content according to an embodiment of the present invention.
FIG. 26 is still another schematic flowchart diagram of a method for acquiring content according to an embodiment of the present invention.
FIG. 27 is a schematic flowchart diagram of a method for releasing content according to an embodiment of the present invention.
FIG. 28 is another schematic flowchart diagram of a method for releasing content according to an embodiment of the present invention.
FIG. 29 is a schematic block diagram of a router according to an embodiment of the present invention.
FIG. 30 is a schematic block diagram of a second determining module of a router according to an embodiment of the present invention.
FIG. 31 is another schematic block diagram of a router according to an embodiment of the present invention.
FIG. 32 is still another schematic block diagram of a router according to an embodiment of the present invention.
FIG. 33 is still another schematic block diagram of a router according to an embodiment of the present invention.
FIG. 34 is a schematic block diagram of a router according to another embodiment of the present invention.
FIG. 35 is a schematic block diagram of a determining module of a router according to another embodiment of the present invention.
FIG. 36 is a schematic block diagram of a device for establishing a routing table according to an embodiment of the present invention.
FIG. 37 is a schematic block diagram of a user equipment according to an embodiment of the present invention.
FIG. 38 is another schematic block diagram of a user equipment according to an embodiment of the present invention.
FIG. 39 is still another schematic block diagram of a user equipment according to an embodiment of the present invention.
FIG. 40 is still another schematic block diagram of a user equipment according to an embodiment of the present invention.
FIG. 41 is a schematic block diagram of a device for releasing content according to an embodiment of the present invention.
FIG. 42 is another schematic block diagram of a device for releasing content according to an embodiment of the present invention.
FIG. 43 is a schematic block diagram of a router according to still another embodiment of the present invention.
FIG. 44 is a schematic block diagram of a router according to still another embodiment of the present invention.
FIG. 45 is another schematic block diagram of a router according to still another embodiment of the present invention.
FIG. 46 is a schematic block diagram of a device for establishing a routing table according to another embodiment of the present invention.
FIG. 47 is a schematic block diagram of a user equipment according to another embodiment of the present invention.
FIG. 48 is a schematic block diagram of a device for releasing content according to another embodiment of the present invention.

### DESCRIPTION OF EMBODIMENTS

Technical solutions in embodiments of the present invention are hereinafter described clearly and completely with reference to the accompanying drawings in embodiments of the present invention. Obviously, the described embodiments are only a part of embodiments of the present invention, rather than all embodiments of the present invention. All other embodiments obtained by persons of ordinary skill in the art based on embodiments of the present invention without any creative effort shall fall within the protection scope of the present invention.

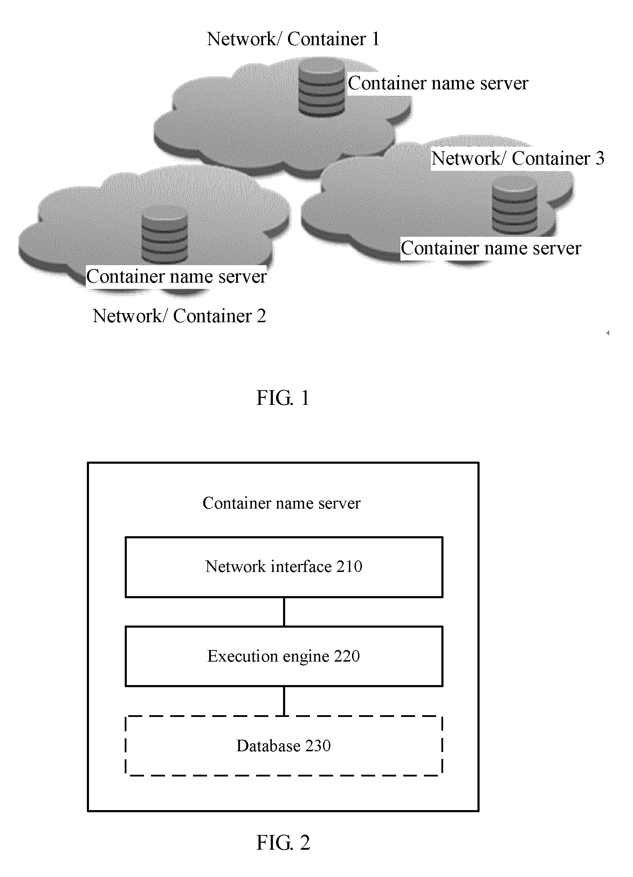

FIG. 1 is a schematic diagram of a container name resolution system according to an embodiment of the present invention. FIG. 1 is formed by at least one container name server distributed in a same network or different networks.

The container name server may be used to save a mapping relationship between a container and a container or a container set providing an access service for the container, and may perform operations such as registration, unregistration and resolution for the container.

It should be noted that, for each resolvable container, there is an authority container name server corresponding to the resolvable container in the container name resolution system. Registration and unregistration of a container name of the resolvable container are carried out on the authority container name server of the resolvable container.

A resolution operation of the container name server may include that, when a resolution request of a container is received, a mapping relationship between the container and an access container thereof is sent to a requester as a resolution result.

A registration operation of the authority container name server may include that, when a registration request of a mapping relationship between a container and an access container thereof is received, the mapping relationship is stored in a database of the authority container name server.

An unregistration operation of the authority container name server may include that, when an unregistration request of a mapping relationship between a container and a part of or all access containers thereof is received, the mapping relationship is deleted from a database of the authority container name server.

FIG. 2 is a container name server according to an embodiment of the present invention. The container name server as shown in FIG. 2 includes a network interface 210 and an execution engine 220.

The network interface 210 is configured to receive a resolution request packet sent by a network node, where the resolution request packet includes a container identification of a container to be resolved.

The execution engine 220 is configured to acquire a container identification of an access container of the container to be resolved according to the container identification of the container to be resolved.

In the embodiment of the present invention, possibilities for solving problems such as scalability and mobility support caused by routing totally based on a content name are provided by introducing a container name server and taking the container name server as a name resolution system in an ICN network.

Optionally, the network interface 210 is further configured to send a resolution response packet to the network node sending the resolution request packet, where the resolution response packet includes container information acquired.

The resolution request packet may be an interest packet (Interest packet). Routing of the interest packet in the ICN network is performed through a content name, but the embodiments of the present invention will not limit a specific form of a content name of the resolution request packet. Optionally, a key word for resolution is defined in the ICN, such as RESOLVE or INQUERY; the key word may be: 1) a system reserved word; 2) configured in an automatic or manual manner when an ICN node accesses; 3) a key word released to the ICN according to a rule of the ICN when the container name server joins into the ICN, and thus the ICN node receiving the release may add an entry corresponding to the key word in a routing table, and point to the container name server. Next, the key word for resolution is combined with a container name of a target container to form the content name of the resolution request packet, and since routing is performed according to the longest prefix match in the FIB table of each ICN node in the ICN network, the resolution request packet may be routed to the container name server simply by matching the key word.

For instance, when a container name of a container to be resolved is chinamobile/fanlingyuan, the chinamobile/fanlingyuan may be resolved as RESOLVE/chinamobile/fanlingyuan, when an ICN node matches the RESOLVE key word, the resolution request packet is routed to the container name server.

It should be understood that, in addition to direct use of the resolution key word of the content name prefix, the resolution request packet may also be routed to the container name server by means of container routing. In this case, the key word may still be used as the prefix, however, the container name server needs to release a container in which the container name server locates, to the ICN according to an ICN rule, for instance, it has been released to the ICN that the container in which the container name server locates is RESOLVER, then the chinamobile/fanlingyuan may be resolved as RESOLVE/ chinamobile/fanlingyuan RESOLVER.

It should be noted that, the access container of the container to be resolved may be one access container of the container to be resolved, and may also be a plurality of access containers, i.e., a container set. It should also be noted that, the access container of the container to be resolved may refer to an access container of the container to be resolved, for the convenience of description, an access container of a target container is referred to as a first-level access container herein, likewise, an access container of the access container of the container to be resolved is referred to as a second-level access container of the target container, then the access container may also refer to a multi-level access container of the container to be resolved.

It should be understood that, the network node sending the resolution request packet may be other content name servers, ICN nodes, or user equipment in a network. The ICN node described above may be a node supporting an ICN protocol, for instance, may be a router in the ICN network.

It should be noted that, the embodiments of the present invention will not limit a specific form of the resolution response packet. For instance, when the container name server cannot acquire a resolution result, a failure or a null value may be returned. When a resolution result is acquired, a resolution result corresponding to the container name of the target container may be returned along a sending path of the resolution request packet. If a container in the resolution result to be returned can be continued with resolution, the container name server may continue resolution, and insert a multi-level resolution result into the original resolution result to return it to a requester as a final resolution result.

For instance, chinamobile/fanlingyuan is resolved, where, chinamobile/fanlingyuan is a container name of a target container. This result is resolved, and it is found that the container chinamobile/fanlingyuan has two access containers, respectively airchina/ca1314 and hostsrv.com. A resolution result carried in a resolution response packet may be: {| airchina/ca1314 | hostsrv.com}. If containers airchina/ca1314 and hostsrv.com can be continued with resolution, for instance, it may be found that an access container of the airchina/ca1314 is cn/beijing, and access containers of the hostsrv.com are cn/gd, cn/beijing and us/ca, then a resolution result carried in the resolution response packet may be {| airchina/ca1314 ∥ cn/beijing |hostsrv.com ∥ cn/gd ∥ cn/Beijing ∥ us/ca}.

Other attribute information of a container included in the resolution result may be further inserted into the resolution result, for instance, when the container can be continued with resolution, an identifier indicating that the resolution can be continued, and a time to live (Time to Live, TTL) of the container may be inserted, for instance, {| airchina/ca1314; resolvable=yes; ttl=5000 | hostsrv.com; resolvable=yes; ttl=1000}.

Optionally, the resolution result may have an TTL attribute, the TTL attribute may be set to a minimum value of the TTL attribute of the containers included in the resolution result, for instance, the TTL of the resolution result {| airchina/ca1314; resolvable=yes; ttl=5000 | hostsrv.com; resolvable=yes; ttl=1000} is set to 1000.

It should be understood that, the resolution response packet may be a data packet (Data packet) corresponding to the interest packet bearing the resolution request.

It should be noted that, a network node receiving a resolution request packet may cache the resolution result. If the network node is an ICN node, then the resolution result may be cached in a CS table of the ICN node; if the network node is a container name server, then the resolution result may be cached in a database. Cacheable time is determined by the ICN rule. Optionally, when the network node which has cached the resolution result receives the same resolution request packet again, the cached result may be returned directly.

It should be noted that, the embodiments of the present invention will not limit a specific manner in which the execution engine 220 acquires a container identification of the access container of the container to be resolved.

Optionally, as an embodiment, when the container name server is not an authority container name server of the target container (for instance, is a local container name server), and the container name server does not store the resolution result corresponding to the resolution request packet described above: the container name server may further include a database 230, the execution engine 220 is specifically configured to query the database 230 for container information of the access container of the container to be resolved according to the container identification of the container to be resolved; and when the container information of the access container is not found, determine an authority container name server of the container according to the container identification of the container to be resolved, where the authority container name server is configured to register, unregister and resolve the target container; and the resolution request packet is forwarded to the authority container name server via the network interface.

It should be noted that, the embodiments of the present invention will not limit a specific manner of determining the authority container name server of the container according to the container name. For instance, a directory-tree-like hierarchy structure similar to that of an existing domain name system (Domain Name System, DNS) may be used to determine an authority container name server of a target container through configuration; a distributed Hash table (Distributed Hash Table, DHT) technology may also be used to determine an authority container name server of a container through a distributed Hash algorithm that is performed to a container name; and an authority container name server of a container may also be found by means of a container-assisted NDN routing mechanism.

Optionally, as another embodiment, when the container name server is not the authority container name server of the container to be resolved, and the container name server caches the resolution result corresponding to the resolution request packet: the execution engine of the container name server may be specifically configured to query the database 230 for container information of an access container of the container to be resolved according to a container identification of the container to be resolved, where the database 230 caches a mapping relationship between the container to be resolved and the access container, and the container information of the access container.

Optionally, as another embodiment, when the container name server is the authority container name server of the container to be resolved: the execution engine of the container name server may be specifically configured to query the database 230 for a container identification of an access container of the container to be resolved according to a container identification of the container to be resolved, where the database 230 caches a mapping relationship between the container to be resolved and the access container of the container to be resolved, and the container information of the access container, and the content stored is acquired through a registration request of the container to be resolved.

Optionally, as an embodiment, when the container name server is an authority container name server of a container to be registered: the network interface may be further configured to receive a registration request packet sent by the network node, where the registration request packet includes a container identification of the container to be registered and a container identification of an access container of the container to be registered; and the execution engine may be further configured to store a mapping relationship between the container to be registered and the access container of the container to be registered so as to acquire the container identification of the access container of the container to be registered according to the container identification of the container to be registered.

It should be understood that, the registration request packet may be an interest packet. The embodiments of the present invention will not limit a specific form of a content name of the registration request packet, a form which is the same as the resolution request packet may be used where the key word is replaced with REGISTER.

Optionally, the registration request packet may also carry information indicating whether a registration request can be replaced, information indicating whether an access container to be registered can be further resolved, and information of TTL of the access container to be registered.

For instance, (replace=yes){| cn/gd/sz; TTL =100 |hostsrv.com; resolvable=yes; TTL =5000 }.

A value domain of replace may be yes or no.

When a container identification of the container to be registered and container information of a registered access container of the container to be registered have already existed in an authority container name server, and the value of replace is no: the container information of the access container to be registered may be added to the most front of the container information of the registered access container, and if the container information of the access container of the container to be registered has been saved in the database, then an old result may be deleted. For instance, an authority container name of a container A has stored an access container 1 and an access container 2 of the container A, at this time, the authority container name server receives a registration request packet, requesting to register the access container 2, an access container 3 and an access container 4 of the container A, and since the access container 2 has been stored in the database of the authority container name server, then the access container 2 which has been stored before is replaced with the new access container 2, and finally access containers of the container A are the access container 1, the access container 2, the access container 3, and the access container 4.

When the container name of the container to be registered and the container information of the registered access container of the container to be registered have already existed in the authority container name server, and a value of replace is yes: the container information of the registered access container is replaced entirely with the container information of the access container to be registered.

Optionally, by default, replace=no, that is, if there isn't a replace parameter, processing is performed according to replace=no.

For instance, Register/chinamobile/fanlingyuan →(replace=yes){| cn/gd/sz; TTL =100 hostsrv.com; resolvable=yes; TTL =5000 }, at this time, all former resolution results of chinamobile/fanlingyuan are invalid, and are replaced with cn/gd/sz and hostsrv.com.

A value domain of Resolvable (Yes/ No): whether this resolution result (the container) can be continued with resolution, the action to continue the resolution is conceived as an expansion to the resolution result. The expansion may be performed when writing to the database, the expansion may also be performed when the container name server is idle, or the expansion is performed till a resolution request arrives.

TTL: a period of time the resolution result allows to be cached, if it is 0, then indicating un-cacheable.

Optionally, the registration request packet described above is an interest packet, the registration request information may be stored in a Selector field of the registration request packet, and an attribute relative to the container name resolution is newly added, for storing registration related information.

Optionally, as an embodiment, the network interface 210 is further configured to send a registration response packet to the network node sending the registration request packet, where the registration response packet includes information used to indicate whether registration is successful and information used to indicate that information in the registration response packet is un-cacheable.

It should be noted that, the registration response packet may be a data packet, a Data field of a Data message packet may be carried with information such as whether a registration operation is successful and a reason for failure. For a response Data message of the registration request, "un-cacheable" needs to be set in its Signed Info field (specific implementations may be different, for instance, in an implementation of the CCN, FreshnessSecond=0; in the NDN, stale time=0), this setup ensures that an ICN node along the path will not cache the response Data, so that a subsequent registration request packet will not be responded by the ICN along the path, but be routed to an authority container name server of a target container inevitably.

Optionally, as an embodiment, the network interface 210 is further configured to receive an unregistration request packet sent by the network node, where the unregistration request packet includes a container identification of a container to be unregistered and a container identification of an access container of the container to be unregistered; delete from a database a mapping relationship between the container to be unregistered and the access container of the container to be unregistered.

The unregistration request packet may be an interest packet. Likewise, the embodiments of the present invention will not limit a specific form of a content name of the unregistration request packet, a form that is the same as the content name of the resolution request packet may be used where the key word is replaced with UNREGISTER.

For instance, unregistration information for a container name is: {a Container or a Container set providing an access service}, such as {|cn/gd/sz| hostsrv.com}, the information is placed in a newly-added attribute in Selector, just like the registration operation, where cn/gd/sz and hostsrv.com are container information of access containers to be deleted.

If a container name of the container to be unregistered does not exist in the container name server, or the container name doesn't have a mapping relationship with cn/gd/sz and hostsrv.com, then a failure is returned.

If the mapping relationship exists, the mapping relationship between them is deleted from the container name server.

If all resolution results are deleted successfully, return "completely successful"; otherwise, return partially successful and point out the part which is not successful and a reason thereof, the most common reason is "not exist".

If the container to be registered does not have an access container, then the target container may be deleted from the container name server.

A result of the operation is returned through a data packet, just like the registration operation, and needs to be set as "un-cacheable" likewise.

It should be understood that, the network interface 210 may transceive an ICN message based on an ICN protocol stack. For instance, an Interest message sent from user equipment, a network node, a service application or other container name servers may be received and handed over to the execution engine for processing. A Data message may also be sent according to a command of the execution engine.

It should be understood that, the database 230 may store container information of and a mapping relationship between a container taking the container name server in which the database locates as the authority container name server and an access container thereof. Cache information, i.e., the content in the ICN network that passes through the container name server and that is cacheable, may also be stored. The two parts of content described above may be stored in a sheet, and may also be stored in a table, distinguished by different attribute identifiers. The two parts of content may differ in that, TTL of the cached content is a required attribute, starting from the time when the content is cached to the container name server, a timer is set, when the TTL is reduced to 0, the table entry is deleted. TTL carried by the resolution response acquired from the cache is current remaining TTL.

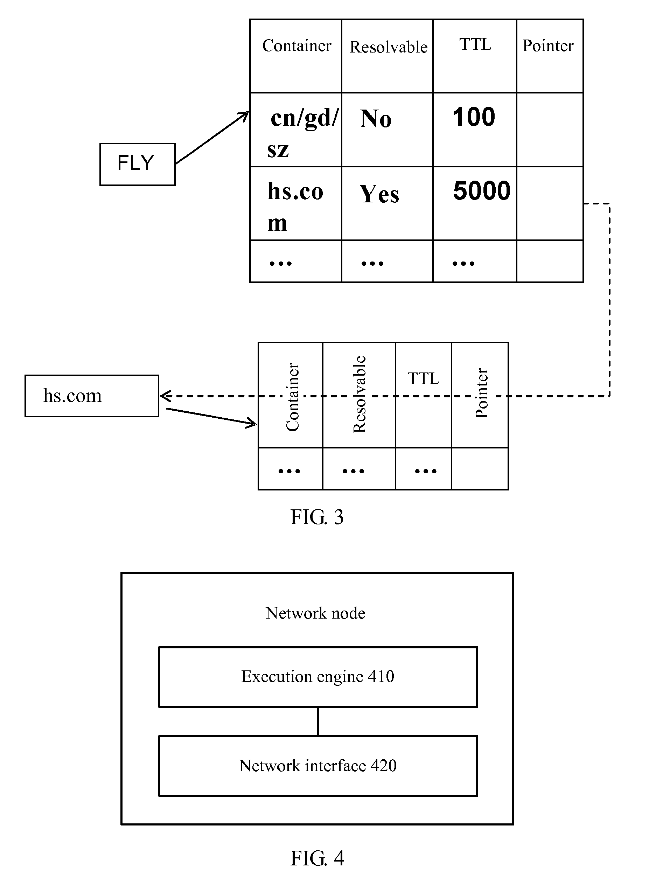

Reference may be made to FIG. 3 for a storage form. The first column of the upper right table as shown in FIG. 3 indicates access containers of the container name FLY, including cn/gd/sz, hs.com, etc. Container information of each access container stored in the database may further include attribute information such as whether resolvable, TTL, etc. In order to speed up a search for a multi-level access container of the target container, when an access container of the target container is resolvable, pointer information may also be added in the table, and the pointer points at a storage position of a higher-level access container of the resolvable access container in the database.

It should also be understood that, the execution engine 220 may be configured to execute a resolution-related logical processing, for instance, to resolve a message from the network interface 210, perform an operation to the data 230 and send an operation result via the network interface 210.

A container name server according to the embodiments of the present invention is described in detail in the above description with reference to FIG. 1 to FIG. 3, and a network node according to an embodiment of the present invention will be described in detail hereunder with reference to FIG. 4.

It should be understood that, descriptions of the network node side on an interaction between the container name server and the network node, as well as related features and functions, is corresponding to descriptions of a container name server side, which will not be repeated herein for the sake of simplicity.

FIG. 4 is a network node according to an embodiment of the present invention. The network node includes an execution engine 410 and a network interface 420. The network node may be an ICN node (such as a router in the ICN), may also be a client, and may also be a container name server.

The execution engine 410 is configured to acquire a resolution request packet, where the resolution request packet includes a container identification of a container to be resolved, and the network interface 420 is configured to send the resolution request packet to a container name server, so that the container name server acquires a container identification of an access container of the container to be resolved according to the container identification of the container to be resolved;

Or, the execution engine 410 is configured to acquire a registration request packet, where the registration request packet includes a container identification of a container to be registered and a container identification of an access container of the container to be registered, and the network interface 420 is configured to send the registration request packet to an authority container name server of the container to be registered, so that the authority container name server stores a mapping relationship between the container to be registered and the access container of the container to be registered;

Or, the execution engine 410 is configured to acquire an unregistration request packet, where the unregistration request packet includes a container identification of a container to be unregistered and a container identification of an access container of the container to be unregistered, and the network interface 420 is configured to send the unregistration request packet to an authority container name server of the container to be unregistered, so that the authority container name server deletes from a database a mapping relationship between the container to be unregistered and the access container of the container to be unregistered according to the container identification of the access container of the container to be unregistered.

In the embodiment of the present invention, possibilities for solving problems such as scalability and mobility support caused by routing totally based on a content name are provided by introducing a container name server and taking the container name server as a name resolution system in an ICN network.

Optionally, as an embodiment, the network interface 420 is further configured to receive a resolution response packet corresponding to the resolution request packet, where the resolution response packet includes the container identification of the access container of the container to be resolved.

Optionally, as another embodiment, the resolution request packet is an interest packet, and the resolution response packet is a data packet.

Optionally, as another embodiment, the network interface 420 is further configured to receive a registration response packet corresponding to the registration request packet, where the registration response packet includes information used to indicate whether registration is successful and information used to indicate that information in the registration response packet is un-cacheable.

Optionally, as another embodiment, the registration request packet is an interest packet, and the registration response packet is a data packet.

Optionally, as another embodiment, the network interface 420 is further configured to receive an unregistration response packet corresponding to the unregistration request packet, where the response packet includes information used to indicate whether unregistration is successful and information used to indicate that information in the registration response packet is un-cacheable.

Optionally, as another embodiment, the unregistration request packet is an interest packet, and the unregistration response packet is a data packet.

Optionally, as another embodiment, the network interface 420 is further configured to receive a content request packet, where the content request packet carries a content name of requested content and container information of the requested content, and the container information of the requested content includes a container identification which is used to identify a container storing the requested content; the execution engine 410 is specifically configured to generate the resolution request packet, where the container identification of the container to be resolved is a container identification of the container of the requested content.

Optionally, as another embodiment, the container information of the requested content further includes a resolution identification corresponding to the container identification, the resolution identification is used to identify whether a container corresponding to the container identification is resolvable, the network interface 420 is further configured to receive a resolution result sent by the container name server, where the resolution result includes the container identification of the access container of the container to be resolved;

The execution engine 410 is further configured to match the container identification in the container information of the requested content and container identifications of access containers of all resolvable containers of the requested content with a preset container identification in a forwarding information base FIB to determine whether there is in the FIB a forwarding entry matching the container identification in the container information of the requested content and the container identifications of the access containers;

The network interface 420 is further configured to: when there is in the FIB a forwarding entry matching the container identification in the container information of the requested content or the container identification of the access container of the container to be resolved, send the content request packet according to an interface in the matching forwarding entry.

Optionally, as another embodiment, the execution engine 410 is further configured to add container information of the access containers of all resolvable containers of the requested content acquired through resolution into the container information of the requested content.

Optionally, as another embodiment, the container information further includes a resolution identification corresponding to the container identification, where the resolution identification is used to identify whether a container corresponding to the container identification is resolvable;

The execution engine 410 is further configured to determine whether there is in an FIB a forwarding entry matching the container identification in the container information of the requested content, where the forwarding entry in the FIB includes a preset container identification and an interface corresponding to the preset container identification; when there isn't in the FIB a forwarding entry matching the container identification in the container information of the requested content, acquire the container identification of the access container of the container from the container name server through resolution according to the resolution identification; match the container identification of the access container acquired through the resolution with the preset container identification in the FIB to determine whether there is in the FIB a forwarding entry matching the container identification of the access container acquired through the resolution.

Optionally, as another embodiment, the execution engine 410 is further configured to add container information of the access container acquired through the resolution into the container information of the requested content.

Optionally, as another embodiment, the container is a storage space which is configured to store a group of contents.

Optionally, as another embodiment, the container includes at least one routing node, and through one or more routing nodes of the at least one routing node, content stored by the container can be routed to within the container, or the content stored by the container can be routed to via the container.

Optionally, as another embodiment, content stored by the container is corresponding to one or more attribute containers, and the attribute container of content is a container which can directly route to the content.

Optionally, as another embodiment, the container is an access container of one or more first further containers; and/or one or more second further containers are access containers of the container; where the access container is a container which includes a further container in a topological relation and in which there is a forwarding entry routing a content request packet corresponding to the content stored by the container to the further container.

Optionally, as another embodiment, the FIB includes a global container forwarding entry, where the global container forwarding entry includes a container identification of a global container and a first interface corresponding to the container identification of the global container, the first interface is an interface which connects the current node to a next hop routing node to reach the global container, the global container is a globally routable container, and the global container includes a topology-related global container and/or a topology-unrelated global container.

Optionally, as another embodiment, the FIB further includes a topology-related container forwarding entry which is used to perform routing based on the topology-related container, through the topology-related container forwarding entry, a route of a lower level container of a container to which the current node belongs is enabled to serve as an internal route of the current node without diffusing out of the container to which the current node belongs; where the topology-related container is a container which forms a topological relation with a further container, and the topological relation includes: a higher level container including one or more lower level containers, and/or a lower level container being included by one or more higher level containers.

Optionally, as another embodiment, the topology-related container forwarding entry includes a container identification of the lower level container of the container to which the current node belongs and a second interface corresponding to the container identification of the lower level container, where the second interface is an interface which connects the current node to the lower level container; through the topology-related container forwarding entry, the route of the lower level container of the container to which the current node belongs being enabled to serve as the internal route of the current node without diffusing out of the container to which the current node belongs, includes: through the container identification of the lower level container and the second interface corresponding to the container identification of the lower level container in the topology-related container forwarding entry, the route of the lower level container of the container to which the current node belongs is enabled to serve as the internal route of the current node without diffusing out of the container to which the current node belongs.

Optionally, as another embodiment, a container identification corresponding to the topology-related container has a nature which can reflect a level of the topology-related container, thus indicating the topological relation formed between the topology-related container and a further container.

Optionally, as another embodiment, the FIB further includes a topology-unrelated small container forwarding entry, where the topology-unrelated small container forwarding entry includes a container identification of a topology-unrelated small container and a third interface corresponding to the container identification of the topology-unrelated small container, and the third interface is an interface which connects the current node to a next hop routing node to reach the topology-unrelated small container.

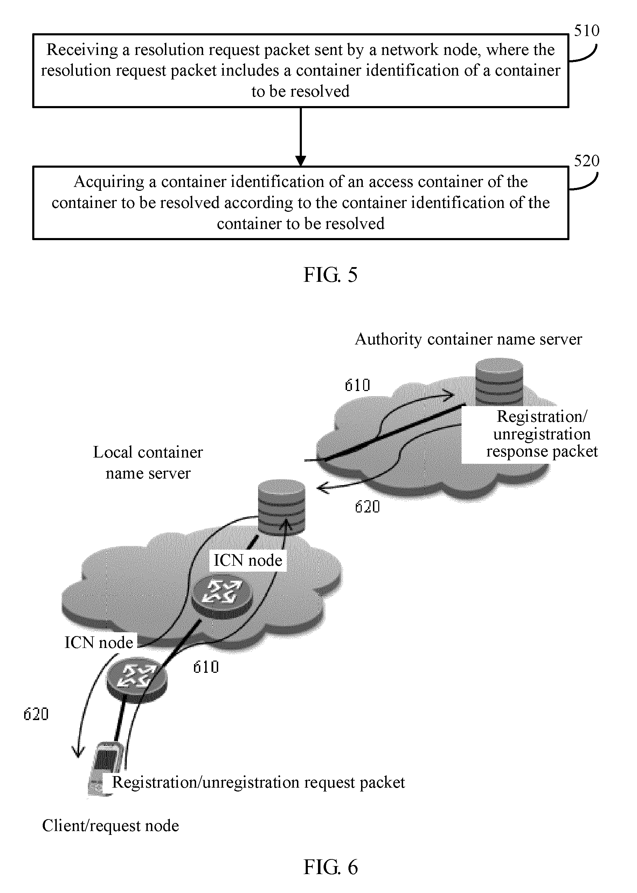

A container name server according to the embodiments of the present invention is described in detail in the above description with reference to FIG. 2, and a method for container name resolution according to an embodiment of the present invention will be described in detail hereunder with reference to FIG. 5.

It should be understood that, the container name server as shown in FIG. 2 can implement steps executed by the container name server as shown in FIG. 5. In order to avoid redundancy, detailed description will not be given.

FIG. 5 is a method for container name resolution according to an embodiment of the present invention. The method includes:

510, receiving a resolution request packet sent by a network node, where the resolution request packet includes a container identification of a container to be resolved.

520, acquiring a container identification of an access container of the container to be resolved according to the container identification of the container to be resolved.

In the embodiment of the present invention, possibilities for solving problems such as scalability and mobility support caused by routing totally based on a content name are provided by introducing a container name server and taking the container name server as a name resolution system in an ICN network.

Optionally, as an embodiment, further including: sending a resolution response packet to the network node sending the resolution request packet, where the resolution response packet includes the container identification of the access container of the container to be resolved.

Optionally, as another embodiment, the receiving of the resolution request packet sent by the network node includes: receiving the resolution request packet sent by the network node, where the resolution request packet is an interest packet; and the sending of the resolution response packet to the network node sending the resolution request packet includes: sending the resolution response packet to the network node sending the resolution request packet, where the resolution response packet is a data packet.

Optionally, as another embodiment, the acquiring of the container identification of the access container of the container to be resolved according to the container identification of the container to be resolved includes: querying a database for the container identification of the access container of the container to be resolved according to the container identification of the container to be resolved, where the database stores a mapping relationship between the container to be resolved and the access container of the container to be resolved.

Optionally, as another embodiment, further including: receiving a registration request packet sent by the network node, where the registration request packet includes a container identification of a container to be registered and a container identification of an access container of the container to be registered; and storing a mapping relationship between the container to be registered and the access container of the container to be registered so as to acquire the container identification of the access container of the container to be registered according to the container identification of the container to be registered.

Optionally, as another embodiment, the receiving of the registration request packet sent by the network node includes: receiving the registration request packet sent by the network node, where the registration request packet is an interest packet.

Optionally, as another embodiment, further including: sending a registration response packet to the network node sending the registration request packet, where the registration response packet includes information used to indicate whether registration is successful and information used to indicate that information in the registration response packet is un-cacheable.

Optionally, as another embodiment, the sending of the registration response packet to the network node sending the registration request packet includes: sending the registration response packet to the network node sending the registration request packet, where the registration response packet is a data packet.

Optionally, as another embodiment, further including: receiving an unregistration request packet sent by the network node, where the unregistration request packet includes a container identification of a container to be unregistered and a container identification of an access container of the container to be unregistered; deleting from a database a mapping relationship between the container to be unregistered and the access container of the container to be unregistered.

Optionally, as another embodiment, the receiving of the unregistration request packet sent by the network node includes: receiving the unregistration request packet sent by the network node, where the unregistration request packet is an interest packet.

Optionally, as another embodiment, the acquiring of the container identification of the access container of the container to be resolved according to the container identification of the container to be resolved includes: querying a database for the container identification of the access container of the container to be resolved according to the container identification of the container to be resolved; when the container identification of the access container is not found, determining an authority container name server of the container to be resolved according to the container identification of the container to be resolved, where the authority container name server is configured to register, unregister and resolve the container to be resolved; and forwarding the resolution request packet to the authority container name server.

Optionally, as another embodiment, the container is a storage space which is configured to store a group of content.

Optionally, as another embodiment, the container includes at least one routing node, and through one or more routing nodes of the at least one routing node, content stored by the container can be routed to within the container, or the content stored by the container can be routed to via the container.

Optionally, as another embodiment, content stored by the container is corresponding to one or more attribute containers, and the attribute container of the content is a container which can directly route to the content.

Optionally, as another embodiment, the container is an access container of one or more first further containers; and/or one or more second further containers are access containers of the container; where the access container is a container which includes a further container in a topological relation and in which there is a forwarding entry routing a content request packet corresponding to the content stored by the container to the further container.

A method for container name resolution according to the embodiments of the present invention is described in FIG. 5 from a container name server side, and then the method for container name resolution according to the embodiments of the present invention is described from a network node side. It should be understood that, the method for container name resolution described from the network node side is corresponding to the method for container name resolution described from the container name server side. In order to avoid redundancy, detailed descriptions will not be given. Specific steps are as follow:

510b, acquiring a resolution request packet, where the resolution request packet includes a container identification of a container to be resolved, and

520b, sending the resolution request packet to a container name server, so that the container name server acquires a container identification of an access container of the container to be resolved according to the container identification of the container to be resolved; or,

510b, acquiring a registration request packet, where the registration request packet includes a container identification of a container to be registered and a container identification of an access container of the container to be registered, and

520b, sending the registration request packet to an authority container name server of the container to be registered, so that the authority container name server stores a mapping relationship between the container to be registered and the access container of the container to be registered; or

510b, acquiring an unregistration request packet, where the unregistration request packet includes a container identification of a container to be unregistered and a container identification of an access container of the container to be unregistered, and

520b, sending the unregistration request packet to an authority container name server of the container to be unregistered, so that the authority container name server deletes from a database a mapping relationship between the container to be unregistered and the access container of the container to be unregistered according to the container identification of the access container of the container to be unregistered.

In the embodiment of the present invention, possibilities for solving problems such as scalability and mobility support caused by routing totally based on a content name are provided by introducing a container name server and taking the container name server as a name resolution system in an ICN network.

Optionally, as an embodiment, further including: receiving a resolution response packet corresponding to the resolution request packet, where the resolution response packet includes the container identification of the access container of the container to be resolved.

Optionally, as another embodiment, the resolution request packet is an interest packet, and the resolution response packet is a data packet.

Optionally, as another embodiment, further including: receiving a registration response packet corresponding to the registration request packet, where the registration response packet includes information used to indicate whether registration is successful and information used to indicate that information in the registration response packet is un-cacheable.

Optionally, as another embodiment, the registration request packet is an interest packet, and the registration response packet is a data packet.

Optionally, as another embodiment, further including: receiving an unregistration response packet corresponding to the unregistration request packet, where the response packet includes information used to indicate whether unregistration is successful and information used to indicate that information in the registration response packet is un-cacheable.

Optionally, as another embodiment, the unregistration request packet is an interest packet, and the unregistration response packet is a data packet.

Optionally, as another embodiment, the acquiring of the resolution request packet includes: receiving a content request packet, where the content request packet carries a content name of requested content and container information of the requested content, and the container information of the requested content includes a container identification which is used to identify a container storing the requested content; generating the resolution request packet, where the container identification of the container to be resolved is a container identification of the container of the requested content.

Optionally, as another embodiment, the container information of the requested content further includes a resolution identification corresponding to the container identification, the resolution identification is used to identify whether a container corresponding to the container identification is resolvable, the method further includes: receiving a resolution result sent by the container name server, where the resolution result includes the container identification of the access container of the container to be resolved; matching the container identification in the container information of the requested content and container identifications of access containers of all resolvable containers of the requested content with a preset container identification in a forwarding information base FIB to determine whether there is in the FIB a forwarding entry matching the container identification in the container information of the requested content and the container identifications of the access containers; when there is in the FIB a forwarding entry matching the container identification in the container information of the requested content or the container identification of the access container of the container to be resolved, sending the content request packet according to an interface in the matching forwarding entry.

Optionally, as another embodiment, the b method of FIG. 5 further includes: adding container information of the access containers of all the resolvable containers of the requested content acquired through resolution into the container information of the requested content.

Optionally, as another embodiment, the container information further includes a resolution identification corresponding to the container identification, where the resolution identification is used to identify whether a container corresponding to the container identification is resolvable; the b method of FIG. 5 further includes: determining whether there is in an FIB a forwarding entry matching the container identification in the container information of the requested content, where the forwarding entry in the FIB includes a preset container identification and an interface corresponding to the preset container identification; when there isn't in the FIB the forwarding entry matching the container identification in the container information of the requested content, acquiring the container identification of the access container of the container from the container name server through resolution according to the resolution identification; matching the container identification of the access container acquired through the resolution with the preset container identification in the FIB to determine whether there is in the FIB a forwarding entry matching the container identification of the access container acquired through the resolution.

Optionally, as another embodiment, the b method of FIG. 5 further includes: adding container information of the access container acquired through the resolution into the container information of the requested content.

Optionally, as another embodiment, the container is a storage space which is configured to store a group of content.

Optionally, as another embodiment, the container includes at least one routing node, and through one or more routing nodes of the at least one routing node, content stored by the container can be routed to within the container, or the content stored by the container can be routed to via the container.

Optionally, as another embodiment, content stored by the container is corresponding to one or more attribute containers, and the attribute container of the content is a container which can directly route to the content.

Optionally, as another embodiment, the container is an access container of one or more first further containers; and/or one or more second further containers are access containers of the container; where the access container is a container which includes a further container in a topological relation and in which there is a forwarding entry routing a content request packet corresponding to the content stored by the container to the further container.

Optionally, as another embodiment, the FIB includes a global container forwarding entry, where the global container forwarding entry includes a container identification of a global container and a first interface corresponding to the container identification of the global container, the first interface is an interface connecting the current node to a next hop routing node to reach the global container, the global container is a globally routable container, and the global container includes a topology-related global container and/or a topology-unrelated global container.

Optionally, as another embodiment, the FIB further includes a topology-related container forwarding entry used to perform routing based on the topology-related container, and through the topology-related container forwarding entry, a route of a lower level container of a container to which the current node belongs is enabled to serve as an internal route of the current node without diffusing out of the container to which the current node belongs; where the topology-related container is a container which forms a topological relation with a further container, and the topological relation includes: a higher level container including one or more lower level containers, and/or a lower level container being included by one or more higher level containers.

Optionally, as another embodiment, the topology-related container forwarding entry includes a container identification of the lower level container of the container to which the current node belongs and a second interface corresponding to the container identification of the lower level container, where the second interface is an interface which connects the current node to the lower level container; through the topology-related container forwarding entry, the route of the lower level container of the container to which the current node belongs being enabled to serve as the internal route of the current node without diffusing out of the container to which the current node belongs, includes: through the container identification of the lower level container and the second interface corresponding to the container identification of the lower level container in the topology-related container forwarding entry, the route of the lower level container of the container to which the current node belongs is enabled to serve as the internal route of the current node without diffusing out of the container to which the current node belongs.

Optionally, as another embodiment, a container identification corresponding to the topology-related container has a nature which can reflect a level of the topology-related container, thus indicating the topological relation formed between the topology-related container and a further container.

Optionally, as another embodiment, the FIB further includes a topology-unrelated small container forwarding entry, where the topology-unrelated small container forwarding entry includes a container identification of a topology-unrelated small container and a third interface corresponding to the container identification of the topology-unrelated small container, and the third interface is an interface which connects the current node to a next hop routing node to reach the topology-unrelated small container.

Embodiments of the present invention will be described hereunder in more detail with reference to specific examples. It should be noted that, the examples of FIG. 6 - FIG. 8 are merely intended to assist persons skilled in the art in understanding the embodiments of the present invention, rather than to limit the embodiments of the present invention to a specific value or a specific scenario as illustrated. Obviously, persons skilled in the art may make various equivalent modifications or changes according to the given examples of FIG. 6 - FIG. 8, and these modifications or changes also fall into the scope of the embodiments of the present invention.

FIG. 6 is a flow chart of a request for registration/unregistration of a target container according to an embodiment of the present invention.

In FIG. 6, a client/request node firstly generates a registration/unregistration request packet (an interest packet) when needing to register or unregister a container, where the registration/unregistration request packet carries a target container that needs to be registered/unregistered and an access container of the target container, taking a registration request as an example, a content name of the registration request packet is REGISTER/chinamobile/fanlingyuan, where REGISTER is a key word for registration, and chinamobile/fanlingyuan is a container name of the target container.

After the registration/unregistration request packet is generated, the registration/unregistration request packet is routed to a local container name server along a path as indicated by 610 in FIG. 6 firstly. When the local container name server is an authority container name server of the target container, registration is completed, and a registration/unregistration response packet (a data packet) is returned; when the local container name server is not an authority container name server of the target container, then, according to a preset rule, a corresponding higher level container name server or an authority container name server corresponding to the container name is added, and the registration/unregistration request packet continues to be routed till being routed to the authority container name server of the target container.

After receiving the registration/unregistration request packet and completing the registration/unregistration operation, the authority container name server returns a registration/unregistration response packet to the client/request node along a path indicated by 620 in FIG. 6.

It should be noted that, during the returning, the registration/unregistration response packet is not allowed to be cached by other container name servers or ICE nodes along the path, which may be ensured by setting TTL=0 for the registration/unregistration response packet.

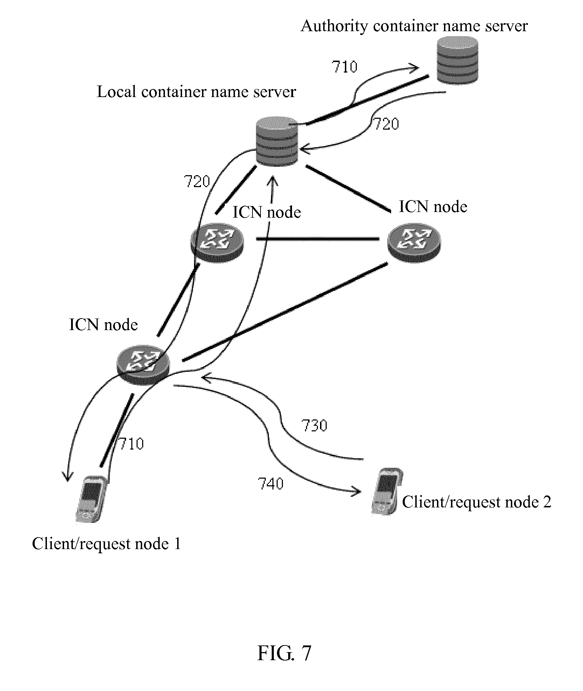

FIG. 7 is a flow chart of a request for resolution of a target container according to an embodiment of the present invention.

In FIG. 7, firstly, a client/request node 1 generates a resolution request packet (an interest packet), and the resolution request packet contains a container name of a target container (i.e., a container to be resolved), for instance, a content name of the resolution request packet is RESOLUE/chinamobile/fanlingyuan | RESOLVER, where, RESOLVE is a key word for resolution, chinamobile/fanlingyuan is the container name of the target container, and RESOLVER is a container where a container name server locates. Then, the resolution request packet is routed to a local container name server along a path indicated by 710 via an ICN node, when the local container name server cannot resolve the container name of the resolution request packet, then, according to a preset rule, a corresponding higher level container name server is added or the resolution request packet is routed to an authority container name server of the target container. When a resolution result is acquired, the resolution result is backtracked along 720, the container name server or the ICN node along the path may cache the resolution result to its own CS table.

When a client/request node 2 sends the same resolution request packet as that of the client/request node 1 to an ICN node along the 710/720 path (as indicated by 730), since the ICN node caches a resolution result corresponding to the resolution request packet, the resolution result may be directly returned to the client/request node 2 through 740.

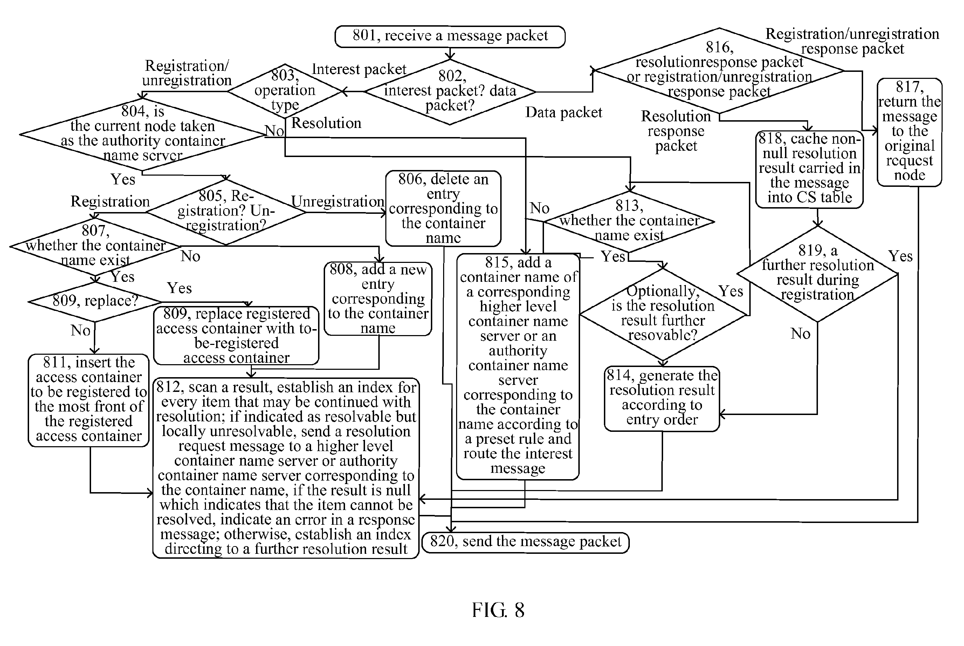

FIG. 8 is a flow chart of operation of an execution engine of a container name server according to an embodiment of the present invention.

801, receive a message packet;

The message packet may be an interest packet or a data packet.

802, determine whether it is the interest packet or the data packet, if it is the interest packet, then proceed to 803, otherwise, proceed to 816;

803, determine an operation type, if it is registration or unregistration, then proceed to 804, if it is resolution, then proceed to 813;

804, whether a current node is taken as an authority container name server, if yes, then proceed to 805, if not, then proceed to 815;

805, determine whether it is registration operation or unregistration operation, if it is the registration operation, then proceed to 807; if not, then proceed to 806;

806, delete an entry indicated in the interest packet from a registered access container of a corresponding container name, and then proceed to 820;

807, whether a container name to be registered exists: if yes, then proceed to 809; if not, then proceed to 808;

808, add the container name and a resolution result corresponding thereto in a table, generate a data packet, proceed to 812;

The entry indicated in the interest packet described above refers to container information of an access container to be unregistered.

809, determine whether a replace parameter is true, if it is true, proceed to 810; if it is not true or there isn't the replace parameter, proceed to 811;

810, delete all registered access containers of a target container, fill in an access container to be registered carried in the message, generate a data packet, proceed to 812;

811, insert the access container to be registered carried in the message to the most front of the registered access container of the target container, if the registered access container includes the same access container as carried in the message, delete a corresponding former item; generate a data packet, proceed to 812;

812, (this step is an optional step, if omitted, then directly proceed to 820) scan a result, establish an index for every item that may be continued with resolution; if an item is indicated as resolvable but cannot be resolved locally, then send a resolution request Interest message to a higher level container name server or an authority container name server corresponding to the container name, and wait for a result returned by a Data message. If the result is null, which indicates that the item cannot be resolved, indicate an error in a response message; otherwise, establish an index directing to a further resolution result, form a complete Data message after resolution is finished completely, and proceed to 820;

813, whether the container name queried exists in the table, if not, proceed to 815, if yes, proceed to 814;

814, scan a corresponding resolution result sequentially and put into the Data message generated, proceed to 820 after the scanning is completed;

Optionally, if there is a result that can be continued with resolution (resolvable=yes), recursively perform this step for further resolution; if a repetitive resolution result occurs (the same container name has been put into the Data message), then ignore the result, and continue to scan a next one;

815, add a container name of a corresponding higher level container name server or an authority container name server corresponding to the container name after a content name of the original Interest according to a preset rule, if there is a container name corresponding to the current node then delete the same, form a new Interest message and send the same, and wait for a Data message.

816, determine whether it is a resolution response message or a registration/unregistration response message, if it is the registration/unregistration response message, proceed to 817; if it is the resolution response message, proceed to 818;

817, return the Data message to the original request node, proceed to 820;

818, create a corresponding entry according to a container name and a resolution result in the Data message, if there has been the same container name, cover or discard according to a preset policy; generate a Data message according to a result of a local table; if the resolution result is null, then do not create the entry.

819, determine whether the resolution is caused by the further resolution during the registration, if yes, then proceed to 812; if by inquiry, then proceed to 814;

820, call a network interface module to send the Interest message or the Data message.

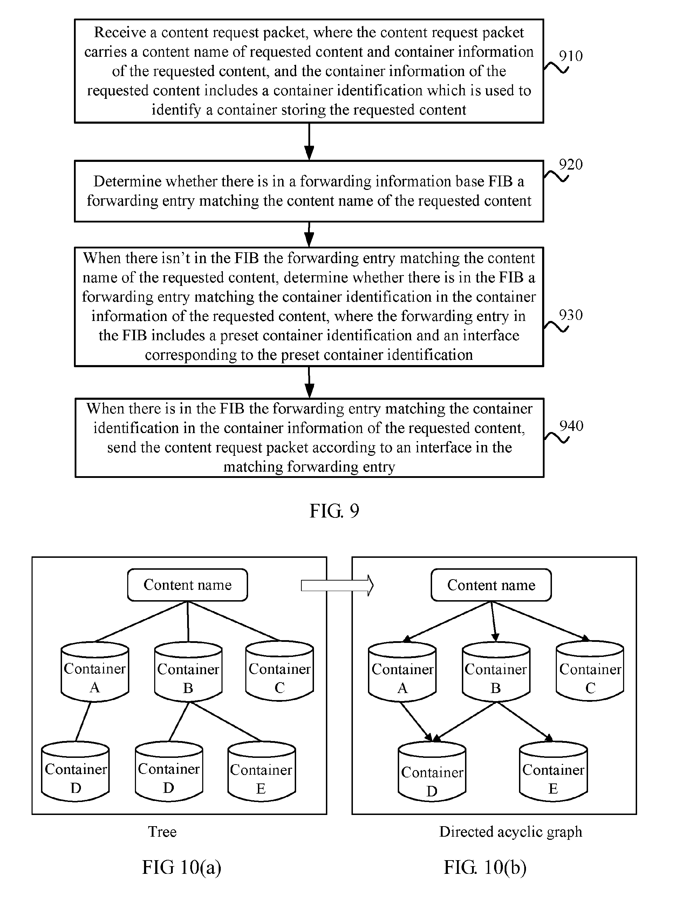

FIG. 9 is a schematic flowchart diagram of a routing and forwarding method 900 according to an embodiment of the present invention. The method as shown in FIG. 9 may be executed by a routing node. In order to facilitate the description, the routing node that executes the method 900 will be referred to as a current node hereafter. As shown in FIG. 9, the method 900 includes:

S910, receive a content request packet, where the content request packet carries a content name of requested content and container information of the requested content, and the container information of the requested content includes a container identification which is used to identify a container storing the requested content;

S920, determine whether there is in a forwarding information base FIB a forwarding entry matching the content name of the requested content;

S930, when there isn't in the FIB the forwarding entry matching the content name of the requested content, determine whether there is in the FIB a forwarding entry matching the container identification in the container information of the requested content; where the forwarding entry in the FIB includes a preset container identification and an interface corresponding to the preset container identification;

S940, when there is in the FIB the forwarding entry matching the container identification in the container information of the requested content, send the content request packet according to an interface in the matching forwarding entry.

Thus, a routing and forwarding method according to the embodiment of the present invention can reduce dependence of routing and forwarding upon a content name through adding container information of content on the basis of the content name to expand attributes of the content in an ICN system, which thus may reduce route entries in a routing table, and provide possibilities for solving problems such as routing scalability and mobility caused by the content name.

In the embodiments of the present invention, the container is a storage space which is configured to store a group of content, where the group of content may be one piece of content or a plurality of pieces of content. For instance, an entire network of a country may be regarded as a national container, and the container is a storage space of all content located in the network of the country; similarly, an entire network of a province may be treated as a provincial container, and the provincial container is a storage space of all content that locate in the network of the province. Moreover, an entire network of an enterprise or an organization may also be treated as a storage space of all content located in the network of the enterprise or the organization, a network of a mobile device such as a plane, a train or a ship may be regarded as a storage space of all content located in the network of the mobile device, and a network of a mobile phone, a host computer or other electronic devices storing content may also be regarded as a storage space of all content located in the network, but the embodiments of the present invention are not limited thereto. Correspondingly, a container identification of a container may be any content identification prefix, e.g., fanlingyuan.com/blog, may also be an enterprise or an organization, e.g., huawei.com or tsinghua.edu, may also be a mobile network of a plane, a train or a ship, e.g., airchina/ca1314, may also be a mobile phone, a host computer or other electronic devices storing content, e.g., chinamobile/fanlingyuan, and may also be a network domain, e.g., cn, cn/gd, cn/sd, etc. One container may be corresponding to one container identification, and may also be corresponding to two or more than two container identifications; but the embodiments of the present invention are not limited thereto. However, for ease of description, an example where containers are one-to-one corresponding to container identifications will be described hereunder; and a container identification refers to a container.

Furthermore, a container may include a further container in a topological relation, for instance, a provincial network is a part of a national network, thus, it may be conceived that a national container includes a provincial container in the topological relation. A container may further include an access container, the access container is a container which includes a further container in a topological relation and in which there is a forwarding entry routing a content request packet to the further container. That is to say, the access container of a container is one container that includes the container in the topological relation and that routes a content request packet to the container. Specifically, when container B includes container A and in the container B there is a forwarding entry routing a content request packet to the container A, then the container B is defined as an access container of the container A, and the container B provides the container A with an access service. A container may provide an access service to one or more further containers, and one or more further containers may provide an access service to a same container, in other words, a container may be an access container of one or more further containers, and one or more further containers may be access containers of the same container.

In a network architecture, a container includes at least one routing node, one or more routing nodes of the at least one routing node are responsible for forwarding content request packets, and the container is referred to as a container to which the at least one routing node belongs. The content request packets may be routed to the container through one or more routing nodes of at least one routing node included in an access container of the container. For instance, a national container "cn" includes provincial containers "cn/gd" and "cn/sd" in a topological relation, moreover, a content request packet may be routed to the provincial containers "cn/gd" and "cn/sd" through one or more routing nodes included in the national container "cn", then the national container "cn" provides the provincial containers "cn/gd" and "cn/sd" with an access service; containers "huawei.com/cn" and "huawei.com/us" includes a container "huawei.com" in a topological relation, moreover, a content request packet may be routed to the container "huawei.com" through one or more routing nodes included in the containers "huawei.com/cn" and "huawei.com/us", then the containers "huawei.com/cn" and "huawei.com/us" provide the container "huawei.com" with an access service, but the embodiments of the present invention are not limited thereto.

In S910, the content request packet received by the current node may be sent by other routing nodes, and may also be sent by user equipment, but the embodiments of the present invention are not limited thereto. A container corresponding to a container identification included in the container information of the requested content carried by the content request packet forms a container set of the requested content, where the container set may include one or more containers. Optionally, one or more containers in the container set are access containers of one or more first further containers; and/or one or more second further containers are access containers of the container, "a first further container" and "a second further container" herein may be containers in the container set, and may also be other containers out of the container set.

Specifically, the container set may include an attribute container of the requested content, and the attribute container of the requested content is a container which can route to the requested content directly, where the attribute container of the requested container has a forwarding entry corresponding to a content name of the requested content, and the content name of the requested content is corresponding to the attribute container of the requested content. The requested content may have one or more attribute containers, correspondingly, the content name of the requested content may be corresponding to one or more attribute containers, and the requested content can be routed to within the attribute container corresponding to the content name of the requested content.

An access container of the attribute container of the requested content may also be conceived as a container storing the requested content, where the requested content can be indirectly routed to via the access container of the attribute container. Optionally, in S910, the container set may further include the access container of the attribute container of the requested content, or further include an access container of the access container, through one or more routing nodes included in the access container of the attribute container or included in the access container of the access container, the requested content can be routed to via the access container. For instance, an attribute container of content "fanlingyuan.com/myson/2012/June01/happy.jpg" is "chinamobile/fanlingyuan", and an access container of the container "chinamobile/fanlingyuan" is "cloudsrv.com", in this case, the content may reach the container "chinamobile/fanlingyuan" through one or more routing nodes included in the container "cloudsrv.com", and be routed to within the container "chinamobile/fanlingyuan" through one or more routing nodes included in the container "chinamobile/fanlingyuan". Similarly, from the perspective of a container, content stored by the container includes content that may be directly routed to within the container, and include content that may be indirectly routed to via the container. Optionally, the container set may further include all containers storing the content, but the embodiments of the present invention are not limited thereto.

However, positions of some containers may change frequently, such as a plane or a ship, correspondingly, access containers of these containers will also change accordingly. When the container set of the requested content includes the access containers of these containers, durability of the container set cannot be guaranteed, and mobility of the content cannot be well supported either. Thus, when an access container of at least one container in the container set changes frequently, a content publisher may register a mapping relationship between the at least one container and the access container thereof into a resolution system, and when the access container of the at least one container changes, the at least one container may notify the resolution system of the change, so that the resolution system may update the mapping relationship between the at least one container and the access container thereof in real time. Meanwhile, the container set of the requested content carried in the content request packet may only include the at least one container but does not include the access container of the at least one container so as to guarantee durability of the container set of the requested content. Moreover, the content request packet may carry a resolution identification of the at least one container to indicate that the at least one container is resolvable, and thus user equipment or a routing node may query the resolution system according to the resolution identification to resolve the at least one container, so that the access container of the at least one container is acquired. Thus, the at least one container can be routed to via the routing node in the access container of the at least one container all the time, and thus mobility of the content is well supported, but the embodiments of the present invention are not limited thereto.

It should be understood that, in the embodiments of the present invention, an attribute container of the requested content, an access container of the attribute container and an access container of the access container can all be conceived as a container storing the requested content, however, only a container including a routing node is a container to which the routing node belongs, and an access container of the container is not a container to which the routing node belongs. For instance, a container "cn/gd" includes routing nodes R12 and R13, an access container "cn" of the container "cn/gd" includes routing nodes R1 and R2, when an attribute container of a piece of content is "cn/gd", both the containers "cn" and "cn/gd" are containers storing the content, while the container to which the routing nodes R12 and R13 belong is "cn/gd", but the embodiments of the present invention are not limited thereto.

In S910, container information of the requested content may carry a container identification of each container in the container set, optionally, the container information may further include a resolution identification corresponding to the container identification, and the resolution identification is used to identify whether a container corresponding to the container identification is resolvable. Specifically, the content request packet may carry a resolution identification of the resolvable container, and a container without the resolution identification is unresolvable by default. Optionally, the content request packet may also carry resolution identifications of all containers, and use different resolution identifications to indicate the containers are resolvable or unresolvable, for instance, the resolution identification "resolvable=yes" indicates that the container is resolvable, whereas "resolvable=no" indicates that the container is unresolvable, but the embodiments of the present invention not limited thereto.

A relationship between a content name of requested content and a container set of the requested content may be represented by a tree. As shown in FIG. 10(a), the content name of the requested content acts as a root node of the tree, a container in the container set of the requested content acts as a descendant of the root node, where, a child node of the root node represents an attribute container of the requested content, a relationship between a container X represented by any node and a container Y represented by a child node thereof in the tree is that the container Y is an access container of the container X. For instance, in FIG. 10(a), container A, container B and container C are attribute containers of the requested content, an access container of container A is container D, access containers of container B are container D and container E, it should be noted that, since container D is an access container of both container A and container B, thus there are two containers D in the tree structure.

Correspondingly, a relationship between a content name of the requested content and container information of the requested content may also be represented by the tree structure described above. Specifically, a content name of the requested content and container information of the requested content form a tree taking the content name of the requested content as a root node, a child node of the root node represents container information of an attribute container of the requested content, a container corresponding to container information represented by a first node is an access container of a container corresponding to container information represented by a parent node of the first node, and the first node is any node in the tree except the root node and the child node of the root node.

It can be seen from FIG. 10(a) that, the tree is represented in a simple way, however, when more than two containers have the same access container, the representation of the tree will have a repeated node, such as the container D as shown in FIG. 10(a). When there are so many such repetitions, there is a problem of inefficiency for the representation of the tree. Optionally, in order to avoid the repeated node, the relationship between the content name of the requested content and the container set of the requested content may be represented by a directed acyclic graph. As shown in FIG. 10(b), a content name of the requested content acts as an entrance vertex of the directed acyclic graph, and containers in the container set of the requested content act as other vertexes of the directed acyclic graph, where all ending points of directed edges starting from the entrance vertex represent attribute containers of the content, a container represented by an ending point of a directed edge starting from a vertex other than the entrance vertex in the directed acyclic graph is an access container of a container represented by a starting point of the directed edge, for instance, in FIG. 10(b), two ending points of two directed edges starting from container B direct to container D and container E, indicating that access containers of container B are container D and container E.

Correspondingly, a directed acyclic graph may also be used for representation between a content name of the requested content and container information of the requested content, specifically, the content name of the requested content and the container information of the requested content form a directed acyclic graph which takes the content name of the requested content as an entrance vertex, an ending point of a directed edge starting from the entrance vertex represents container information of an attribute container of the requested content, a container corresponding to container information represented by a second vertex in the directed acyclic graph is an access container of a container corresponding to container information represented by a first vertex, where the first vertex is a vertex other than the entrance vertex in the directed acyclic graph, and the second vertex is the ending point of a directed edge starting from the first vertex.

Optionally, a relationship between a content name of the requested content and a container set of the requested content or between a content name of the requested content and container information of the requested content may also be represented by using other methods, and the embodiments of the present invention are not limited thereto.

When a relationship between the content name of the requested content and the container information of the requested content is represented by a tree, in the content request packet, depth traversal of the tree is used to arrange the content name of the requested content and the container information of the requested content in sequence, and any two nodes in the tree are separated by a separator, where an nth level node of the tree and a previous node of the nth level node are separated by an (n-1)th separator, where 1 < n ≤ m and m is the depth of the tree. Specifically, the depth traversal of the tree may be used to arrange the content name of the requested content and the container information of the requested content in {} in sequence, "|" is used as a separator between nodes; the number of separators "|" between a root node and its child node is 1; as the depth of the tree increases, the number of separators "|" also increases progressively. For instance, Name1={huawei.com/products/index.html | huawei.com/cn | huawei.com/us | cn/gd} indicates that attribute containers of content "huawei.com/products/index.html" are "huawei.com/cn", "huawei.com/us" and "cn/gd", all these three containers are child nodes of the content name. For another instance, Name2 = {fanlingyuan.com/blog/2012/June01/main.html | hosting.com ∥ cn/gd ∥ cn/beijjing ∥ us/ca | cloudsrv.com} indicates that attribute containers of content "fanlingyuan.com/blog/2012/June01/main.html" are "hosting.com" and "cloudsrv.com", and "hosting.com" has three data centers in the world, which are located in containers "cn/gd", "cn/beijing" and "us/ca" respectively, that is, the three containers "cn/gd", "cn/beijing" and "us/ca" provide an access service to "hosting.com", and these three containers are child nodes of the container "hosting.com"

Optionally, there are still many methods which can represent the tree structure into a text form, such as an XML format, or use of "( )" as a separator to replace "|", the present invention is not limited to a specific representation.

Optionally, when a directed acyclic graph is used to represent a relationship between a content name of requested content and container information of the requested content , a content name represented by an entrance vertex of the directed acyclic graph and container information of the requested content represented by other vertexes except the entrance vertex in the directed acyclic graph are arranged in sequence in a content request packet, all vertexes of the directed acyclic graph are separated by a separator, and an access parameter is carried after all vertexes acting as starting points of directed edges of the directed acyclic graph, and the access parameter is used to indicate a serial number of an ending point of a directed edge starting from the vertex in the sequence.

Specifically, a content name of the requested content and container information of the requested content may be arranged in {} in sequence, where the content name of the requested content ranks at a first place of the sequence, and the container information of the requested content ranks after the content name; "|" is used as a separator between the content name of the requested content and the container information of each container; the number of the separator "|" is fixed to 1, and a parameter directing to a further vertex is added after the content name of the requested content and the container information of the requested content, for instance, in=n1, n2, ..., where n1, n2 are serial numbers of next vertexes in the sequence, the content name of the requested content has a serial number of 0 in the sequence. If an in parameter is not carried after the container information, then the container information is an exit vertex by default. For instance, Name1 = {fanlingyuan.com/blog/2012/June01/main.html; in=1, 2 | hosting.com; in=3, 4 | cloudsrv.com; in=4, 5 | cn/gd | cn/beijing | us/ca}, the parameter "in=1, 2" is carried after content "fanlingyuan.com/blog/2012/June01/main.html", where 1 and 2 are serial numbers of containers "hosting.com" and "cloudsrv.com" in the container sequence respectively, indicating that these two containers are attribute containers of the content. The parameter "in=3, 4" is carried after "hosting.com", indicating that access containers of "hosting.com" are "cn/gd" and "cn/beijing", the parameter "in=4, 5" is carried by "cloudsrv.com", indicating that access containers of "cloudsrv.com" are "cn/beijing" and "us/ca", where "cn/beijing" provides access services to both "hosting.com" and "cloudsrv.com", but the embodiments of the present invention are not limited thereto.

In S920, the current node matches the content name of the requested content with the forwarding entry in the FIB of the current node, and in S930, when there isn't a forwarding entry matching the content name of the requested content in the FIB, the current node may match the container identification of each container in a container set of the requested content with the forwarding entry in the FIB sequentially according to a certain preference strategy. A match herein refers to the longest match. When there is in the FIB a forwarding entry matching a container identification of a container in the container set of the requested content, the current node may send the content request packet according to an interface in the matching forwarding entry, and stop the matching process. Optionally, the current node may also continue performing the matching process till container identifications of all containers in the container set are matched with the preset container identification in the FIB, in this case, there may be in the FIB two or more than two forwarding entries matching the container identifications of the containers, the current node may send the content request packet according to interfaces in the matching forwarding entries respectively so as to increase a probability of being routed to the requested content. During a practical application, a specific matching method may be configured dynamically according to a need, and the embodiments of the present invention are not limited thereto.

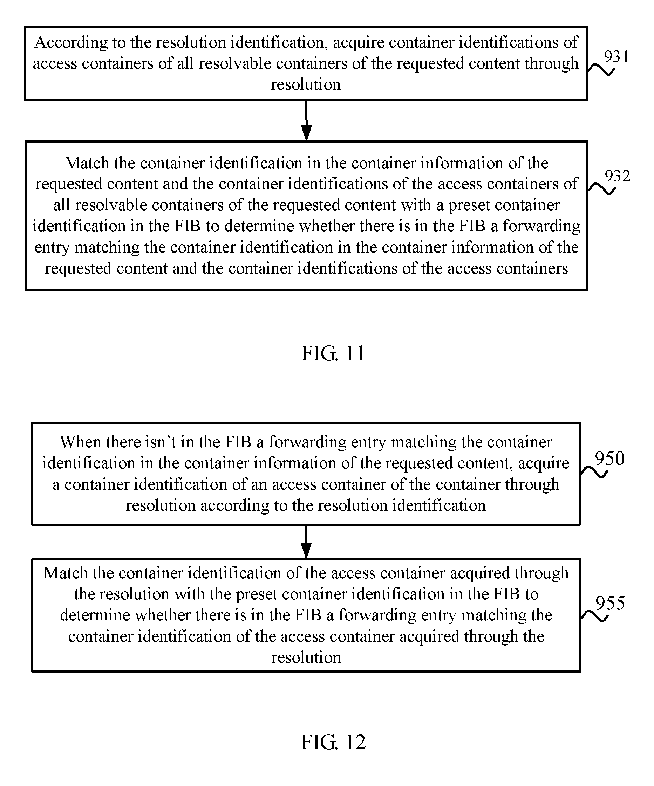

Optionally, as shown in FIG. 11, in the method 900, S930, the determining whether there is in the FIB the forwarding entry matching the container identification in the container information of the requested content, including:

S931, according to the resolution identification, acquire container identifications of access containers of all resolvable containers of the requested content through resolution;

S932, match the container identification in the container information of the requested content and the container identifications of the access containers of all resolvable containers of the requested content with a preset container identification in the FIB to determine whether there is in the FIB a forwarding entry matching the container identification in the container information of the requested content and the container identifications of the access containers.

When the current node determines that a container is a resolvable container according to a resolution identification of the container in the container set, an access container of the container may be acquired by querying the resolution system, and it is further determined whether the access container is a resolvable container, and when the access container is still a resolvable container, continue to query the resolution system to acquire an access container of the access container, an iterative resolution process is conducted as such, till the resolved access container is unresolvable, then the complete resolution process ends, and the current node acquires access containers of all resolvable containers of the requested content. Then, the current node matches the container identification in the container information of the requested content and the container identifications of the access containers of all resolvable containers with the preset container identification included in the FIB according to a certain preference strategy sequentially.

Steps S931 and S932 will be described hereunder in detailed by taking an example where a tree is used to represent a relationship between a content name and container information in a content request packet and the content request packet only carries a resolution identification of a resolvable container. Assuming that an initial form of the content request packet received by the current node is as follows: Name = {fanlingyuan.com/blog/2012/June01/main.html | chinamobile/fanlingyuan; resolvable=yes}. According to the resolution identification "resolvable=yes", the current node may know that the container "chinamobile/fanlingyuan" is resolvable, and thus, the current node queries the resolution system to acquire its access containers "airchina/ca1314; resolvable=yes" and "cloudsrv.com", since the container "airchina/ca1314" is still resolvable, then the current node continues to query the resolution system to obtain that its access container is "cn/beijing", and since "cn/beijing" is unresolvable, execution of the complete resolution process is finished, and the current node obtains all resolvable containers of the requested content, i.e., "chinamobile/fanlingyuan" and "airchina/ca1314", and access containers of all resolvable containers, i.e., "airchina/ca1314", "cloudsrv.com" and "airchina/ca1314". Then, the current node matches the container identification "chinamobile/fanlingyuan" in the container information of the requested content and the container identifications "airchina/ca1314", "cloudsrv.com" and "airchina/ca1314" of the access containers of all resolvable containers of the requested content with the forwarding entry of the FIB sequentially.

Optionally, the current node may also add container information of the access containers of all resolvable containers acquired through the resolution system into the content request packet for a future use by a subsequent routing node, and in this case, the subsequent routing node may not perform the resolution process, but directly match the container identifications in the container information of the requested content with the forwarding entry in the FIB, thus, optionally, the method 900 further includes:

S945, add container information of the resolved access containers of all resolvable container into the container information of the requested content.

For instance, the current node may insert the resolved access containers in the above examples into the container information of the content request packet, thereby acquiring a final content request packet: Name = {fanlingyuan.com/blog/2012/June01/main.html | chinamobile/fanlingyuan; resolvable=yes ∥ airchina/ca1314; resolvable=yes ∥| cn/beijing ∥ cloudsrv.com}.

Furthermore, optionally, for the access container acquired through the resolution system, the container information of the resolved access container may further include a caching attribute and a time to live (Time To Live, TTL), indicating that user equipment or a network side may cache the resolution result and the period of time the resolution result is cached is the time to live, so as to share with other user equipment and routing nodes. The network side herein may include the current node, and may further include other routing nodes, but the embodiments of the present invention are not limited thereto. A cacheable access container may be indicated by "cachable=yes" and "TTL=T", where T indicates the time that a current node caches the resolution result, that is, the time the current node caches a mapping relationship between the resolvable container and the access container is T, for instance, "TTL=1 hour" indicates that the time the resolution result is cached is one hour, Optionally, T may also be set to other time, T may also use minute or second as a unit, and the embodiments of the present invention are not limited thereto. An uncacheable container may be indicated by omitting the caching attribute and "TTL=0". Optionally, the caching attribute and the time to live may also be indicated in other manners, and the embodiments of the present are not limited thereto.

Optionally, in an embodiment of the present invention, the current node may also match a container identification in a container set carried by the content request packet with a forwarding entry in the FIB firstly, when there isn't in the FIB a forwarding entry matching any container identification in the container set, the current node may perform the complete resolution and matching processes described above. Specifically, when there isn't in the FIB a forwarding entry matching the container identification carried by the content request packet, container information of an access container of a resolvable container is determined according to a resolution identification carried by the content request packet; when the access container of the resolvable container is resolvable, the access container of the resolvable container is resolved; when the resolved access container is resolvable, the resolved access container is further resolved, till the further resolved access container is unresolvable, so that container identifications of access containers of all resolvable containers of the requested content are acquired; the container identifications of the access containers of all resolvable containers are matched with a preset container identification in the FIB to determine whether there is in the FIB a forwarding entry matching at least one container identification of the container identifications of the access containers of all resolvable containers; when there is in the FIB a forwarding entry matching at least one container identification of the container identifications of the access containers of all resolvable containers, send the content request packet according to an interface in the matching forwarding entry.

Optionally, the current node may also resolve only a part of resolvable containers of the requested content to acquire an access container thereof, and then match the container identification in the container information of the requested content and the container identification of the access container acquired trough part resolution with the forwarding entry in the FIB. When there is in the FIB a forwarding entry matching the container identification described above, the current node may send the content request packet according to an interface in the matching forwarding entry. Optionally, when there isn't in the FIB a forwarding entry matching the container identification described above, the current node may resolve a part of resolvable containers that has not been resolved, and match the resolved access container with the forwarding entry in the FIB, but the embodiments of the present invention are not limited thereto.

Thus, a routing and forwarding method according to the embodiments of the present invention can reduce dependence of routing and forwarding upon a content name by increasing container information of content on the basis of the content name to expand attributes of the content in an ICN system, which thus may reduce route entries in a routing table, and provide possibilities for solving problems such as routing scalability and mobility caused by the content name.

In the embodiments described above, the current node first completely resolves a container set of the requested content to acquire access containers of all resolvable containers of the requested content, and then perform the matching process. Optionally, the current node may also implement the matching process first, and when no container in the container set has a matching forwarding entry in the FIB, the current node resolves a resolvable container in the container set. Thus, optionally, as shown in FIG. 12, as another embodiment, the method 900 further includes:

S950, when there isn't in the FIB a forwarding entry matching the container identification in the container information of the requested content, acquire a container identification of an access container of the container through resolution according to the resolution identification;

S955, match the container identification of the access container acquired through the resolution with the preset container identification in the FIB to determine whether there is in the FIB a forwarding entry matching the container identification of the access container acquired through the resolution.

Processes S950, S955 may be executed cyclically. That is, when there isn't in the FIB a forwarding entry matching any container in the container set, the current node determines a resolvable container in the container set according to the resolution identification in the container information, and matches the container identification of the access container acquired through resolution with the preset container identification in the FIB to determine whether there is in the FIB a forwarding entry matching the container identification of the access container acquired through the resolution; when there isn't in the FIB a forwarding entry matching the container identification of the access container acquired through the resolution and the resolved access container is resolvable, the resolved access container is further resolved till the further resolved access container is unresolvable or there is in the FIB a forwarding entry matching the container identification of the further resolved access container; when there is in the FIB a forwarding entry matching the container identification of the resolved or the further resolved access container, the content request packet is sent according to a port in the matching forwarding entry. Specifically, the current node first matches the container identification of each container in the container set carried by the content request packet with the forwarding entry in the FIB sequentially. When there isn't a forwarding entry matching any container in the container set in the FIB, the current node determines a resolvable container in the container set according to the resolution identification in the container information, and acquires an access container of the resolvable container by querying the resolution system; then, the current node matches the access container with the forwarding entry in the FIB, when there isn't a forwarding entry matching the access container in the FIB, the current node determines whether the access container is resolvable according to the resolution identification of the access container, and continues with a resolution thereupon when the access container is resolvable, till a forwarding entry matching the resolved access container is found in the FIB, or the resolved access container is unresolvable.

Optionally, as another embodiment, the method 900 further includes:

S960, add container information of the access container acquired through the resolution into the container information of the requested content.

The current node may add container information of the access container acquired through the resolution each time into the container information of the requested content.

A cyclical execution of processes S950, S955 and S960 will be described hereunder in detailed by taking an example where a directed acyclic graph is used in a content request packet to represent a relationship between a content name and container information, and the content request packet only carries a resolution identification of a resolvable container. An initial form of the content request packet received by the current node is: Name = {fanlingyuan.com/blog/2012/June01/main.html; in=1| chinamobile/fanlingyuan; resolvable=yes}, the current node first matches the container identification "chinamobile/fanlingyuan" with a forwarding entry in the FIB, a result shows that there isn't a forwarding entry matching the container identification in the FIB. According to the resolution identification "resolvable=yes", the current node finds that the container "chinamobile/fanlingyuan" is resolvable, thus, the current node queries the resolution system to resolve the container, and obtains its access containers "airchina/ca1314; resolvable=yes" and "cloudsrv.com", the current node may insert them into the container information of the requested content, and a result is Name = {fanlingyuan.com/blog/2012/June01/main.html; in=1| chinamobile/fanlingyuan; resolvable=yes ; in=2,3 | airchina/ca1314; resolvable=yes | cloudsrv.com}. Moreover, the current node matches the container identifications "airchina/ca1314" and "cloudsrv.com" with the forwarding entry in the FIB sequentially, a matching result shows that there isn't in the FIB a forwarding entry matching these two container identifications either, and the container "airchina/ca1314" is resolvable, thus the current node continues to resolve the container "airchina/ca1314" and obtains its access container "cn/beijing", the current node inserts the same into the container information of the requested content, the content request packet is changed into: Name = {fanlingyuan.com/blog/2012/June01/main.html; in=1 | chinamobile/fanlingyuan; resolvable=yes ; in=2,3 | airchina/ca1314; resolvable=yes; in=4 | cloudsrv.com | cn/beijing}, and the container identification "cn/beijing" is matched with the forwarding entry in the FIB. Since the container "cn/beijing" is unresolvable, thus, whether there is in the FIB a forwarding entry matching the container identification or not, the above loop execution ends to proceed with a next step.

Optionally, in an embodiment of the present invention, the current node may also perform an iterative resolution and matching for a resolvable container carried by the content request packet according to a depth traversal of the tree, specifically, the current node may perform an iterative resolution and matching for a resolvable container carried by the content request packet till an access container acquired through the iterative resolution is unresolvable or there is in the FIB a forwarding entry matching the access container acquired through the iterative resolution; when the access container acquired through the iterative resolution is unresolvable and there isn't a forwarding entry matching the access container acquired through the iterative resolution in the FIB, the current node may perform the iterative resolution and matching process for another resolvable container carried by the content request packet, but the embodiments of the present invention are not limited thereto.

Thus, a routing and forwarding method according to the embodiments of the present invention can reduce dependence of routing and forwarding upon a content name by increasing container information of content on the basis of the content name so as to expand attributes of the content in an ICN system, which thus may reduce route entries in a routing table, and provide possibilities for solving problems such as routing scalability and mobility caused by the content name. Furthermore, in most cases, the current node only needs to perform partial resolution to acquire that there is a forwarding entry matching an access container in the FIB, thus, compared with an embodiment in the above embodiments where resolution is completed first and then matching is performed, a forwarding process in this embodiment may reduce times of container resolution and times of querying of the resolution system.

In S920, the current node matches the content name of the requested content with the forwarding entry in the FIB. Optionally, the forwarding entry in the FIB may include a content name prefix and an interface corresponding to the content name prefix, correspondingly, S920 includes:

S921, determine whether there is in the FIB a forwarding entry matching the content name of the requested content according to whether a prefix of a content name of the requested content matches the content name prefix in the forwarding entry of the FIB;

The method 900 further includes:

S965, when it is determined that there is a forwarding entry matching the content name of the requested content in the FIB, send the content request packet according to an interface in the matching forwarding entry, .

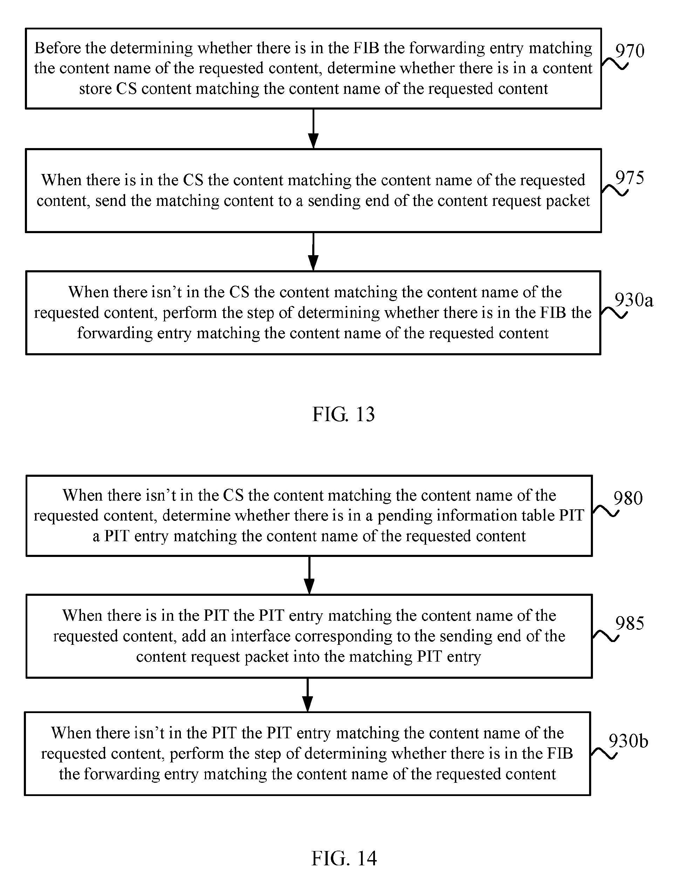

Optionally, the current node may also cache the requested content via a CS, so that when the routing node receives a request for the same content, the requested content stored in the CS may be sent to a sending end of the content request packet directly, which thus makes the content request process simpler and faster. Thus, optionally, as another embodiment, as shown in FIG. 13, the method 900 further includes:

S970, before the determining whether there is in the FIB the forwarding entry matching the content name of the requested content, determine whether there is in a content store CS content matching the content name of the requested content;

S975, when there is in the CS the content matching the content name of the requested content, send the matching content to a sending end of the content request packet;

S930a, when there isn't in the CS the content matching the content name of the requested content, perform the step of determining whether there is in the FIB the forwarding entry matching the content name of the requested content.

Thus, the routing and forwarding method according to the embodiment of the present invention can reduce dependence of routing and forwarding upon a content name by increasing container information of content on the basis of the content name so as to expand attributes of the content in an ICN system, which thus may reduce route entries in a routing table, and provide possibilities for solving problems such as routing scalability and mobility caused by the content name.

Optionally, the current node may also be compatible with a routing and forwarding method of an NDN in the prior art, through storing routing information of a sending end of the content request packet in a pending information table (Pending Information Table, short for "PIT") and looking up the same content request for only once, when the requested content is returned, a next hop interface of the requested content is determined via information in the PIT, thus not only a repeated lookup for the same requested content can be avoided, but also the next hop interface of the requested content returned may be determined. Thus, optionally, as another embodiment, as shown in FIG. 14, the method 900 further includes:

S980, when there isn't in the CS content matching the content name of the requested content, determine whether there is in a pending information table PIT a PIT entry matching the content name of the requested content;

S985, when there is in the PIT the PIT entry matching the content name of the requested content, add an interface corresponding to the sending end of the content request packet into the matching PIT entry;

S930b, when there isn't in the PIT a PIT entry matching the content name of the requested content, perform the step of determining whether there is in the FIB a forwarding entry matching the content name of the requested content.

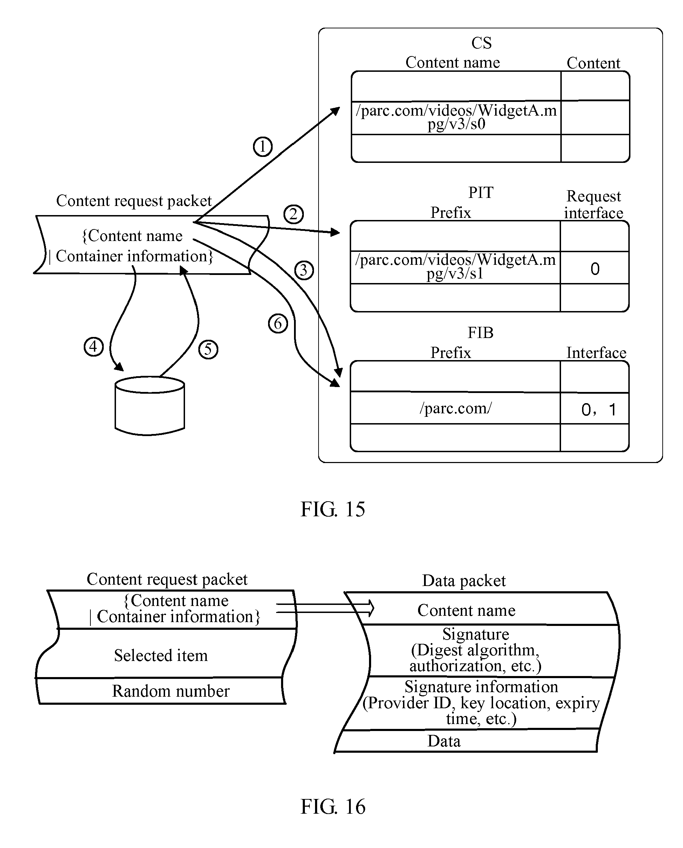

A routing and forwarding method according to the embodiments of the present invention will be described in detail with reference to an example of FIG. 15. A current node receives a content request packet, where the content request packet carries a content name and container information of requested content, the current node first performs step ①, a content entry in the CS may include a preset content name and content corresponding to the preset content name, the current node may match the content name of the requested content with the preset content name in the CS to determine whether there is in the CS content matching the content name of the requested content; when there isn't in the CS the content matching therewith, the current node performs step ②, a PIT entry in the PIT may include a content name prefix and a request interface corresponding to the content name prefix, where the request interface indicates an interface corresponding to a sending end of a content request packet carrying a content name which takes the content name prefix as a prefix, the current node matches the prefix of the content name of the requested content with the content name prefix in the PIT entry to determine whether there is in the FIB a PIT entry matching the content name of the requested content; when there isn't in the PIT the PIT entry matching the content name of the requested content, the current node performs step ③, a forwarding entry of the FIB includes a content name prefix and an interface corresponding to the content name prefix, or the forwarding entry of the FIB includes a preset container identification and an interface corresponding to the preset container identification, the current node matches the prefix of the content name of the requested content with the content name prefix in the forwarding entry to determine whether there is in the FIB a forwarding entry matching the content name of the requested content; when there isn't in the FIB the forwarding entry matching the content name of the requested content, the current node performs steps ④ and ⑤, to resolve a container set of the requested content completely, and acquire all resolvable containers of the requested content and access containers of all resolvable containers, and then the current node performs step ⑥, to look up and match the forwarding entry in the FIB for a container identification of a container in the container set of the requested content and container identifications of the access containers of all resolvable containers sequentially according to a certain preference strategy. When at least one container identification has a matching forwarding entry in the FIB, the content request packet is forwarded according to an interface in the matching forwarding entry, otherwise, the current node discards the content request packet or sends the content request packet according to a default interface, and a routing and forwarding process for the content request packet comes to an end.

Thus, a routing and forwarding method according to the embodiment of the present invention can reduce dependence of routing and forwarding upon a content name by increasing container information of content on the basis of the content name to expand attributes of the content in an ICN system, which thus may reduce route entries in a routing table, and provide possibilities for solving problems such as routing scalability and mobility caused by the content name.

Optionally, as another embodiment, the method 900 further includes:

S990, when there isn't in the FIB a forwarding entry matching the container identification in the container information of the requested content, send the content request packet according to a default interface, or discard the content request packet.

When the current node performs S990 after S932 of the embodiment described above, then the current node does not have a forwarding entry matching the container identification in the container information of the requested content and the container information of the access containers of all resolvable containers of the requested content in the FIB; whereas when the current node performs S990 after S955 of the embodiment described above, then the current node does not have a forwarding entry matching the container identification in the container information of the requested content in the FIB, and when the resolved access container is unresolvable, the content request packet is sent according to a default interface, or the content request packet is discarded.

Thus, a routing and forwarding method according to the embodiment of the present invention can reduce dependence of routing and forwarding upon a content name by increasing container information of content on the basis of the content name to expand attributes of the content in an ICN system, which thus may reduce route entries in a routing table, and provide possibilities for solving problems such as routing scalability and mobility caused by the content name.

It should be understood that, in the embodiments of the present invention, both the matches of the content name of the requested content and the container identification in the container information of the requested content with the forwarding entry of the FIB are the longest match, while the match of the content name of the requested content with the CS and the match of the content name of the requested content with the PIT may be the longest match, and may also be an accurate match, but the embodiments of the present invention are not limited thereto. Furthermore, the container information of the requested content is only used to match the forwarding entry of the FIB so as to determine a forwarding route of the content request packet when the content name of the requested content fails to match the FIB or fails to match the CS and the FIB, or fails to match the CS, the PIT and the FIB, thus, the container information only serves as assisting the routing. In a case where requested content may be found by using a content name of the requested content, the content request packet may only carry the content name of the requested content, thereby retaining the convenience for an ICN system, such as the NDN, to perform routing based on the content name directly.

Furthermore, in an embodiment of the present invention, in a scenario of local routing such as a home network, an enterprise network and Adhoc, introduction of the resolution system may not be necessary. For instance, in a wireless network within the home, a cell phone stores content having a content name of "fanlingyuan.com/myson/2012/June01/happy.jpg", the prefix "fanlingyuan.com/myson" of the content name and an interface corresponding thereto are saved in an FIB of a wireless routing node within the home, when a computer end user wants to acquire the content, a content request packet is sent to a network end, a form thereof is as below: {fanlingyuan.com/myson/2012/June01/happy.jpg | chinamobile/fanlingyuan; resolvable=yes}, although the content request packet carries container information of a resolvable container, since the content name of the requested content can match "fanlingyuan.com/myson" in the FIB of the wireless routing node, the content request packet may be sent according to an interface in a matching forwarding entry, and there is no need to match a container nor resolve the container, and thus, in this case, a resolvable container may not be resolved, the content request packet may also only carry the content name of the requested content without carrying the container information of the requested content.

Furthermore, as shown in FIG. 16, the embodiments of the present invention only expands content attributes of a content request packet, the content request packet carries a content name and container information of requested content, and may carry an option and a random number of the prior art; while a data packet may still carry a content name in an existing ICN system such as an NDN without carrying container information of any container, and the data packet still carries signature information, such as publisher ID, key location and expiry time. Since a signature in the data packet is still calculated based on a complete content name, data itself and a user's private key in the data packet, and the container information of the requested content carried in the content request packet will not occur in the data packet, nor participate in the calculation of the signature, thus, security of the existing ICN system such as the NDN will not be affected.

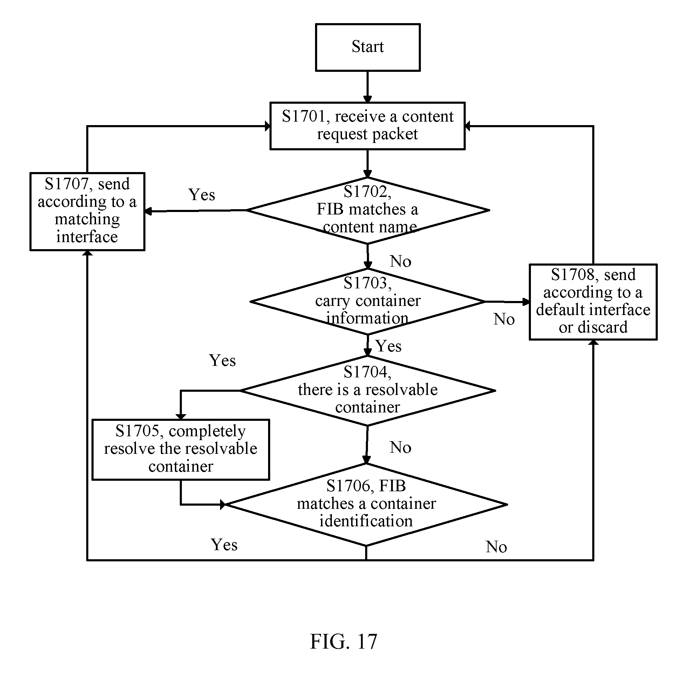

A routing and forwarding method provided in the embodiments of the present invention will be described hereunder in detail with reference to specific examples as shown in FIG. 17 to FIG. 19.

FIG. 17 is a schematic flowchart diagram of a routing and forwarding method 1700 according to an embodiment of the present invention, as shown in FIG. 17, the method 1700 includes:

S1701, receive a content request packet.

The content request packet may carry a content name of requested content only, and may also carry the content name of the requested content and container information of the requested content, containers corresponding to the container information of the requested content form a container set, where the container set includes at least one container. The container information of the requested content includes a container identification of each container in the container set, and optionally, the container information may further include a resolution identification of each container in the container set, or include a resolution identification of a resolvable container in the container set, but the embodiments of the present invention are not limited thereto.

S1702, match the content name of the requested content with a forwarding entry in the FIB.

Specifically, a prefix of the content name of the requested content may be matched with a content name prefix in the forwarding entry of the FIB, if there is in the FIB a content name prefix matching the prefix of the content name of the requested content, then proceed with S1707, otherwise proceed with S1703.

S1703, determine whether the content request packet carries container information of the requested content.

If the content request packet carries container information of the requested content, then proceed with S1704, otherwise proceed with S1708.

S1704, according to a resolution identification in the container information, determine whether there is in the container set a resolvable container.

If the container set has at least one resolvable container, then proceed with S1705 and S1706, otherwise proceed with S1706 directly.

S1705, completely resolve the resolvable container in the container set.

At least one resolvable container in the container set is resolved completely, that is, firstly, acquire an access container of the at least one resolvable container, and add container information of the access container into the content request packet, and then determine whether the access container is resolvable, if resolvable, then continue with a resolution for the access container to acquire an access container of the access container, and add container information of the access container of the access container into the container information of the requested content till the resolved access container is unresolvable, thus acquiring access containers of all resolvable containers of the requested content and updated container information of the requested content.

S1706, match a container identification in the container information of the requested content with the forwarding entry in the FIB.

Specifically, the container identification of each container in the container set corresponding to the container information is matched with a preset container identification in the FIB sequentially. When S1706 is performed directly in subsequent to S1704, the container information in S1706 is specifically the container information of the requested content carried in the content request packet which is received by a current routing node, when S1706 is performed in subsequent to S1705, the container information in S1706 is specifically the updated container information of the requested content. If at least one container identification has a forwarding entry matching therewith in the FIB, then proceed with S1707, otherwise proceed with S1708.

S1707, according to an interface in the matching forwarding entry, send the content request packet.

A routing and forwarding process for the content request packet comes to an end herein. It should be understood that, although the sent content request packet herein is still referred to as the content request packet, since the content request packet at this time may be added with the container information of the access container of the resolvable container acquired during the complete resolution described above, thus the content request packet at this time may differ from the content request packet received in step 1701.

S1708, send the content request packet according to a default interface, or discard the content request packet.

Thus, a routing and forwarding method according to the embodiment of the present invention can reduce dependence of routing and forwarding upon a content name through adding container information of content on the basis of the content name to expand attributes of the content in an ICN system, which thus may reduce route entries in a routing table, and provide possibilities for solving problems such as routing scalability and mobility caused by the content name.

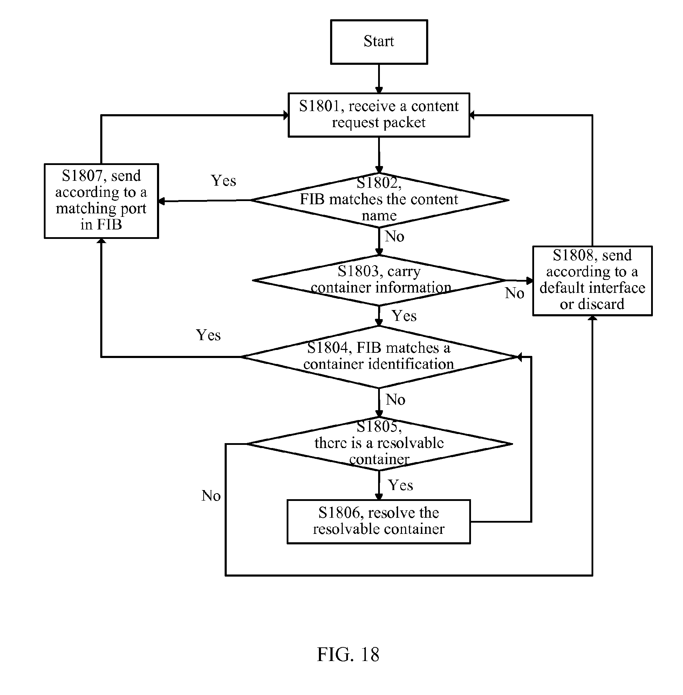

FIG. 18 is a schematic flowchart diagram of a routing and forwarding method 1800 according to another embodiment of the present invention, steps 1801-1803 are basically the same as implementation procedures of steps 1701-1703 in the method 1700, which will not be repeated herein. Subsequent steps related to container resolution are now described hereunder in detail.

S1804, match the container identification of each container in the container set with the forwarding entry in the FIB sequentially.

If a container identification of one container or container identifications of more than one container have a forwarding entry matching therewith in the FIB, then proceed with S1807, otherwise proceed with S1805.

S1805, determine whether there is a resolvable container in the container set.

If the container set has at least one resolvable container, then proceed with S1806 and S1804, otherwise proceed with S1808.

S1806, resolve the at least one resolvable container to acquire an access container of the at least one resolvable container.

S1804 is performed after S1806 is performed, that is, a container identification of the access container of the at least one resolvable container is matched with the forwarding entry in the FIB, if, in the container identification of the access container of the at least one resolvable container, there is one or more container identifications of access containers having a forwarding entry matching therewith in the FIB, then proceed with step S1807, otherwise, continue to proceed with S1805 and S1806, and processes S1805, S1806 and S1804 are executed cyclically as above, till there is in the FIB a forwarding entry matching the container identification of the access container acquired during the resolution process, or the access container acquired during the resolution process is unresolvable.

S1807, according to an interface in the matched forwarding entry, send the content request packet.

A routing and forwarding process for the content request packet comes to an end herein.

S1808, send the content request packet according to a default interface, or discard the content request packet.

A routing and forwarding process for the content request packet comes to an end herein.

Thus, a routing and forwarding method according to the embodiment of the present invention can reduce dependence of routing and forwarding upon a content name through adding container information of content on the basis of the content name to expand attributes of the content in an ICN system, which thus may reduce route entries in a routing table, and provide possibilities for solving problems such as routing scalability and mobility caused by the content name. Moreover, compared with the method 1700 described in the embodiment above, the method 1800 may reduce times of container resolution in most cases, and thus may save overheads and expedite a forwarding speed of a content request packet.

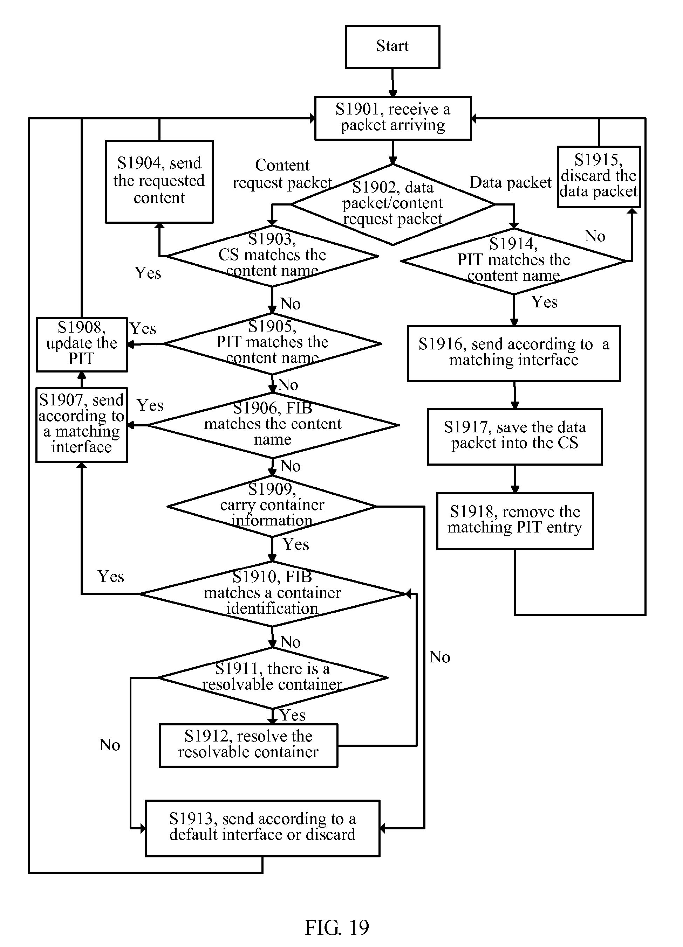

FIG. 19 is a schematic flowchart diagram of a routing and forwarding method 1900 according to still another embodiment of the present invention. As show in FIG. 19, the method 1900 includes:

S1901, receive a packet arriving.

The arriving packet may be a content request packet or a data packet, where the content request packet may carry a content name and container information of requested content, and the data packet only carries a content name of content without carrying container information.

S1902, determine whether the received packet is a data packet or a content request packet.

If the packet is a content request packet, then proceed with S1903; if the packet is a data packet, then proceed with S1914.

S1903, match a content name of requested content with content in a CS.

A current node matches the content name of the requested content with a preset content name in the CS to determine whether there is in the CS content matching the content name. When there is in the CS the content matching the content name of the requested content, then proceed with S1904, and a routing and forwarding process for the content request packet by the current node comes to an end herein; otherwise proceed with S1905.

S1904, send the requested content in the CS to a sending end of the content request packet.

S1905, match the content name of the requested content with a PIT entry in a PIT.

The current node matches a prefix of the content name of the requested content with a content name prefix in the PIT entry to determine whether there is in the PIT a PIT entry matching the content name of the requested content. If there is in the PIT a PIT entry matching the content name, it indicates that the requested content has been looked up, then proceed with S1908, and a routing and forwarding process for the content request packet comes to an end herein, thus, the same content may be looked up for only once, thereby avoiding a repeated lookup; otherwise proceed with S1906.

S1906, match the content name of the requested content with a forwarding entry in a FIB;

The current node matches a prefix of the content name of the requested content with a content name prefix in the forwarding entry to determine whether there is in the FIB a forwarding entry matching the content name. If there is in the FIB the forwarding entry matching the content name, then proceed with S1907 and S1908, otherwise proceed with S1909.

S1907, send the content request packet according to an interface in the matching forwarding entry.

S1908, update the PIT.

Specifically, if S1908 is performed after S1907 is performed, then the updating of the PIT is specifically: adding the prefix of the content name of the requested content and the interface corresponding to the sending end of the content request packet into the PIT table as a new PIT entry; if S1908 is performed after S1905 is performed, then the updating of the PIT is specifically: adding the interface corresponding to the sending end of the content request packet into the PIT entry matching the content name of the requested content.

S1909, determine whether the content request packet carries container information of the requested content.

If the content request packet carries container information of the requested content, then proceed with S1910, otherwise proceed with S1913.

S1910, match a container identification in the container information with the forwarding entry in the FIB.

The current node matches the container identification of each container in a container set corresponding to the container information with a preset container identification in the forwarding entry to determine whether there is in the FIB a forwarding entry matching the container identification in the container information. If the container set has at least one container which has a forwarding entry matching therewith in the FIB, then proceed with S1907 and S1908, otherwise proceed with S 1911.

S1911, determine whether there is a resolvable container in the container set of the requested content.

The container information may further include a resolution identification of a container, the current node determines whether there is a resolvable container in the container set according to the resolution identification. If the container set has at least one resolvable container, then proceed with S1912 and S1910, otherwise proceed with S1913.

S1912, resolve the at least one resolvable container respectively, to acquire an access container of the at least one resolvable container;

Then proceed with S1910, that is, the container identification of the access container of the at least one resolvable container is looked up and matched with the forwarding entry in the FIB sequentially according to a certain preference strategy. If there isn't in the FIB a forwarding entry matching the container identification of the access container of the at least one resolvable container either, then continue to proceed with S 1911, steps S1910, S1911 and S1912 will be executed cyclically as above, till a forwarding entry matching the container identification of the resolved access container is found in the FIB, or the resolved access container is unresolvable, and then proceed with step S1913.

S1913, send the content request packet according to a default interface, or discard the content request packet.

A routing and forwarding process for the content request packet comes to an end herein.

S1914, match the content name of the content with a PIT entry in the PIT table.

If there is in the PIT table a PIT entry matching the content name, then proceed with S1916, S1917 and S1918, otherwise proceed with S1915.

S1915, discard the data packet.

A routing and forwarding process for the data packet comes to an end herein.

S1916, send the data packet according to an interface in the matching PIT entry.

S 1917, save the data packet into the CS table.

In this way, the current node may cache the content in the data packet, so that when the current node receives a request for the content of the data packet during the caching of the content, the current node may directly return the content in the data packet, thereby avoiding a repeated lookup for the content in the data packet.

S1918, remove the matching PIT entry.

Steps S1916, S1917 and S1918 may be executed in any sequence, the embodiments of the present invention do not limit the execution sequence of these three steps, and a forwarding process for the data packet comes to an end herein.

It should be understood that, the sequence order of the above processes does not mean the execution sequence, and the execution sequence of each process should be determined by function and inner logic thereof, and should not limit an implementation procedure of the embodiments of the present invention.

It should also be understood that, examples of FIG. 17 to FIG. 19 target at assisting persons skilled in the art in better understanding the embodiments of the present invention, rather than limit the scope of the embodiments of the present invention. Persons skilled in the art may make equivalent modifications or changes according to the examples as shown in FIG. 17 to FIG. 19 obviously, and these modifications or changes also fall into the scope of the embodiments of the present invention.

Thus, a routing and forwarding method according to the embodiments of the present invention can reduce dependence of routing and forwarding upon a content name through adding container information of content on the basis of the content name to expand attributes of the content in an ICN system, which thus may reduce route entries in a routing table, and provide possibilities for solving problems such as routing scalability and mobility caused by the content name.

It can be seen from the above embodiments that, the embodiments of the present invention can reduce dependence of routing and forwarding upon a content name through adding container information of content on the basis of the content name to expand attributes of the content in an ICN system, which thus may solve a problem of routing scalability caused by the content name. Specifically, in order to reduce route entries in a routing table, the embodiments of the present invention divide all containers into three types: a topology-related container, a topology-unrelated large container and a topology-unrelated small container, and different routing strategies are used for the above three different types of containers respectively.

Firstly, a progressive nesting hierarchical aggregation method is used for the topology-related container, where the topology-related container is a container which forms a topological relation with a further container, and the topological relation includes: a higher level container including one or more lower level containers, and/or a lower level container being included by one or more higher level containers. Specifically, all containers forming the topological relation may be divided into different levels, each container locates at a particular level, when two containers differ in level by one level, the container with a lower level is called as a lower level container of the container with a higher level, whereas the container with the higher level is called as a higher level container of the container with the lower level, the container with the lower level may be provided with an access service by the higher level container thereof, that is, the container with the higher level is an access container of the lower level container thereof. It should be understood that, the lower level container and the higher level container are relative, for instance, a container A may be a lower level container of a container B, and may also be a higher level container of a container C, but the embodiments of the present invention are not limited thereto.

Optionally, a container identification corresponding to the topology-related container has a nature which can reflect a level of the topology-related container, thus indicating the topological relation formed between the topology-related container and a further container. Specifically, a container identification of a container with a lower level may include a container identification of a higher level container thereof, for instance, a container identification "cn/gd/sz" of a municipal container Shenzhen includes a container identification "cn/gd" of its higher level container Guangdong, but the embodiments of the present invention are not limited thereto.

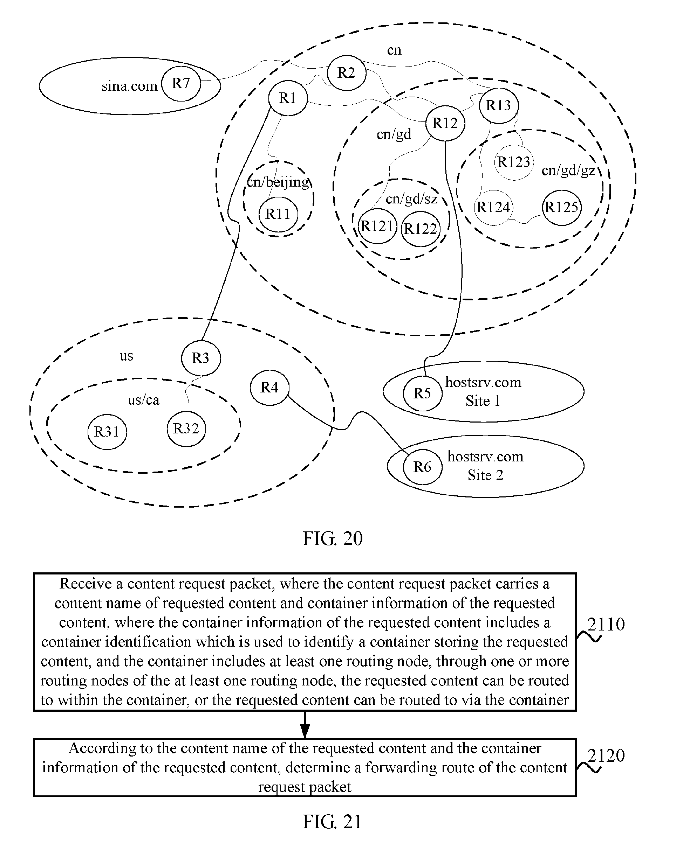

As shown in FIG. 20, China's network as a whole may be considered as a national topology-related container "cn", "cn" is converged with provincial containers such as Guangdong province "cn/gd", Beijing "cn/beijing", etc., and "cn/gd" is also converged with lower level topology-related containers such as Shenzhen "cn/gd/sz", and so on. Similarly, U.S. network may also be considered as a national container "us", the container "us" further includes a lower level topology-related container "us/ca". Moreover, a large ISP may also be aggregated hierarchically according to topological container, for instance, China Telecom is considered as a large container "ct" which is converged with provincial containers such as "ct/gd", "ct/sd", etc., and "ct/gd" is also converged with municipal containers such as "ct/gd/sz", but the embodiments of the present invention are not limited thereto. Due to the longest match property of an FIB table, in the container "us" of the U.S., only one route directing to "cn" is needed, then all containers having a prefix of "cn" may be matched, thus, topology-related containers which have the highest level in the topological relation, such as "cn", "us" or "ct", may be considered as global containers, routes thereof may be considered as global routes to be diffused. The global containers are globally routable containers, routes thereof being considered as the global routes refers to that routing tables of all routing nodes have route entries of these global containers. The global containers do not have access containers.

Optionally, according to a need of actual deployment, besides the topology-related containers that have the highest level in the topological relation, some topology-related containers with a higher level, such as provincial containers "cn/gd", "cn/sd" or "us/ca", may also serve as topology-related global containers, and their routes may be diffused as global routes, but the embodiments of the present invention are not limited thereto. In the embodiments of the present invention, the topology-related containers that serve as the global containers are called as topology-related global containers.

Optionally, global containers may further include topology-unrelated global containers, the topology-unrelated global containers include topology-unrelated large containers, and the topology-unrelated large containers refer to few topology-unrelated containers which have a large amount of visits in an existing network, such as a large ISP, a large company, a large portal, e.g., "sina.com", "google.com", "baidu.com", etc., they have a thousand times, or tens of thousands of times more of visits than a common container, they may serve as topology-unrelated global containers, and their routes may also be diffused as global routes.

Optionally, the topology-unrelated large containers described above may also be provided with an access service by a topology-related container with a higher level, and thus these topology-unrelated large containers may be considered as local routes of routing nodes included by access containers thereof. However, matching efficiency of routing tables of the entire network may be greatly improved by taking these topology-unrelated large containers as global containers, meanwhile it is also convenient for these large companies to adjust the routes initiatively and flexibly, so that services such as multi-homing, load sharing and Anycast are better provided, and moreover, due to the small number of these containers, the size of a core routing table will not increase dramatically, but the embodiments of the present invention are not limited thereto.

In summary, a routing table of a current node includes a global container route entry, where the global container route entry includes a container identification of a global container and a first interface corresponding to the container identification of the global container, the first interface is an interface which connects the current node to a next hop routing node to reach the global container, the global container is a globally routable container, and the global container includes a topology-related global container and/or a topology-unrelated global container. Taking a routing node R121 included in a container "cn/gd/sz" as shown in FIG. 20 as an example, a routing table of the routing node includes route entries of the containers "cn" and "us", while since the routing node R121 needs to reach routing nodes R1 and R2 of the container "cn" via a routing node R12 so as to reach the container "us", thus, the first interface corresponding to the container identifications "cn" and "us" is an interface through which R121 is connected to R12.

For a lower level container of the topology-related global container described above, an access service is provided by the topology-related global container for it, and correspondingly, a route thereof may serve as an internal route of a routing node included in the topology-related global container without diffusing out of the topology-related global container. Specifically, the route of the low level container may be only included in a routing table of a routing node included by the topology-related global container. Generally, for any topology-related container other than the above topology-related global container in the topological relation, an access service is provided for its lower level container, and correspondingly, a route of the low level container may serve as an internal route of the topology-related container without diffusing out of the topology-related container. For the convenience of description, the topology-related container below refers to a further topology-related container other than the topology-related global container in the topological relation. From the perspective of the current node, the routing table of the current node may include a topology-related container route entry used to perform routing based on a topology-related container, and through the topology-related container route entry, a route of a lower level container of a container to which the current node belongs is enabled to serve as an internal route of the current node without diffusing out of the container to which the current node belongs. Here, without diffusing out of the container to which the current node belongs refers to that there isn't a route entry of the lower level container of the container to which the current node belongs existing in a routing table of a routing node out of the container to which the current node belongs, thus the routing node out of the container to which the current node belongs needs to route to the lower level container by virtue of the container to which the current node belongs. For instance, routing tables of routing nodes R1 and R2 may include route entries of provincial containers "cn/sd" and "cn/gd" which serve as lower level containers of a container "cn" to which R1 and R2 belong, and their routes may serve as local routes of the routing nodes R1 and R2 without diffusing out of the container "cn". Similarly, routing tables of the routing nodes R12 and R13 may include a route entry of a lower level container "cn/gd/sz" of a container "cn/gd" to which R12 and R13 belong, and the route thereof may also serve as a local route of R12 and R13 without diffusing out of the container "cn/gd". Thus, the routing nodes R1 and R2 of the container "cn" can only find a route of "cn/gd/sz" in the routing table of the routing nodes R12 and R13 by entering into the container "cn/gd".

Specifically, a routing table of a current node may include a route of a lower level container of a container to which the current node belongs, a route entry of the lower level container includes a container identification of the lower level container and a second interface corresponding to the container identification of the lower level container, the second interface is an interface which connects the current node to the lower level container. For instance, a route entry of a routing table of the routing node R12 may include a container identification "cn/gd/sz" and an interface through which R12 is connected to R121.

The topology-unrelated small container refers to a topology-unrelated container with few visits, there are a lot of this type of containers in a network, such as a small company, an organization, a home network, a personal digital device, etc., which is also one of main factors resulting in a problem of routing scalability in an existing ICN system such as an NDN. In an embodiment of the present invention, this type of container may be provided with an access service by a topology-related container, and correspondingly, a route of this type of container may be confined to the inside of an access container thereof without diffusing out of the access container, so that size of a core routing table may be greatly reduced. For instance, as shown in FIG. 20, the container "hostsrv.com" has its own enterprise networks in two places, which may be interpreted as that two topology-related containers "cn/gd" and "us/ca" provide an access service for it, thus, only routing tables of routing nodes included by the two containers have a route entry of the container "hostsrv.com", while a container other than the two containers can only reach the container "hostsrv.com" via assistance of the topology-related containers "cn/gd" and "us/ca" in the routing. Thus, the routing table of the current node may further include a topology-unrelated small container route entry, where the topology-unrelated small container route entry includes a container identification of a topology-unrelated small container and a third interface corresponding to the container identification of the topology-unrelated small container, where the third interface is an interface which connects the current node to a next hop routing node to reach the topology-unrelated small container. For instance, a routing table of a routing node R4 may include a container identification "hostsrv.com" and an interface through which R4 is connected to R6.

In conclusion, in the embodiments of the present invention, the number of route entries of a core routing table is basically equal to "the number of routes of topology-related global containers" plus "the number of routes of topology-unrelated global containers". Due to the small number of the two types of routes, the size of a total routing table may be even smaller than the number of entries of a core routing table in a nowadays internet router. Thus, the embodiments of the present invention may greatly reduce the number of entries of a core routing table, and effectively solve a problem of routing scalability in an existing ICN system such as an NDN by adding container information of content on the basis of a content name to expand attributes of the content in the ICN system, limiting a route of a topology-unrelated small container to a topology-related container which provides it with an access service, and limiting a route of a lower level container of the topology-related container to the topology-related container.

Since the FIB table is a subset of a routing table, thus, in the embodiments of the present invention, a forwarding entry of the FIB table also has a feature similar to the routing table. Specifically, the FIB includes a global container forwarding entry, where the global container forwarding entry includes a container identification of a global container and a first interface corresponding to the container identification of the global container, the first interface is an interface which connects a current node to a next hop routing node to reach the global container, the global container is a globally routable container, and the global container includes a topology-related global container and/or a topology-unrelated global container.

Optionally, the FIB further includes a topology-related container forwarding entry used to perform routing based on the topology-related container, and through the topology-related container forwarding entry, a route of a lower level container of a container to which the current node belongs is enabled to serve as an internal route of the current node without diffusing out of the container to which the current node belongs; where the topology-related container is a container which forms a topological relation with a further container, and the topological relation includes: a higher level container including one or more lower level containers, and/or a lower level container being included by one or more higher level containers. Optionally, the topology-related container forwarding entry includes a container identification of the lower level container of the container to which the current node belongs and a second interface corresponding to the container identification of the lower level container, where the second interface is an interface which connects the current node to the lower level container; through the topology-related container forwarding entry, a route of a lower level container of a container to which the current node belongs being enabled to serve as an internal route of the current node without diffusing out of the container to which the current node belongs, specifically includes: through the container identification of the lower level container and the second interface corresponding to the container identification of the lower level container in the topology-related container forwarding entry, a route of a lower level container of a container to which the current node belongs is enabled to serve as an internal route of the current node without diffusing out of the container to which the current node belongs. Optionally, a container identification corresponding to the topology-related container has a nature which can reflect a level of the topology-related container, thus indicating the topological relation formed between the topology-related container and a further container.

Optionally, the FIB further includes a topology-unrelated small container forwarding entry, where the topology-unrelated small container forwarding entry includes a container identification of a topology-unrelated small container and a third interface corresponding to the container identification of the topology-unrelated small container, and the third interface is an interface which connects the current node to a next hop routing node to reach the topology-unrelated small container.

Forms of a routing table and an FIB according to an embodiment of the present invention will be described hereunder respectively by taking table 1 and table 2 as examples.

Table 1 is a possible form of a routing table of the routing node R12 of the container "cn/gd", and a route entry of the routing table includes three columns, of which the first column is a container identification/content name prefix, the second column is a route attribute of the container identification or the content name prefix, where the route attribute includes global or local. The third column is a next hop routing node through which the current node reaches a container corresponding to the container identification, and optionally, the third column may also be an interface corresponding to the next hop routing node, but the embodiments of the present invention are not limited thereto.

Table 2 is a possible form of an FIB of the routing node R12, a forwarding entry of the FIB includes two columns, of which the first column is a container identification or a content name prefix (prefix), and the second column is an interface corresponding to the container identification or the content name prefix, where the interface corresponding to the container identification is an interface which connects the current node to a next hop routing node to reach a container corresponding to the container identification. In the embodiments of the present invention, one container identification or content name prefix may be corresponding to one or more interfaces, but the embodiments of the present invention are not limited thereto.

**Table 1 Illustration of Form of Routing Table**

| Container identification/ Prefix | Route attribute | Next hop routing node |
|---|---|---|
| hostsrv.com | Local | R5 |
| cn/gd/sz | Local | R121 |
| cn/gd/gz | Local | R13 |
| cn | Global | R1, R2 |
| us | Global | R1, R2 |
| sina.com | Global | R1, R2 |

**Table 2 Illustration of Form of FIB Table**

| Container identification/ Prefix | Interface |
|---|---|
| hostsrv.com | 1 |
| cn/gd/sz | 2, 3 |
| cn/gd/gz | 4 |
| Cn | 5, 6, 7 |
| Us | 5, 6, 7 |
| sina.com | 5, 6, 7 |

It should be noted that, after a routing table is constructed in the above manner, in embodiments of the present invention, whether a container is resolvable may be a property of a container, for instance, a topology-related container is generally unresolvable, while a topology-unrelated small container is generally resolvable, and optionally, container resolvability of some containers may also change according to a certain strategy, for instance, when an access container of a topology-unrelated small container is relatively fixed, the container may be set as an unresolvable container, and when releasing content stored by the container, a content provider may release the container and an access container of the container at the same time, and thus, a user equipment or a routing node may not need to query a resolution system to resolve the container, but the embodiments of the present invention are not limited thereto.

Furthermore, in the embodiments of the present invention, a content name prefix of requested content may match a container identification of an attribute container of the requested content, or may not match the container identification of the attribute container of the content, for instance, the container "hostsrv.com" may store content "hostsrv.com/main.html" that matches the container identification, and may also store content "fanlingyuan.org/blog/2012/June01/main.html" that does not match the container identification. A forwarding process when a content name prefix of X does not match the container identification of its attribute container S (such as hostsrv.com) will be described hereunder by taking an example where the requested content are X. Assuming that an access container of S is T (such as "cn/gd", "cn/beijing"): firstly, when T is relatively fixed, a content request packet may carry container information of X, S and T, and optionally, when a position of S will change, that is, T is not fixed, the content name request packet may also only carry X and S that needs to be resolved (resolvable= yes), T is acquired by a routing node through querying a resolution system, and T is inserted into the content request packet. Before the content request packet enters into T from an external network, the routing is assisted by virtue of T carried in the content request packet, since an FIB of a routing node of the external network does not have a route matching X and S, but definitely includes a route of topology-converged T; after the matching of X and the matching of S fail successively, T will be used definitely to look up the FIB table so as to find a next hop; after entering into T, since T must have a route reaching S, after the content request packet fails to be matched by using X, it will definitely be matched successfully by using S, at this time, the content request packet is routed by virtue of S. After entering into S, then X is used for routing, there must be a prefix matching X in an FIB of S.

It should be understood that, the sequence order in the above embodiments does not mean the execution sequence, and the execution sequence of each process should be determined by function and inner logic thereof, and should not limit an implementation procedure of the embodiments of the present invention.

Thus, a routing and forwarding method according to the embodiments of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

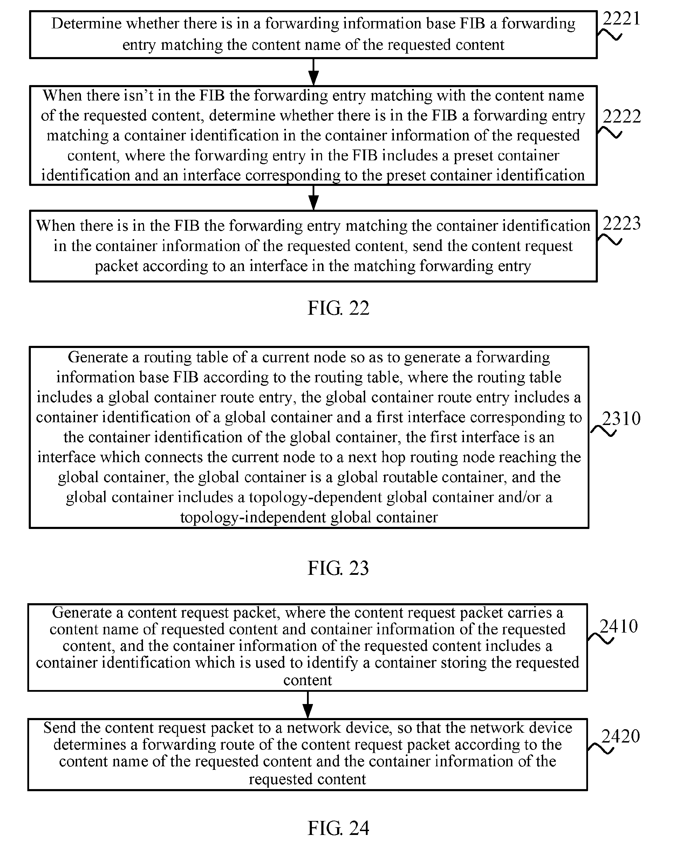

A routing and forwarding method according to the embodiments of the present invention is described above in detail with reference to FIG. 9 to FIG. 20, and a content request processing method according to an embodiment of the present invention will be described hereunder in detail with reference to FIG. 21 and FIG. 22.

FIG. 21 is a schematic flowchart diagram of a method 2100 for processing a content request according to an embodiment of the present invention, and the method may be executed by a routing node. As shown in FIG. 21, the method 2100 includes:

S2110, receive a content request packet, where the content request packet carries a content name of requested content and container information of the requested content, where the container information of the requested content includes a container identification which is used to identify a container storing the requested content, and the container includes at least one routing node, and through one or more routing nodes of the at least one routing node, the requested content can be routed to within the container, or the requested content can be routed to via the container;

S2120, according to the content name of the requested content and the container information of the requested content, determine a forwarding route of the content request packet.

Thus, a method for processing a content request according to the embodiment of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

In an embodiment of the present invention, a container corresponding to a container identification in container information of requested content carried by a content request packet forms a container set of the requested content. A container in the container set is a storage space which is configured to store a group of content.

The container set may only include one container, and may further include two or more than two containers. Specifically, the container set may only include an attribute container of the requested content, the container set may also further include an access container of the attribute container of the requested content, and the container set may further include all containers storing the requested content. The requested content may have one or more attribute containers, correspondingly, the content name of the requested content may be corresponding to one or more attribute containers, and the requested content can be routed to within the attribute container corresponding to the content name of the requested content through one or more routing nodes included in the attribute container. The attribute container may also have one or more access containers, and through one or more routing nodes included in the access container, the requested content can be routed to via the access container, specifically, through the one or more routing nodes of the access container of the attribute container, the content request packet may be routed to the attribute container, and since there is in the attribute container a forwarding entry corresponding to the content name of the requested content, the requested content can be routed to directly in the attribute container through the one or more routing nodes in the attribute container, but the embodiments of the present invention are not limited thereto.

Furthermore, when the container set includes an attribute container of the requested content and an access container of the attribute container, a container in the container set may be an access container of one or more first further containers; and/or one or more second further containers are access containers of the container, where the access container is a container which includes a further container in a topological relation and in which there is a forwarding entry routing the content request packet to the further container. Specifically, when a second container includes a first container and in the second container there is a forwarding entry routing the content request packet to the first container, the second container is an access container of the first container, but the embodiments of the present invention are not limited thereto.

Container information of the requested content includes container information of each container in the container set, where the container information may include a container identification of a container, and optionally, the container information may further include a resolution identification, where the resolution identification is used to identify whether the container is resolvable, but the embodiments of the present invention are not limited thereto.

Optionally, a content name of the requested content and container information of the requested content may form a tree which takes the content name of the requested content as a root node, a child node of the root node represents container information of an attribute container of the requested content, a container corresponding to container information represented by a first node is an access container of a container corresponding to container information represented by a parent node of the first node, and the first node is a further node other than the root node and the child node of the root node in the tree. Optionally, a content name of the requested content and container information of the requested content may also form a directed acyclic graph which takes the content name of the requested content as an entrance vertex, an ending point of a directed edge staring from the entrance vertex represents container information of the attribute container of the requested content, a container corresponding to container information represented by a second vertex in the directed acyclic graph is an access container of a container corresponding to the container information represented by the first vertex, where the first vertex is a further vertex other than the entrance vertex in the directed acyclic graph, and the second vertex is an ending point of a directed edge starting from the first vertex.

Reference may be made to the above embodiments for specific representations of the above two structures, which will not be repeated herein.

Furthermore, optionally, as shown in FIG. 22, in an embodiment of the present invention, S2120, the determining of the forwarding route of the content request packet according to the content name of the requested content and the container information of the requested content includes:

S2221, determine whether there is in a forwarding information base FIB a forwarding entry matching the content name of the requested content;

S2222, when there isn't in the FIB the forwarding entry matching the content name of the requested content, determine whether there is in the FIB a forwarding entry matching a container identification in the container information of the requested content, where the forwarding entry in the FIB includes a preset container identification and an interface corresponding to the preset container identification;

S2223, when there is in the FIB the forwarding entry matching the container identification in the container information of the requested content, send the content request packet according to an interface in the matching forwarding entry.

A routing node firstly matches a prefix of the content name of the requested content with a content name prefix in the forwarding entry of the FIB, when there isn't in the FIB the forwarding entry matching the content name of the requested content, the routing node matches the container identification of each container in a container set of the requested content with a preset container identification in the forwarding entry of the FIB sequentially, and when the container set has at least one container of which a container identification has a matching forwarding entry in the FIB, the routing node sends the content request packet according to an interface in the matching forwarding entry. Reference may be made to the above embodiments for a specific matching method, which will not be repeated herein.

It should be understood that, in the embodiments of the present invention, only a content name of a content request packet is expanded, while a content name in a data packet still uses a name of an ICN system such as an NDN in the prior art, without including any container. Thus, a technical solution of the embodiments of the present invention may retain security of the ICN system such as the existing NDN.

Thus, a method for processing a content request according to the embodiments of the present invention can reduce dependence of routing and forwarding upon a content name by adding container information of content based on the content name to expand attributes of the content in an ICN system, which thus may reduce route entries in a routing table, and provide possibilities for solving problems such as routing scalability and mobility caused by the content name.

FIG. 23 is a schematic flowchart of a method 2300 for establishing a routing table according to an embodiment of the present invention, the method may be executed by any proper device, for instance, may be executed by a routing node, and may also be executed a separate device for establishing a routing table, but the embodiments of the present invention are not limited thereto. For the convenience of description, a routing node executing the method 2300 or a routing node corresponding to a generated routing table will be referred to as a current node hereunder. As shown in FIG. 23, the method 2300 includes:

S2310, generate a routing table of a current node so as to generate a forwarding information base FIB according to the routing table, where the routing table includes a global container route entry, the global container route entry includes a container identification of a global container and a first interface corresponding to the container identification of the global container, where the first interface is an interface which connects the current node to a next hop routing node to reach the global container, the global container is a globally routable container, and the global container includes a topology-related global container and/or a topology-unrelated global container.

Thus, a method for establishing a routing table according to the embodiment of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

Since an FIB is a subset of a routing table, thus an FIB of a current node may be generated according to a routing table generated in the embodiment of the present invention. The FIB may be an FIB in a routing and forwarding method and a method for processing a content request according to the embodiments of the present invention, which is specifically used to: when the current node receives a content request packet, match a content name and a container identification in container information of requested content carried by the content request packet with a forwarding entry in the FIB to determine a forwarding route of the content request packet.

Embodiments of the present invention divide all containers into three types: a topology-related container, a topology-unrelated large container and a topology-unrelated small container. The topology-related container is a container which forms a topological relation with a further container, the topological relation includes: a higher level container including one or more lower level containers, and/or a lower level container being included by one or more higher level containers. When two containers differ in level by one level, the container with a lower level is called as a lower level container of the container with a higher level, whereas the container with the higher level is called as a higher level container of the container with the lower level, the container with the lower level may be provided with an access service by the higher level container thereof, that is, the container with the higher level is an access container of its lower level container.

The global container is a globally routable container, including a topology-related container which has the highest level in the topological relation and a topology-unrelated large container. A further topology-related container other than the topology-related global container in the topological relation is provided with an access container by its higher level container, and the topology-unrelated small container may be provided with an access service by the topology-related container. Correspondingly, routes may be divided into a global route and a local route, where the global route includes a route of a global container, and the local route includes a route of the topology-related container and a route of the topology-unrelated small container. The global route may be diffused throughout the entire network, and the local route may be diffused in a partial region of the network only, that is to say, the global route may be included in routing tables of all routing nodes, and the local route is only included in a routing table of a part of routing nodes. Specifically, the route of the global container may exist in the routing table of any routing node, and routes of a topology-unrelated small container and a further topology-related container other than the global container in the topological relation are only in a routing table of a routing node included by an access container thereof, thus without diffusing out of the access container thereof.

A routing table of a current node may include a global container route entry, where the global container route entry includes a container identification of a global container and a first interface corresponding to the container identification of the global container, where the first interface is an interface which connects the current node to a next hop routing node to reach the global container.

Optionally, a routing table of a current node may further include a local route, that is, may further include a topology-related container route entry and a topology-unrelated small container route entry. Specifically, the routing table further includes a topology-related container route entry used to perform routing based on the topology-related container, and through the topology-related container route entry, a route of a lower level container of a container to which the current node belongs is enabled to serve as an internal route of the current node without diffusing out of the container to which the current node belongs.

Optionally, the topology-related container route entry includes a lower level container identification of the lower level container of the container to which the current node belongs and a second interface corresponding to the lower level container identification, where the second interface is an interface which connects the current node to the lower level container;

Through the topology-related container route entry, a route of a lower level container of a container to which the current node belongs being enabled to serve as an internal route of the current node without diffusing out of the container to which the current node belongs, includes:

through the lower level container identification and the second interface corresponding to the lower level container identification in the topology-related container route entry, a route of a lower level container of a container to which the current node belongs is enabled to serve as an internal route of the current node without diffusing out of the container to which the current node belongs.

Optionally, a container identification corresponding to the topology-related container has a nature which can reflect a level of the topology-related container, thus indicating the topological relation between the topology-related container and a further container.

Optionally, the routing table further includes a topology-unrelated small container route entry, where the topology-unrelated small container route entry includes a container identification of a topology-unrelated small container and a third interface corresponding to the container identification of the topology-unrelated small container, where the third interface is an interface which connects the current node to a next hop routing node to reach the topology-unrelated small container.

Optionally, according to an actual application or a deployment strategy requirement, some topology-unrelated large containers may also be provided with an access service by a topology-related container, at this time, these topology-unrelated large containers server as internal routes of access containers thereof without diffusing out of the access containers thereof, but the embodiments of the present invention are not limited thereto.

Thus, in the embodiments of the present invention, the number of route entries of a core routing table is basically equal to "the number of routes of topology-related global containers" plus "the number of routes of topology-unrelated global containers". Due to the small number of the two types of routes, the size of a total routing table may be even smaller than the number of entries of the core routing table in a nowadays internet router. Thus, the embodiments of the present invention may greatly reduce the number of entries of a core routing table, and effectively solve a problem of routing scalability in an existing ICN system such as an NDN by adding container information of content on the basis of a content name to expand attributes of the content in the ICN system, limiting a route of a topology-unrelated container with few visits to a topology-related container which provides it with an access service, and limiting a route of a lower level container of the topology-related container to the topology-related container.

A routing and forwarding method, a method for processing a content request and a method for establishing a routing table according to the embodiments of the present invention are described above in detail from the perspective of a routing node with reference to FIG. 9 to FIG. 23, and a method for acquiring content according to an embodiment of the present invention will be described hereunder from the perspective of a user equipment with reference to FIG. 24 to FIG. 26.

FIG. 24 is a schematic flowchart of a method 2400 for acquiring content according to an embodiment of the present invention, and the method may be executed by a user equipment. As shown in FIG. 24, the method 2400 includes:

S2410, generate a content request packet, where the content request packet carries a content name of requested content and container information of the requested content, and the container information of the requested content includes a container identification which is used to identify a container storing the requested content;

S2420, send the content request packet to a network device, so that the network device determines a forwarding route of the content request packet according to the content name of the requested content and the container information of the requested content.

Thus, a method for acquiring content according to the embodiment of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

In S2410, in an embodiment of the present invention, a container corresponding to a container identification included in the container information of the requested content carried by the content request packet forms a container set of the requested content. The container in the container set is a storage space which is configured to store a group of content.

The container set may include only one container, and may also include two or more than two containers. Specifically, the container set may only include an attribute container of the requested content, the container set may also further include an access container of the attribute container of the requested content, and the container set may further include all containers storing the requested content. The requested content may have one or more attribute containers, correspondingly, the content name of the requested content may be corresponding to one or more attribute containers, and through one or more routing nodes included in the attribute container, the requested content can be routed to within the attribute container corresponding to the content name of the requested content. The attribute container may also have one or more access containers, through one or more routing nodes included in the access container, the requested content can be routed to via the access container, specifically, through one or more routing nodes of the access container of the attribute container, the content request packet may be routed to the attribute container, and since the attribute container has a forwarding entry corresponding to the content name of the requested content, thus, through one or more routing nodes in the attribute container, the requested content can be routed to in the attribute container directly, but the embodiments of the present invention are not limited thereto.

Furthermore, when the container set includes the attribute container of the requested content and the access container of the attribute container, a container in the container set may be an access container of one or more first further containers; and/or one or more second further containers are access containers of the container; where the access container is a container which includes a further container in a topological relation and in which there is a forwarding entry routing the content request packet to the further container. Specifically, when a second container includes a first container and the second container has a forwarding entry routing the content request packet to the first container, the second container is an access container of the first container, but the embodiments of the present invention are not limited thereto.

The container information of the requested content includes container information of each container in the container set, where the container information may include a container identification of the container, and optionally, the container information may further include a resolution identification, where the resolution identification is used to identify whether the container is resolvable, but the embodiments of the present invention are not limited thereto.

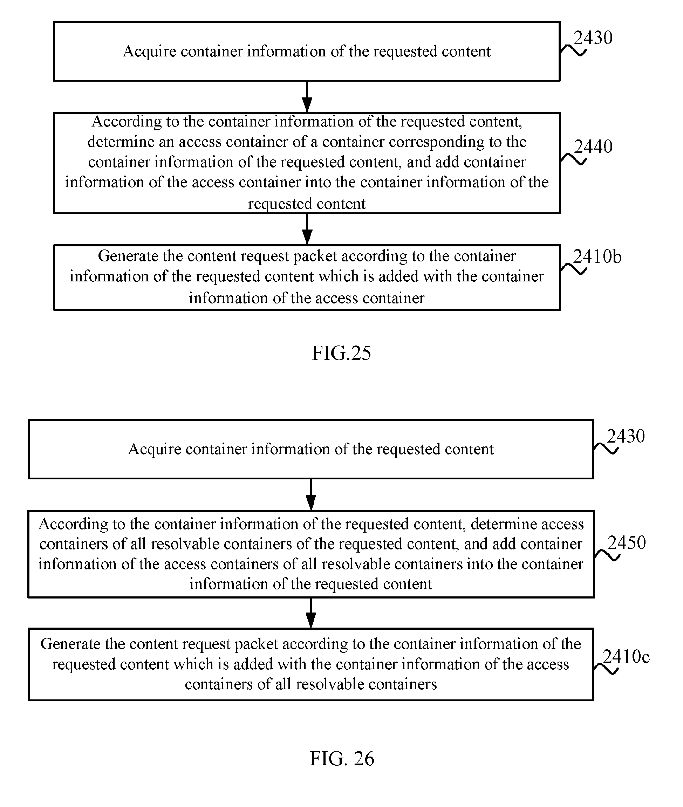

Optionally, in an embodiment of the present invention, as shown in FIG. 25, before step S2410, the method 2400 further includes:

S2430, acquire container information of the requested content;

Correspondingly, S2410, the generating of the content request packet includes:

S2410a, generate the content request packet according to the acquired container information of the requested content.

Thus, a method for acquiring content according to the embodiments of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

Optionally, a container identification in the acquired container information of the requested content may be corresponding to a resolvable container, a user equipment may query a resolution system to resolve the resolvable container to acquire an access container of the resolvable container, and add container information of the access container of the resolvable container into the container information of the requested content. Thus, optionally, as another embodiment, as shown in FIG. 25, the method 2400 further includes:

S2440, according to the container information of the requested content, determine an access container of a container corresponding to the container information of the requested content, and add container information of the access container into the container information of the requested content;

Correspondingly, S2410, the generating of the content request packet includes:

S2410b, generate the content request packet according to the container information of the requested content which is added with the container information of the access container.

Optionally, the user equipment may also continue to determine whether the resolved access container is resolvable, and continue to resolve it when the access container is resolvable to acquire an access container of the access container, and execute as above cyclically till the resolved access container is unresolvable, then a complete resolution of the container corresponding to the container identification in the container information is finished. Thus, optionally, as another embodiment, as shown in FIG. 26, the method 2400 further includes:

S2450, according to the container information of the requested content, determine access containers of all resolvable containers of the requested content, and add container information of the access containers of all resolvable containers into the container information of the requested content;

Correspondingly, S2410, the generating of the content request packet includes:

S2410c, generate the content request packet according to the container information of the requested content which is added with the container information of the access containers of all resolvable containers.

Thus, a method for acquiring content according to the embodiments of the present invention can reduce dependence of routing and forwarding upon a content name by adding container information of content based on the content name to expand attributes of the content in an ICN system, which thus may reduce route entries in a routing table, and provide possibilities for solving problems such as routing scalability and mobility caused by the content name. Moreover, since the user equipment adds the access container of the resolvable container into the content request packet, times of container resolution may be reduced when a routing node forwards the content request packet, or the resolution times may be reduced to zero, thereby accelerating a forwarding rate for the content request packet.

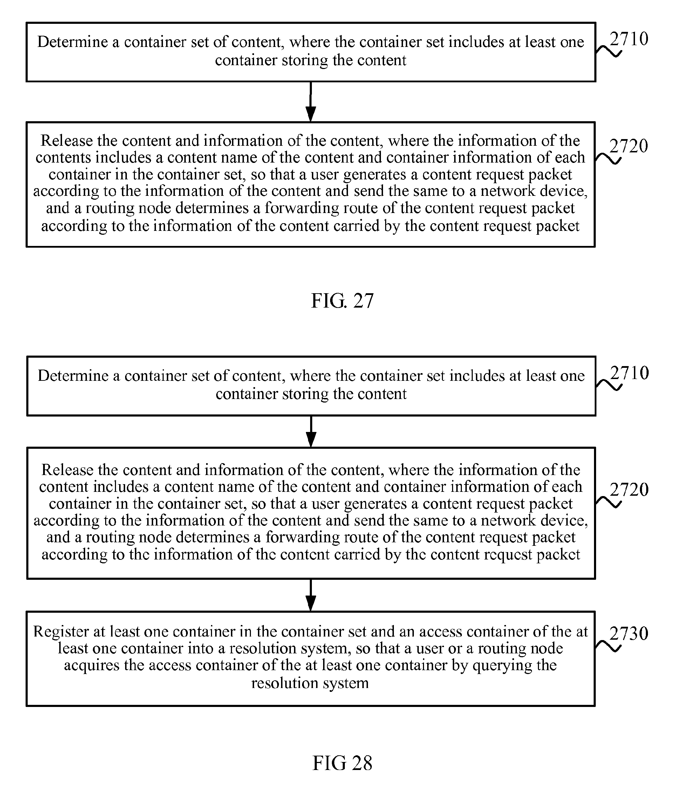

A method for acquiring content according to the embodiments of the present invention is described in detail above from the perspective of a user equipment with reference to FIG. 24 to FIG. 26, and a method for releasing content according to an embodiment of the present invention will be described hereunder from the perspective of a content provider with reference to FIG. 27 to FIG. 28.

FIG. 27 is a schematic flowchart of a method 2700 for releasing content according to an embodiment of the present invention, the method may be executed by any proper device, for instance, may be executed by a content provider, and may also be executed by a separate device for releasing content, but the embodiments of the present invention are not limited thereto. An example is described hereunder where an execution is performed by the content provider, as shown in FIG. 27, the method 2700 includes:

S2710, determine a container set of content and container information of each container in the container set, where the container set includes at least one container storing the content;

S2720, release the content and information of the content, where the information of the content includes a content name of the content and container information of each container in the container set, so that a user equipment generates a content request packet according to the information of the content and send the same to a network device, and a routing node determines a forwarding route of the content request packet according to the information of the content carried by the content request packet.

Thus, a method for releasing content according to the embodiment of the present invention can reduce dependence of routing and forwarding upon a content name by adding container information of content based on the content name to expand attributes of the content in an ICN system, which thus may reduce route entries in a routing table, and provide possibilities for solving problems such as routing scalability and mobility caused by the content name.

In S2710, the container in the container set is a storage space which is configured to store a group of content.

The container set may include only one container, and may also include two or more than two containers. Specifically, the container set may only include an attribute container of the requested content, where the requested content may have one or more attribute containers, correspondingly, the content name of the requested content may be corresponding to one or more attribute containers, and through one or more routing nodes included in the attribute container, the requested content can be routed to within the attribute container corresponding to the content name of the requested content. The attribute container may also have one or more access containers, and through one or more routing nodes included in the access container, the requested content can be routed to via the access container, specifically, through one or more routing nodes of the access container of the attribute container, the content request packet may be routed to the attribute container, and since the attribute container has a forwarding entry corresponding to the content name of the requested content, thus, through one or more routing nodes in the attribute container, the requested content can be routed to in the attribute container directly, but the embodiments of the present invention are not limited thereto.

Optionally, when one or more access containers of the attribute container may remain unchanged for a long time, the container set may also further include an access container of the attribute container of the requested content, and optionally, the container set may also include all containers storing the requested content. The container information of the requested content includes container information of each container in the container set, where the container information may include a container identification of the container.

However, when an access container of at least one container in the container set changes frequently, a content provider may not include the access container of at least one container in the container set so as to ensure durability of the container set. Moreover, the content provider may also register a corresponding relationship between the at least one container and the access container thereof into a resolution system, so that the at least one container is set as a resolvable container, the at least one container may notify the resolution system of a change of its access container in real time, and the access container of the at least one container is acquired by a user equipment and a routing node querying the resolution system. In this way, not only durability of the container set of the content is ensured, but also flexibility of content routing is retained. Thus, optionally, as shown in FIG. 28, the method 2700 further includes:

S2730, register at least one container in the container set and an access container of the at least one container into a resolution system, so that a user or a routing node acquires the access container of the at least one container by querying the resolution system.

At this time, optionally, the container information may also further include a resolution identification, and the resolution identification is used to identify whether the container is resolvable, but the embodiments of the present invention are not limited thereto.

Thus, a method for releasing content according to the embodiments of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

It should be understood that, the sequence order of the above processes does not mean the execution sequence, and the execution sequence of each process should be determined by function and inner logic thereof, and should not limit an implementation procedure of the embodiments of the present invention.

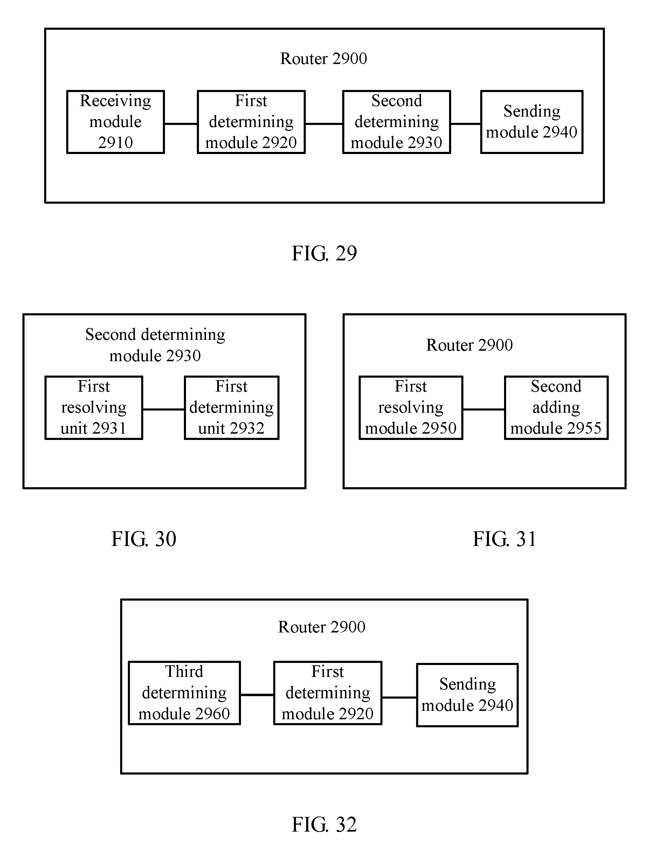

A routing and forwarding method, a method for processing a content request, a method for establishing a routing table, a method for acquiring content and a method for releasing content according to the embodiments of the present invention are described above in detail with reference to FIG. 9 to FIG. 28, whereas a router, a device for establishing a routing table, a user equipment and a device for releasing content according to the embodiments of the present invention will be described hereunder in detail with reference to FIG. 29 to FIG. 48.

FIG. 29 is a schematic block diagram of a router 2900 according to an embodiment of the present invention, including:

a receiving module 2910, configured to receive a content request packet, where the content request packet carries a content name of requested content and container information of the requested content, and the container information of the requested content includes a container identification which is used to identify a container storing the requested content;

a first determining module 2920, configured to determine whether there is in a forwarding information base FIB a forwarding entry matching the content name of the requested content carried in the content request packet received by the receiving module 2910;

a second determining module 2930, configured to: when the first determining module 2920 determines that there isn't in the FIB the forwarding entry matching the content name of the requested content, determine whether there is in the FIB a forwarding entry matching a container identification in container information of the requested content, where the forwarding entry in the FIB includes a preset container identification and an interface corresponding to the preset container identification;
a sending module 2940, configured to: when the second determining module 2930 determines that there is in the FIB the forwarding entry matching the container identification in the container information of the requested content, send the content request packet according to an interface in the matching forwarding entry.

Thus, a router according to the embodiment of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

In an embodiment of the present invention, the content request packet received by the receiving module 2910 may carry container information of only one container, and may also carry container information of two or more than two containers, but the embodiments of the present invention are not limited thereto.

The container is a storage space which is configured to store a group of content. The group of content includes one or more pieces of content. The container includes at least one routing rode, and through one or more routing nodes of the at least one routing node, the requested content can be routed to within the container, or the requested content can be routed to via the container. The container is corresponding to one or more content names, the content name of the requested content is corresponding to one or more attribute containers, the requested content can be routed to in the attribute container corresponding to the content name of the requested content. The container is an access container of one or more first further containers; and/or one or more second further containers are access containers of the container; where the access container is a container which includes a further container in a topological relation and in which there is a forwarding entry routing the content request packet to the further container. Specifically, when a second container includes a first container and the second container has a forwarding entry routing the content request packet to the first container, the second container is an access container of the first container.

In an embodiment of the present invention, container information of a container includes a container identification of the container, and optionally, the container information further includes a resolution identification corresponding to the container identification, where the resolution identification is used to identify whether a container corresponding to the container identification is resolvable; as shown in FIG. 30, the second determining module 2930 includes:
a first resolving unit 2931, configured to acquire container identifications of access containers of all resolvable containers of the requested content through resolution according to the resolution identification;
a first determining unit 2932, configured to match the container identification in the container information of the requested content and container identifications of access containers of all resolvable containers of the requested content acquired by the first resolving unit 2931 through the resolution with a preset container identification in the FIB to determine whether there is in the FIB a forwarding entry matching the container identification in the container information of the requested content and the container identifications of the access containers.

Optionally, the router further includes:
a first adding module 2945, configured to add container information of the access containers of all resolvable containers of the requested content acquired by the first resolving unit 2931 through the resolution into the container information of the requested content.

Thus, a router according to the embodiments of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

Optionally, as another embodiment, the container information further includes a resolution identification corresponding to the container identification, where the resolution identification is used to identify whether a container corresponding to the container identification is resolvable; as shown in FIG. 31, the router 2900 further includes:
a first resolving module 2950, configured to acquire a container identification of the access container of the container through a resolution according to the resolution identification when the second determining module 2940 determines that there isn't in the FIB the forwarding entry matching the container identification in the container information of the requested content;
the second determining module 2930 is also configured to match the container identification of the access container acquired by the first resolving module 2950 through the resolution with the preset container identification in the FIB to determine whether there is in the FIB a forwarding entry matching the container identification of the access container acquired through the resolution.

Optionally, as another embodiment, as shown in FIG. 31, the router 2900 further includes:
a second adding module 2955, configured to add container information of the access container acquired by the first resolving module 2950 through the resolution into the container information of the requested content.

Optionally, as another embodiment, the forwarding entry in the FIB includes a content name prefix and an interface corresponding to the content name prefix, correspondingly, the first determining module 2920 is specifically configured to determine whether there is in the FIB a forwarding entry matching the content name of the requested content according to whether a prefix of the content name of the requested content matches a content name prefix of the forwarding entry in the FIB;
the sending module 2940 is also configured to send the content request packet according to an interface in the matching forwarding entry when the first determining module 2920 determines that there is in the FIB the forwarding entry matching the content name of the requested content.

Optionally, as another embodiment, as shown in FIG. 32, the router 2900 further includes:
a third determining module 2960, configured to determine whether there is in a content store CS content matching the content name of the requested content before the first determining module 2920 determines whether there is in the FIB a forwarding entry matching the content name of the requested content;
the sending module 2940 is also configured to send the matching content to a sending end of the content request packet when the third determining module 2960 determines there is in the CS the content matching the content name of the requested content;
the first determining module 2920 is also configured to perform the step of determining whether there is in the FIB the forwarding entry matching the content name of the requested content when the third determining module 2960 determines there isn't in the CS the content matching the content name of the requested content.

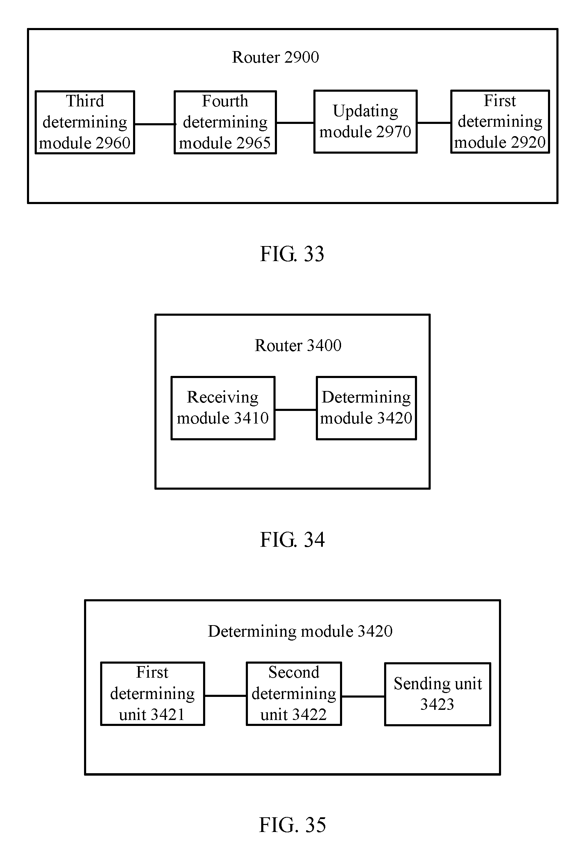

Optionally, as another embodiment, as shown in FIG. 33, the router 2900 further includes:
a fourth determining module 2965, configured to: when the third determining module 2960 determines there isn't in the CS the content matching the content name of the requested content, determine whether there is in a pending information table PIT a PIT entry matching the content name of the requested content;
an updating module 2970, configured to: when the fourth determining module 2965 determines there is in the PIT the PIT entry matching the content name of the requested content, add an interface corresponding to a sending end of the content request packet into the matching PIT entry;
the first determining module 2920 is also configured to: when the fourth determining module 2965 determines there isn't in the PIT the PIT entry matching the content name of the requested content, perform the step of determining whether there is in the FIB the forwarding entry matching the content name of the requested content.

Optionally, as another embodiment, the sending module 2940 is also configured to: when there isn't in the FIB the forwarding entry matching the container identification in the container information of the requested content, send the content request packet according to a default interface; or
the router 2900 further includes:
a discarding module 2975, configured to: when there isn't in the FIB the forwarding entry matching the container identification in the container information of the requested content, discard the content request packet.

Thus, a router according to the embodiments of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

Embodiments of the present invention divide all containers into three types: a topology-related container, a topology-unrelated large container and a topology-unrelated small container. The topology-related container is a container which forms a topological relation with a further container, the topological relation includes: a higher level container including one or more lower level containers, and/or a lower level container being included by one or more higher level containers. When two containers differ in level by one level, the container with a lower level is called as a lower level container of the container with a higher level, whereas the container with the higher level is called as a higher level container of the container with the lower level, the container with the lower level may be provided with an access service by the higher level container thereof, that is, the container with the higher level is an access container of the lower level container thereof.

The global container is a globally routable container, including a topology-related container which has the highest level in the topological relation and a topology-unrelated large container. A further topology-related container other than the topology-related global container in the topological relation is provided with an access container by a higher level container, and the topology-unrelated small container may be provided with an access service by the topology-related container. Correspondingly, the route of the global container may be in a routing table of any routing node, and routes of a topology-unrelated small container and a further topology-related container other than the global container in the topological relation are only in a routing table of a routing node included by an access container thereof, thus without diffusing out of the access container thereof.

Optionally, in an embodiment of the present invention, the FIB includes a global container forwarding entry, where the global container forwarding entry includes a container identification of a global container and a first interface corresponding to the container identification of the global container, the first interface is an interface which connects the current node to a next hop routing node to reach the global container, the global container is a globally routable container, and the global container includes a topology-related global container and/or a topology-unrelated global container.

Optionally, the FIB further includes a topology-related container forwarding entry used to perform routing based on the topology-related container, and through the topology-related container forwarding entry, a route of a lower level container of a container to which the current node belongs is enabled to serve as an internal route of the current node without diffusing out of the container to which the current node belongs;
where the topology-related container is a container which forms a topological relation with a further container, and the topological relation includes: a higher level container including one or more lower level containers, and/or a lower level container being included by one or more higher level containers.

Optionally, the topology-related container forwarding entry includes a container identification of the lower level container of the container to which the current node belongs and a second interface corresponding to the container identification of the lower level container, where the second interface is an interface which connects the current node to the lower level container; correspondingly, through the topology-related container forwarding entry, the route of the lower level container of the container to which the current node belongs being enabled to serve as the internal route of the current node without diffusing out of the container to which the current node belongs , includes:
through the container identification of the lower level container and the second interface corresponding to the container identification of the lower level container in the topology-related container forwarding entry, the route of the lower level container of the container to which the current node belongs is enabled to serve as the internal route of the current node without diffusing out of the container to which the current node belongs.

Optionally, a container identification corresponding to the topology-related container has a nature which can reflect a level of the topology-related container, thus indicating the topological relation formed between the topology-related container and a further container.

Optionally, the FIB further includes a topology-unrelated small container forwarding entry, where the topology-unrelated small container forwarding entry includes a container identification of a topology-unrelated small container and a third interface corresponding to the container identification of the topology-unrelated small container, and the third interface is an interface which connects the current node to a next hop routing node to reach the topology-unrelated small container.

Thus, the embodiments of the present invention may greatly reduce the number of entries of a core routing table, and effectively solve a problem of routing scalability in an existing ICN system such as an NDN by adding container information of content on the basis of a content name to expand attributes of the content in the ICN system, limiting a route of a topology-unrelated small container to a topology-related container which provides it with an access service, and limiting a route of a lower level container of the topology-related container to the topology-related container.

The router 2900 according to the embodiments of the present invention may be corresponding to a device in the routing and forwarding method according to the embodiments of the present invention, and the above described and other operations and/or functions of each module in the router 2900 aim to respectively implement corresponding processes of the methods in FIG. 9 to FIG. 20, which will not be repeated herein in order to avoid redundancy.

Thus, a router according to the embodiments of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

FIG. 34 is a schematic block diagram of a router 3400 according to another embodiment of the present invention, as shown in FIG. 34, the router 3400 includes:
a receiving module 3410, configured to receive a content request packet, where the content request packet carries a content name of requested content and container information of the requested content, and the container information of the requested content includes a container identification which is used to identify a container storing the requested content, the container includes at least one routing node, and through one or more routing nodes of the at least one routing node, the requested content can be routed to within the container, or the requested content can be routed to via the container;
a determining module 3420, configured to determine a forwarding route of the content request packet according to the content name of the requested content and the container information of the requested content carried in the content request packet received by the receiving module 3410.

Thus, a router according to the embodiment of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

In an embodiment of the present invention, the content request packet may carry container information of only one container, and may also carry container information of two or more than two containers, but the embodiments of the present invention are not limited thereto. The container information of the container includes a container identification of the container, and optionally, the container information of the container may also further include a resolution identification of the container, but the embodiments of the present invention are not limited thereto.

The container is a storage space which is configured to store a group of content. Optionally, a content name of the requested content is corresponding to one or more attribute containers, an attribute container of the requested content is a container which can route to the requested content directly, and there is a forwarding entry corresponding to the content name of the requested content in the attribute container.

Optionally, the container is an access container of one or more first further containers; and/or one or more second further containers are access containers of the container; where the access container is a container which includes a further container in a topological relation and in which there is a forwarding entry routing the content request packet to the further container. Specifically, when a second container includes a first container and a forwarding entry routing the content request packet to the first container exists in the second container, the second container is an access container of the first container.

Optionally, in an embodiment of the present invention, as shown in FIG. 35, the determining module 3420 includes:
a first determining unit 3421, configured to determine whether there is in a forwarding information base FIB a forwarding entry matching the content name of the requested content;
a second determining unit 3422, configured to: when the first determining unit 3421 determines that there isn't in the FIB the forwarding entry matching the content name of the requested content, determine whether there is in the FIB a forwarding entry matching a container identification in container information of the requested content, where the forwarding entry in the FIB includes a preset container identification and an interface corresponding to the preset container identification;
a sending unit 3423, configured to: when the second determining unit 3422 determines that there is in the FIB the forwarding entry matching the container identification in the container information of the requested content, send the content request packet according to an interface in the matching forwarding entry.

Optionally, a content name of the requested content and container information of the requested content form a tree taking the content name of the requested content as a root node, a child node of the root node represents container information of an attribute container of the requested content, and a container corresponding to container information represented by a first node is an access container of a container corresponding to container information represented by a parent node of the first node, where the first node is a further node other than a root node and a child node of the root node in the tree.

Optionally, as another embodiment, a content name of the requested content and container information of the requested content form a directed acyclic graph taking the content name of the requested content as an entrance vertex, an ending point of a directed edge starting from the entrance vertex represents container information of an attribute container of the requested content, a container corresponding to container information represented by a second vertex in the directed acyclic graph is an access container of a container corresponding to container information represented by a first vertex, where the first vertex is a further vertex other than the entrance vertex in the directed acyclic graph, and the second vertex is an ending point of a directed edge starting from the first vertex.

Correspondingly, in the content request packet, the tree structure or the directed acyclic graph structure may be indicated as a text format, but the embodiments of the present are not limited thereto.

The router 3400 according to the embodiments of the present invention may be corresponding to a router in the method for processing a content request according to the embodiments of the present invention, and the above described and other operations and/or functions of each module in the router 3400 aim to respectively implement corresponding processes of the methods in FIG. 21 and FIG. 22, which will not be repeated herein in order to avoid redundancy.

Thus, a router according to the embodiments of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

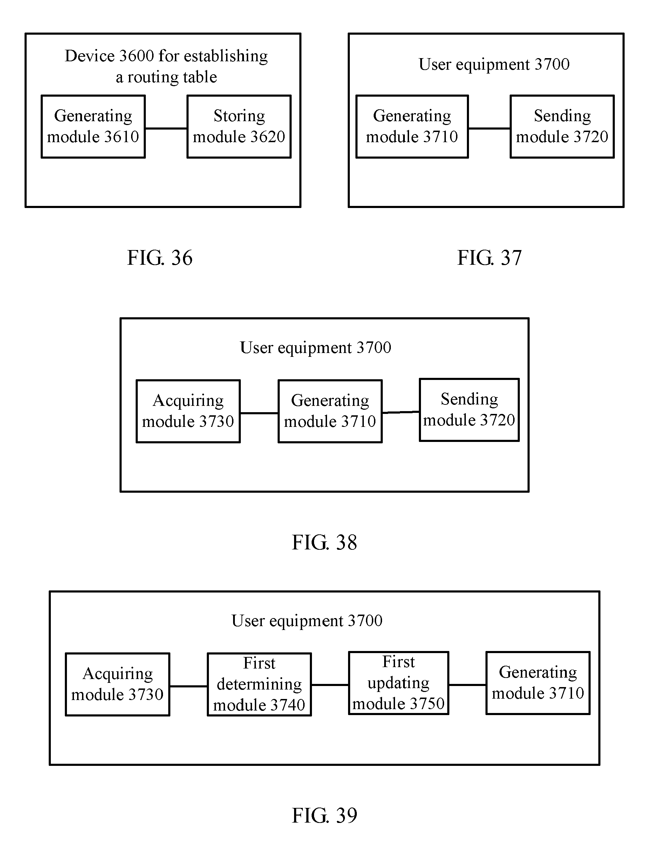

FIG. 36 is a schematic block diagram of a device 3600 for establishing a routing table according to an embodiment of the present invention. The device may be a router, and may also be a separate device in a network, but the embodiments of the present invention are not limited thereto. As shown in FIG. 36, the device 3600 includes:
a generating module 3610, configured to generate a routing table of a current node so as to generate a forwarding information base FIB according to the routing table, where the routing table includes a global container route entry, and the global container route entry includes a container identification of a global container and a first interface corresponding to the container identification of the global container, the first interface is an interface which connects the current node to a next hop routing node to reach the global container, the global container is a globally routable container, and the global container includes a topology-related global container and/or a topology-unrelated global container;
a storing module 3620, configured to store the routing table generated by the generating module 3610.

Since the FIB is a subset of the routing table, thus, the FIB of the current node may be generated according to the routing table generated in the embodiment of the present invention. The FIB may be an FIB in a routing and forwarding method and a method for processing a content request according to the embodiments of the present invention, which is specifically used to: when the current node receives a content request packet, match a content name and a container identification in container information of requested content carried by the content request packet with a forwarding entry in the FIB to determine a forwarding route of the content request packet.

Embodiments of the present invention divide all containers into three types: a topology-related container, a topology-unrelated large container and a topology-unrelated small container. The topology-related container is a container which forms a topological relation with a further container, and the topological relation includes: a higher level container including one or more lower level containers, and/or a lower level container being included by one or more higher level containers. When two containers differ in level by one level, the container with a lower level is called as a lower level container of the container with a higher level, whereas the container with the higher level is called as a higher level container of the container with the lower level, the container with the lower level may be provided with an access service by the higher level container thereof, that is, the container with the higher level is an access container of the lower level container thereof.

The global container is a globally routable container, including a topology-related container which has the highest level in the topological relation and a topology-unrelated large container. A further topology-related container other than the topology-related global container in the topological relation is provided with an access container by a higher level container thereof, and the topology-unrelated small container may be provided with an access service by the topology-related container. Correspondingly, the route of the global container may be in a routing table of any routing node, and routes of a topology-unrelated small container and a further topology-related container other than the global container in the topological relation are only in a routing table of a routing node included by an access container thereof, thus without diffusing out of the access container thereof.

A routing table of a current node may include a global container route entry, where the global container route entry includes a container identification of a global container and a first interface corresponding to the container identification of the global container, and the first interface is an interface which connects the current node to a next hop routing node to reach the global container.

Optionally, the routing table of the current node may further include a local route, that is, may further include a topology-related container route entry and a topology-unrelated small container route entry. Specifically, the routing table further includes a topology-related container route entry which is used to perform routing based on the topology-related container, and through the topology-related container route entry, a route of a lower level container of a container to which the current node belongs is enabled to serve as an internal route of the current node without diffusing out of the container to which the current node belongs.

Optionally, the topology-related container route entry includes a lower level container identification of the lower level container of the container to which the current node belongs and a second interface corresponding to the lower level container identification, and the second interface is an interface which connects the current node to the lower level container;
through the topology-related container route entry, a route of a lower level container of a container to which the current node belongs being enabled to serve as an internal route of the current node without diffusing out of the container to which the current node belongs, includes:
through the lower level container identification and the second interface corresponding to the lower level container identification in the topology-related container route entry, the route of the lower level container of the container to which the current node belongs is enabled to serve as the internal route of the current node without diffusing out of the container to which the current node belongs.

Optionally, a container identification corresponding to the topology-related container has a nature which can reflect a level of the topology-related container, thus indicating the topological relation between the topology-related container and a further container.

Optionally, the routing table further includes a topology-unrelated small container route entry, where the topology-unrelated small container route entry includes a container identification of a topology-unrelated small container and a third interface corresponding to the container identification of the topology-unrelated small container, and the third interface is an interface which connects the current node to a next hop routing node to reach the topology-unrelated small container.

Optionally, according to an actual application or a deployment strategy requirement, some topology-unrelated large containers may also be provided with an access service by a topology-related container, and at this time, these topology-unrelated large containers server as internal routes of access containers thereof without diffusing out of the access containers thereof, but the embodiments of the present invention are not limited thereto.

Thus, in the embodiments of the present invention, the number of route entries of a core routing table is basically equal to "the number of routes of topology-related global containers" plus "the number of routes of topology-unrelated global containers". Due to the small number of the two types of routes, the size of a total routing table may be even smaller than the number of entries of the core routing table in a nowadays internet router. Thus, the embodiments of the present invention may greatly reduce the number of entries of the core routing table, and effectively solve a problem of routing scalability in an existing ICN system such as an NDN by adding container information of content on the basis of a content name to expand attributes of the content in the ICN system, limiting a route of a topology-unrelated container with few visits to a topology-related container which provides it with an access service, and limiting a route of a lower level container of the topology-related container to the topology-related container.

The device 3600 for establishing the routing table according to the embodiments of the present invention may be corresponding to a device in the method for establishing the routing table according to the embodiments of the present invention, and the above described and other operations and/or functions of each module in the device 3600 for establishing the routing table aim to respectively implement corresponding processes of the methods in FIG. 32 and FIG. 33, which will not be repeated herein in order to avoid redundancy.

FIG. 37 is a schematic block diagram of a user equipment 3700 according to an embodiment of the present invention, including:
a generating module 3710, configured to generate a content request packet, where the content request packet carries a content name of requested content and container information of the requested content, and the container information of the requested content includes a container identification which is used to identify a container storing the requested content;
a sending module 3720, configured to send the content request packet generated by the generating module 3710 to a network device, so that the network device determines a forwarding route of the content request packet according to the content name of the requested content and the container information of the requested content.

Thus, a user equipment according to the embodiment of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

Optionally, in an embodiment of the present invention, the content name of the requested content is corresponding to one or more attribute containers, and the attribute container of the requested content is a container which can route to the requested content directly.

Optionally, the container includes at least one routing node, and through one or more routing nodes of the at least one routing node, the requested content can be routed to within the container, or the requested content can be routed to via the container.

Optionally, the container information further includes a resolution identification corresponding to the container identification, and the resolution identification is used to identify whether a container corresponding to the container identification is resolvable.

Optionally, as another embodiment, as shown in FIG. 38, the user equipment 3700 further includes:
an acquiring module 3730, configured to acquire container information of the requested content before the generating module generates the content request packet;
the generating module 3710 is specifically configured to generate the content request packet according to the container information of the requested content acquired by the acquiring module 3730.

Optionally, as another embodiment, as shown in FIG. 39, the user equipment 3700 further includes:
a first determining module 3740, configured to determine an access container of the container according to the container information of the requested content acquired by the acquiring module 3730;
a first updating module 3750, configured to add container information of the access container determined by the first determining module 3740 into the container information of the requested content;
the generating module 3710 being specifically configured to generate the content request packet according to the container information of the requested content updated by the first updating module 3750.

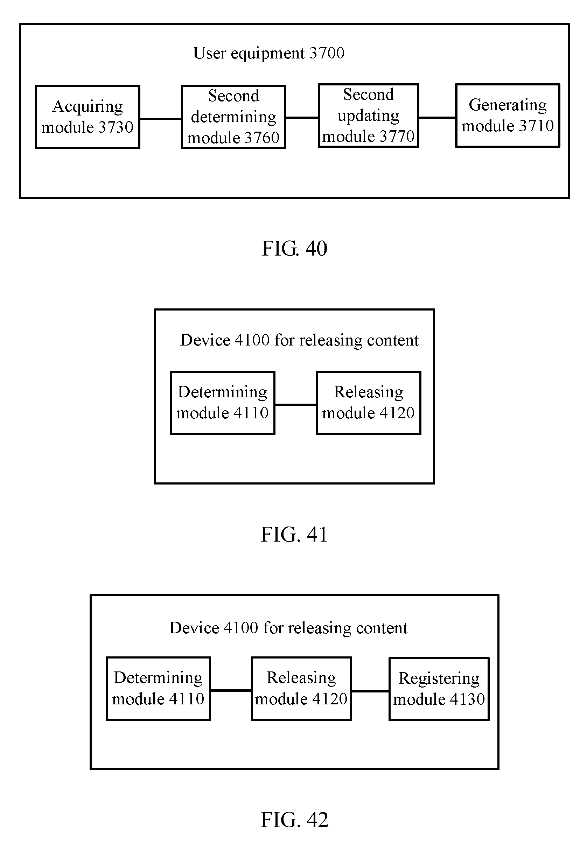

Optionally, as another embodiment, as shown in FIG. 40, the user equipment 3700 further includes:
a second determining module 3760, configured to determine access containers of all resolvable containers of the requested content according to the container information of the requested content acquired by the acquiring module 3730;
a second updating module 3770, configured to add container information of the access containers of all resolvable containers determined by the second determining module 3760 into the container information of the requested content;
the generating module 3710 being specifically configured to generate the content request packet according to the container information of the requested content updated by the second updating module 3770.

The user equipment 3700 according to the embodiments of the present invention may be corresponding to a device in the method for acquiring content according to the embodiments of the present invention, and the above described and other operations and/or functions of each module in the user equipment 3700 aim to respectively implement corresponding processes of the methods in FIG. 24 to FIG. 26, which will not be repeated herein in order to avoid redundancy.

Thus, the user equipment according to the embodiments of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

FIG. 41 is a schematic block diagram of a device 4100 for releasing content according to an embodiment of the present invention. As shown in FIG. 41, the device 4100 includes:
a determining module 4110, configured to determine a container set of content and container information of each container in the container set, where the container set includes at least one container storing the content;
a releasing module 4120, configured to release the content and information of the content, where the information of the content includes a content name of the content and the container information of each container in the container set determined by the determining module 4110, so that a user generates a content request packet according to the information of the content and send the same to a network device, and a routing node determines a forwarding route of the content request packet according to the information of the content carried in the content request packet.

Thus, a device for releasing content according to the embodiment of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

Optionally, in an embodiment of the present invention, the container information includes a container identification.

Optionally, the container includes at least one routing node, and through one or more routing nodes of the at least one routing node, the requested content can be routed to within the container, or the requested content can be routed to via the container.

Optionally, the content name of the content is corresponding to one or more attribute containers, and the attribute container of the requested content is a container which can route to the requested content directly.

Optionally, as another embodiment, as shown in FIG. 42, the device 4100 further includes:
a registering module 4130, configured to register at least one container in the container set and an access container of the at least one container into a resolution system, so that a user or a routing node acquires the access container of the at least one container by querying the resolution system.

Optionally, the container information includes: a container identification and a resolution identification, where the resolution identification is used to identify whether a container is resolvable.

The device 4100 for releasing content according to the embodiments of the present invention may be corresponding to a device in the method for acquiring content according to the embodiments of the present invention, and the above described and other operations and/or functions of each module in the device 4100 for releasing content aim to respectively implement corresponding processes of the methods in FIG. 27 to FIG. 28, which will not be repeated herein in order to avoid redundancy.

Thus, the device for releasing content according to the embodiments of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

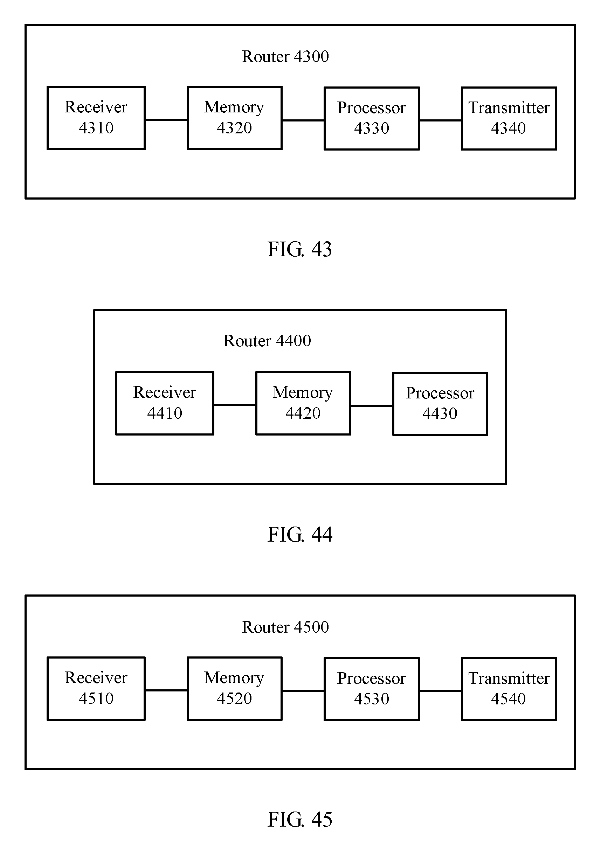

FIG. 43 is a schematic block diagram of a router 4300 according to an embodiment of the present invention. As shown in FIG. 43, the router 4300 includes: a receiver 4310, a memory 4320, a processor 4330, e.g., a CPU, and a transmitter 4340. The memory 4320 is configured to store an instruction for a forwarding engine, where the forwarding engine may include a forwarding information base FIB, may also include a CS and the FIB, and may also include the CS, a PIT and the FIB. The processor 4330 is configured to execute the instruction for the forwarding engine stored by the memory 4320 .

The receiver 4310 is configured to receive a content request packet, where the content request packet carries a content name of requested content and container information of the requested content, and the container information of the requested content includes a container identification which is used to identify a container storing the requested content;

The processor 4330 is configured to: determine whether there is in the forwarding information base FIB a forwarding entry matching the content name of the requested content carried in the content request packet received by the receiving module 4310; and when there isn't in the FIB the forwarding entry matching the content name of the requested content, determine whether there is in the FIB a forwarding entry matching a container identification in container information of the requested content, where the forwarding entry in the FIB includes a preset container identification and an interface corresponding to the preset container identification;

The transmitter 4340 is configured to: when the processor 4330 determines that there is in the FIB the forwarding entry matching the container identification in the container information of the requested content, send the content request packet according to an interface in the matching forwarding entry.

Optionally, in an embodiment of the present invention, the content request packet received by the receiving module 4310 may carry container information of only one container, and may also carry container information of two or more than two containers, but the embodiments of the present invention are not limited thereto.

The container is a storage space which is configured to store a group of content. The container includes at least one routing rode, and through one or more routing nodes of the at least one routing node, the requested content can be routed to within the container, or the requested content can be routed to via the container. A content name of the requested content is corresponding to one or more attribute containers, the attribute container of the requested content is a container which can route to the requested content directly. The container is an access container of one or more first further containers; and/or one or more second further containers are access containers of the container; where the access container is a container which includes a further container in a topological relation and in which there is a forwarding entry routing the content request packet to the further container. Specifically, when a second container includes a first container and there is a forwarding entry routing the content request packet to the first container in the second container, the second container is an access container of the first container.

In the embodiments of the present invention, container information of a container includes a container identification of the container, and optionally, the container information further includes a resolution identification corresponding to the container identification, where the resolution identification is used to identify whether a container corresponding to the container identification is resolvable; correspondingly, the processor 4330 is specifically configured to: acquire container identifications of access containers of all resolvable containers of the requested content through resolution according to the resolution identification; and match the container identification in the container information of the requested content and the container identifications of the access containers of all resolvable containers of the requested content acquired through the resolution with a preset container identification in the FIB to determine whether there is in the FIB a forwarding entry matching the container identification in the container information of the requested content and the container identifications of the access containers.

Optionally, as another embodiment, the processor 4330 is also configured to add container information of the access containers of all resolvable containers of the requested content into the container information of the requested content.

Optionally, as another embodiment, the processor 4330 is also configured to: when there isn't in the FIB a forwarding entry matching the container identification in the container information of the requested content, acquire a container identification of an access container of the container through resolution according to the resolution identification; and match the container identification of the access container acquired through the resolution with the preset container identification in the FIB to determine whether there is in the FIB a forwarding entry matching the container identification of the access container acquired through the resolution.

Optionally, as another embodiment, a forwarding entry in the FIB includes a content name prefix and an interface corresponding to the content name prefix; the processor 4330 is also configured to: determine whether there is in the FIB a forwarding entry matching the content name of the requested content according to whether a prefix of the content name of the requested content matches the content name prefix in the forwarding entry of the FIB;

The transmitter 4340 is also configured to: when the processor 4330 determines that there is in the FIB the forwarding entry matching the content name of the requested content, send the content request packet according to an interface in the matching forwarding entry.

Optionally, as another embodiment, the forwarding engine may also further include a content store CS, the processor 4330 is also configured to: before the determining whether there is in the FIB the forwarding entry matching the content name of the requested content, determine whether there is in the CS content matching the content name of the requested content;

The transmitter 4340 is also configured to: when the processor 4330 determines there is in the CS the content matching the content name of the requested content, send the matching content to a sending end of the content request packet;

The processor 4330 is also configured to: when there isn't in the CS the content matching the content name of the requested content, perform the step of determining whether there is in the FIB the forwarding entry matching the content name of the requested content.

Optionally, as another embodiment, the forwarding engine may also further include a CS table and a PIT table, the processor 4330 is specifically configured to: when there isn't in the CS content matching the content name of the requested content, determine whether there is in the pending information table PIT a PIT entry matching the content name of the requested content; and when there is in the PIT the PIT entry matching the content name of the requested content, add an interface corresponding to a sending end of the content request packet into the matching PIT entry; and when there isn't in the PIT the PIT entry matching the content name of the requested content, perform the step of determining whether there is in the FIB the forwarding entry matching the content name of the requested content.

Optionally, as another embodiment, the transmitter 4340 is also configured to: when there isn't in the FIB a forwarding entry matching the container identification in the container information of the requested content, send the content request packet according to a default interface;

Or, the processor 4330 is also configured to: when there isn't in the FIB a forwarding entry matching the container identification in the container information of the requested content, discard the content request packet.

Thus, a router according to the embodiments of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

Optionally, in an embodiment of the present invention, the FIB includes a global container forwarding entry, where the global container forwarding entry includes a container identification of a global container and a first interface corresponding to the container identification of the global container, the first interface is an interface which connects the current node to a next hop routing node to reach the global container, the global container is a globally routable container, and the global container includes a topology-related global container and/or a topology-unrelated global container.

Optionally, the FIB further includes a topology-related container forwarding entry which is used to perform routing based on the topology-related container, and through the topology-related container forwarding entry, a route of a lower level container of a container to which the current node belongs is enabled to serve as an internal route of the current node without diffusing out of the container to which the current node belongs;

The topology-related container is a container which forms a topological relation with a further container, and the topological relation includes: a higher level container including one or more lower level containers, and/or a lower level container being included by one or more higher level containers.

Optionally, the topology-related container forwarding entry includes a container identification of the lower level container of the container to which the current node belongs and a second interface corresponding to the container identification of the lower level container, where the second interface is an interface which connects the current node to the lower level container; correspondingly, through the topology-related container forwarding entry, the route of the lower level container of the container to which the current node belongs being enabled to serve as the internal route of the current node without diffusing out of the container to which the current node belongs, includes:

through the container identification of the lower level container and the second interface corresponding to the container identification of the lower level container in the topology-related container forwarding entry, the route of the lower level container of the container to which the current node belongs is enabled to serve as the internal route of the current node without diffusing out of the container to which the current node belongs.

Optionally, a container identification corresponding to the topology-related container has a nature which can reflect a level of the topology-related container, thus indicating the topological relation formed between the topology-related container and a further container.

Optionally, the FIB further includes a topology-unrelated small container forwarding entry, where the topology-unrelated small container forwarding entry includes a container identification of a topology-unrelated small container and a third interface corresponding to the container identification of the topology-unrelated small container, and the third interface is an interface which connects the current node to a next hop routing node to reach the topology-unrelated small container.

The router 4300 according to the embodiments of the present invention may be corresponding to a device in the routing and forwarding method according to the embodiments of the present invention, and the above described and other operations and/or functions of each module in the router 4300 aim to respectively implement corresponding processes of the methods in FIG. 9 to FIG. 20, which will not be repeated herein in order to avoid redundancy.

Thus, the embodiments of the present invention may greatly reduce the number of entries of a core routing table, and effectively solve a problem of routing scalability in an existing ICN system such as an NDN by adding container information of content on the basis of a content name to expand attributes of the content in the ICN system, limiting a route of a topology-unrelated small container to a topology-related container which provides it with an access service, and limiting a route of a lower level container of the topology-related container to the topology-related container.

FIG. 44 is a schematic block diagram of a router 4400 according to another embodiment of the present invention, as shown in FIG. 44, the router 4400 includes: a receiver 4410, a memory 4420 and a processor 4430, e.g., a CPU. The memory 4420 is configured to store an instruction for a forwarding engine, where the forwarding engine may include an FIB, or may include the FIB and a CS, or may include the FIB, the CS, and a PIT. The processor 4430 is configured to execute the instruction stored by the memory 4420.

Specifically, the receiver 4410 is configured to receive a content request packet, where the content request packet carries a content name of requested content and container information of the requested content, and the container information of the requested content includes a container identification which is used to identify a container storing the requested content, the container includes at least one routing node, and through one or more routing nodes of the at least one routing node, the requested content can be routed to within the container, or the requested content can be routed to via the container;

The processor 4430 is configured to determine a forwarding route of the content request packet according to the content name of the requested content and the container information of the requested content carried in the content request packet received by the receiver 4410.

Thus, a router according to the embodiment of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

Optionally, the content request packet may carry container information of only one container, and may also carry container information of two or more than two containers, but the embodiment of the present invention are not limited thereto. The container information of the container includes a container identification of the container, and optionally, the container information of the container may also further include a resolution identification of the container, but the embodiments of the present invention are not limited thereto.

The container is a storage space which is configured to store a group of content. Optionally, the content name of the requested content is corresponding to one or more attribute containers, the attribute container of the requested content is a container which can route to the requested content directly.

Optionally, the container is an access container of one or more first further containers; and/or one or more second further containers are access containers of the container; where the access container is a container which includes a further container in a topological relation and in which there is a forwarding entry routing the content request packet to the further container. Specifically, when a second container includes a first container and in the second container there is a forwarding entry routing the content request packet to the first container, the second container is an access container of the first container.

Optionally, in an embodiment of the present invention, the processor 4430 is specifically configured to: determine whether there is in a forwarding information base FIB a forwarding entry matching the content name of the requested content; and when there isn't in the FIB the forwarding entry matching the content name of the requested content, determine whether there is in the FIB a forwarding entry matching a container identification in container information of the requested content, where the forwarding entry in the FIB includes a preset container identification and an interface corresponding to the preset container identification;

Correspondingly, as shown in FIG. 45, the router 4500 further includes:
a transmitter 4540, configured to: when the processor 4530 determines that there is in the FIB the forwarding entry matching the container identification in the container information of the requested content, send the content request packet according to an interface in the matching forwarding entry.

Optionally, the content name of the requested content and the container information of the requested content form a tree taking the content name of the requested content as a root node, a child node of the root node represents container information of an attribute container of the requested content, a container corresponding to container information represented by a first node is an access container of a container corresponding to container information represented by a parent node of the first node, where the first node is a further node other than the root node and the child node of the root node in the tree.

Optionally, as another embodiment, the content name of the requested content and the container information of the requested content form a directed acyclic graph taking the content name of the requested content as an entrance vertex, an ending point of a directed edge starting from the entrance vertex represents container information of an attribute container of the requested content, a container corresponding to container information represented by a second vertex in the directed acyclic graph is an access container of a container corresponding to container information represented by a first vertex, where the first vertex is a further vertex other than the entrance vertex in the directed acyclic graph, and the second vertex is an ending point of a directed edge starting from the first vertex.

Correspondingly, in the content request packet, the tree structure or the directed acyclic graph structure may be indicated as a text format, but the embodiments of the present are not limited thereto.

The router 4500 according to the embodiments of the present invention may be corresponding to a router in the method for processing a content request according to the embodiments of the present invention, and the above described and other operations and/or functions of each module in the router 4500 aim to respectively implement corresponding processes of the methods in FIG. 21 and FIG. 22, which will not be repeated herein in order to avoid redundancy.

Thus, the router according to the embodiments of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

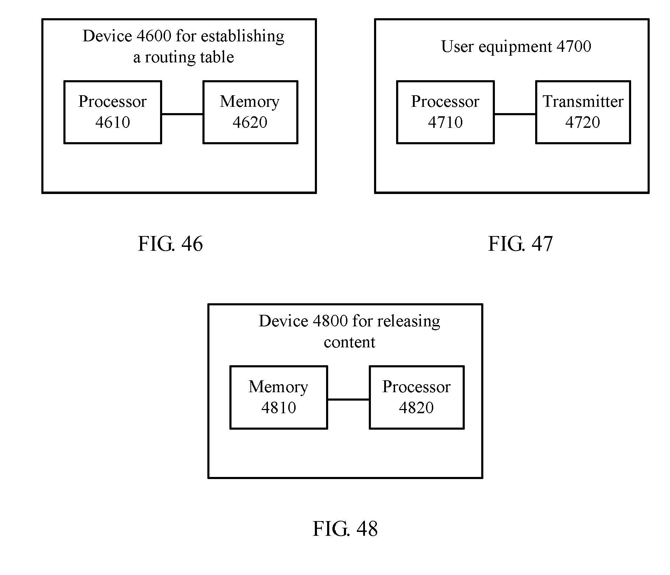

FIG. 46 is a schematic block diagram of a device 4600 for establishing a routing table according to an embodiment of the present invention, as shown in FIG. 46, the device 4600 for establishing the routing table includes: a processor 4610, e.g., a CPU, and a memory 4620.

Specifically, the processor 4610 is configured to generate a routing table of a current node so as to generate a forwarding information base FIB according to the routing table, where the routing table includes a global container route entry, and the global container route entry includes a container identification of a global container and a first interface corresponding to the container identification of the global container, the first interface is an interface which connects the current node to a next hop routing node to reach the global container, the global container is a globally routable container, and the global container includes a topology-related global container and/or a topology-unrelated global container;

The memory 4620 is configured to store the routing table generated by the processor 4610.

Since the FIB is a subset of the routing table, thus, the FIB of the current node may be generated according to the routing table generated in the embodiment of the present invention. The FIB may be an FIB in a routing and forwarding method and a method for processing the content request according to the embodiments of the present invention, which is specifically used to: when the current node receives a content request packet, match a content name and a container identification in container information of requested content carried by the content request packet with a forwarding entry in the FIB to determine a forwarding route of the content request packet.

Embodiments of the present invention divide all containers into three types: a topology-related container, a topology-unrelated large container and a topology-unrelated small container. The topology-related container is a container which forms a topological relation with a further container, the topological relation includes: a higher level container including one or more lower level containers, and/or a lower level container being included by one or more higher level containers. When two containers differ in level by one level, the container with a lower level is called as a lower level container of the container with a higher level, whereas the container with the higher level is called as a higher level container of the container with the lower level, the container with the lower level may be provided with an access service by the higher level container thereof, that is, the container with the higher level is an access container of the lower level container thereof.

The global container is a globally routable container, including a topology-related container which has the highest level in the topological relation and a topology-unrelated large container. A further topology-related container other than the topology-related global container in the topological relation is provided with an access container by a higher level container thereof, and the topology-unrelated small container may be provided with an access service by the topology-related container. Correspondingly, the route of the global container may be in a routing table of any routing node, and routes of a topology-unrelated small container and a further topology-related container other than the global container in the topological relation are only in a routing table of a routing node included by an access container thereof, thus without diffusing out of the access container thereof.

A routing table of a current node may include a global container route entry, where the global container route entry includes a container identification of a global container and a first interface corresponding to the container identification of the global container, and the first interface is an interface which connects the current node to a next hop routing node to reach the global container.

Optionally, the routing table of the current node may further include a local route, that is, may further include a topology-related container route entry and a topology-unrelated small container route entry. Specifically, the routing table further includes a topology-related container route entry which is used to perform routing based on the topology-related container, and through the topology-related container route entry, a route of a lower level container of a container to which the current node belongs is enabled to serve as an internal route of the current node without diffusing out of the container to which the current node belongs.

Optionally, the topology-related container route entry includes a lower level container identification of the lower level container of the container to which the current node belongs and a second interface corresponding to the lower level container identification, and the second interface is an interface which connects the current node to the lower level container;

through the topology-related container route entry, a route of a lower level container of a container to which the current node belongs being enabled to serve as an internal route of the current node without diffusing out of the container to which the current node belongs, includes:
through the lower level container identification and the second interface corresponding to the lower level container identification in the topology-related container route entry, the route of the lower level container of the container to which the current node belongs is enabled to serve as the internal route of the current node without diffusing out of the container to which the current node belongs.

Optionally, a container identification corresponding to the topology-related container has a nature which can reflect a level of the topology-related container, thus indicating the topological relation between the topology-related container and a further container.

Optionally, the routing table further includes a topology-unrelated small container route entry, where the topology-unrelated small container route entry includes a container identification of a topology-unrelated small container and a third interface corresponding to the container identification of the topology-unrelated small container, and the third interface is an interface which connects the current node to a next hop routing node to reach the topology-unrelated small container.

Optionally, according to an actual application or a deployment strategy requirement, some topology-unrelated large containers may also be provided with an access service by a topology-related container, at this time, these topology-unrelated large containers serve as internal routes of access containers thereof without diffusing out of the access containers thereof, but the embodiments of the present invention are not limited thereto.

Thus, in the embodiments of the present invention, the number of route entries of a core routing table is basically equal to "the number of routes of topology-related global containers" plus "the number of routes of topology-unrelated global containers". Due to the small number of the two types of routes, the size of a total routing table may be even smaller than the number of entries of the core routing table in a nowadays internet router. Thus, the embodiments of the present invention may greatly reduce the number of entries of a core routing table, and effectively solve a problem of routing scalability in an existing ICN system such as an NDN by adding container information of content on the basis of a content name to expand attributes of the content in the ICN system, limiting a route of a topology-unrelated container with few visits to a topology-related container which provides it with an access service, and limiting a route of a lower level container of the topology-related container to the topology-related container.

The device 4600 for establishing the routing table according to the embodiments of the present invention may be corresponding to a device in the method for establishing a routing table according to the embodiments of the present invention, and the above described and other operations and/or functions of each module in the device 4600 for establishing a routing table aim to respectively implement corresponding processes of the methods in FIG. 22 and FIG. 23, which will not be repeated herein in order to avoid redundancy.

FIG. 47 is a schematic block diagram of a user equipment 4700 according to an embodiment of the present invention. As shown in FIG. 47, the user equipment 4700 includes: a processor 4710, e.g., a CPU, and a transmitter 4720.

The processor 4710 is configured to generate a content request packet, where the content request packet carries a content name of requested content and container information of the requested content, and the container information of the requested content includes a container identification which is used to identify a container storing the requested content;

The transmitter 4720 is configured to send the content request packet generated by the processor 4710 to a network device, so that the network device determines a forwarding route of the content request packet according to the content name of the requested content and the container information of the requested content.

Thus, the user equipment according to the embodiment of the present invention can reduce dependence of routing and forwarding upon a content name by adding container information of content based on the content name so as to expand attributes of the content in an ICN system, which thus may reduce route entries in a routing table, and provide possibilities for solving problems such as routing scalability and mobility caused by the content name.

Optionally, in an embodiment of the present invention, the content name of the requested content is corresponding to one or more attribute containers, and the attribute container of the requested content is a container which can route to the requested content directly.

Optionally, the container includes at least one routing node, and through one or more routing nodes of the at least one routing node, the requested content can be routed to within the container, or the requested content can be routed to via the container.

Optionally, the container information further includes a resolution identification corresponding to the container identification, and the resolution identification is used to identify whether a container corresponding to the container identification is resolvable.

Optionally, as another embodiment, the processor 4710 is also configured to: acquire container information of the requested content, and generate the content request packet according to the acquired container information of the requested content.

Optionally, as another embodiment, the processor 4710 is also configured to acquire container information of the requested content before generating the content request packet, and generate the content request packet according to the acquired container information of the requested content.

Optionally, as another embodiment, the processor 4710 is also configured to: determine an access container of the container according to the acquired container information of the requested content; and add container information of the access container into the container information of the requested content; and generate the content request packet according to updated container information of the requested content.

Optionally, as another embodiment, the processor 4710 is also configured to: determine access containers of all resolvable containers of the requested content according to the acquired container information of the requested content; and add container information of the access containers of all resolvable containers into the container information of the requested content; and generate the content request packet according to updated container information of the requested content.

The user equipment 4700 according to the embodiments of the present invention may be corresponding to a device in the method for acquiring content according to the embodiments of the present invention, and the above described and other operations and/or functions of each module in the user equipment 4700 aim to respectively implement corresponding processes of the methods in FIG. 24 to FIG. 26, which will not be repeated herein in order to avoid redundancy.

Thus, the user equipment according to the embodiments of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

FIG. 48 is a schematic block diagram of a device 4800 for releasing content according to an embodiment of the present invention, as shown in FIG. 48, the device 4800 includes: a memory 4810, and a processor 4820, e.g., a CPU. The memory 4810 is configured to store an instruction, and the processor 4820 is configured to execute the instruction stored by the memory 4810.

Specifically, the processor 4820 is configured to: determine a container set of content and container information of each container in the container set, where the container set includes at least one container storing the content; and release the content and information of the content, where the information of the content includes a content name of the content and the container information of each container in the container set, so that a user generates a content request packet according to the information of the content and send the same to a network device, and a routing node determines a forwarding route of the content request packet according to the information of the content carried in the content request packet.

Thus, the device for releasing content according to the embodiment of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

Optionally, in an embodiment of the present invention, the container information includes a container identification.

Optionally, the container includes at least one routing node, and through one or more routing nodes of the at least one routing node, the requested content can be routed to within the container, or the requested content can be routed to via the container.

Optionally, the content name of the content is corresponding to one or more attribute containers, and the attribute container of the requested content is a container which can route to the requested content directly.

Optionally, as another embodiment, the processor 4820 is also configured to register at least one container in the container set and an access container of the at least one container into a resolution system, so that a user or a routing node acquires the access container of the at least one container by querying the resolution system.

Optionally, the container information includes: a container identification and a resolution identification, where the resolution identification is used to identify whether a container is resolvable.

The device 4800 for releasing content according to the embodiment of the present invention may be corresponding to a device in the method for acquiring content according to the embodiments of the present invention, and the above described and other operations and/or functions of each module in the device 4800 for releasing content aim to respectively implement corresponding processes of the methods in FIG. 27 to FIG. 28, which will not be repeated herein in order to avoid redundancy.

Thus, a device for releasing content according to the embodiments of the present invention can reduce dependence of routing and forwarding upon a content name by adding container information of content on the basis of the content name to expand attributes of the content in an ICN system, which thus may reduce route entries in a routing table, and provide possibilities for solving problems such as routing scalability and mobility caused by the content name.

It may be further known by persons skilled in the art that, the units and the algorithm steps of each example that are described with reference to the embodiments disclosed herein may be implemented by electronic hardware, or a combination of electronic hardware and computer software. The situation that these functions are performed by hardware or software depends on specific application and a design constraint of the technical solutions. Persons skilled in the art may implement the described functions by using different methods for each specific application, and such implementation should not be regarded as going beyond the scope of the present invention.

It may be clearly understood by a person skilled in the art that, for the purpose of convenient and brief description, reference may be made to the corresponding process in the foregoing method embodiments for a detailed working process of the foregoing system, device and unit, which will not be repeated herein.

In several embodiments provided in the present application, it should be understood that the disclosed system, device, and method may be implemented in other manners. For example, the described device embodiment is merely exemplary. For example, the unit division is merely logical function division and there may be other divisions during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separated, and parts displayed as units may or may not be physical units, that is, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

The described functions, if being implemented in a form of a software functional unit and sold or used as an independent product, may be stored in a computer-readable storage medium. Based on such understanding, the technical solutions of the present invention essentially, or the part contributing to the prior art, or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program codes, such as a USB flash disk, a mobile hard disk, a read-only memory (ROM, Read-Only Memory), a random access memory (RAM, Random Access Memory), a magnetic disk, or an optical disc.

The above descriptions are specific embodiments of the present invention, but the protection scope of the present invention is not limited thereto. Any modification or replacement that may be readily envisaged of by those skilled in the art within the technical scope disclosed in the present invention should fall into the protection scope of the present invention. Thus, the protection scope of the present invention should be subject to that of the appended claims.

## Claims

1. A container name server, comprising:
a network interface, configured to receive a resolution request packet sent by a network node, wherein the resolution request packet comprises a container identification of a container to be resolved; and
an execution engine, configured to acquire, according to the container identification of the container to be resolved, a container identification of an access container of the container to be resolved.

2. The container name server according to claim 1, wherein the network interface is further configured to send a resolution response packet to the network node sending the resolution request packet, wherein the resolution response packet comprises the container identification of the access container of the container to be resolved.

3. The container name server according to claim 2, wherein the network interface is specifically configured to receive the resolution request packet sent by the network node, wherein the resolution request packet is an interest packet; and send the resolution response packet to the network node sending the resolution request packet, wherein the resolution response packet is a data packet.

4. The container name server according to any one of claims 1-3, wherein the container name server further comprises a database,
the execution engine is specifically configured to query, according to the container identification of the container to be resolved, the database for the container identification of the access container of the container to be resolved, wherein the database stores a mapping relationship between the container to be resolved and the access container of the container to be resolved.

5. The container name server according to any one of claims 1-4, wherein the network interface is further configured to receive a registration request packet sent by the network node, wherein the registration request packet comprises a container identification of a container to be registered and a container identification of an access container of the container to be registered; and
the execution engine is further configured to store a mapping relationship between the container to be registered and the access container of the container to be registered so as to acquire the container identification of the access container of the container to be registered according to the container identification of the container to be registered.

6. The container name server according to claim 5, wherein the network interface is specifically configured to receive the registration request packet sent by the network node, wherein the registration request packet is an interest packet.

7. The container name server according to claim 5 or 6, wherein the network interface is further configured to send a registration response packet to the network node sending the registration request packet, wherein the registration response packet comprises information used to indicate whether registration is successful and information used to indicate that information in the registration response packet is un-cacheable.

8. The container name server according to claim 7, wherein the network interface is specifically configured to send the registration response packet to the network node sending the registration request packet, wherein the registration response packet is a data packet.

9. The container name server according to any one of claims 1-8, wherein the network interface is further configured to receive an unregistration request packet sent by the network node, wherein the unregistration request packet comprises a container identification of a container to be unregistered and a container identification of an access container of the container to be unregistered;
the execution engine is further configured to delete from a database a mapping relationship between the container to be unregistered and the access container of the container to be unregistered.

10. The container name server according to claim 9, wherein the network interface is specifically configured to receive the unregistration request packet sent by the network node, and the unregistration request packet is an interest packet.

11. The container name server according to claim 1, wherein the execution engine is specifically configured to query, according to the container identification of the container to be resolved, a database for the container identification of the access container of the container to be resolved; and when the container identification of the access container is not found, determine an authority container name server of the container to be resolved according to the container identification of the container to be resolved, wherein the authority container name server is configured to register, unregister and resolve the container to be resolved; and the network interface is further configured to forward the resolution request packet to the authority container name server.

12. The container name server according to any one of claims 1-11, wherein the container is a storage space which is configured to store a group of content.

13. The container name server according to any one of claims 1-12, wherein the container comprises at least one routing node, and through one or more routing nodes of the at least one routing node, content stored by the container can be routed to within the container, or the content stored by the container can be routed to via the container.

14. The container name server according to any one of claims 1-12, wherein content stored by the container is corresponding to one or more attribute containers, and the attribute container of the content is a container which can directly route to the content.

15. The container name server according to any one of claims 1-14, wherein the container is an access container of one or more first further containers; and/or
one or more second further containers are access containers of the container;
wherein the access container is a container which comprises a further container in a topological relation and in which there is a forwarding entry routing a content request packet corresponding to content stored by the container to the further container.

16. A network node, comprising:
an execution engine, configured to acquire a resolution request packet, wherein the resolution request packet comprises a container identification of a container to be resolved, and a network interface, configured to send the resolution request packet to a container name server, so that the container name server acquires a container identification of an access container of the container to be resolved according to the container identification of the container to be resolved; or
an execution engine, configured to acquire a registration request packet, wherein the registration request packet comprises a container identification of a container to be registered and a container identification of an access container of the container to be registered, and a network interface, configured to send the registration request packet to an authority container name server of the container to be registered, so that the authority container name server stores a mapping relationship between the container to be registered and the access container of the container to be registered; or
an execution engine, configured to acquire a unregistration request packet, wherein the unregistration request packet comprises a container identification of a container to be unregistered and a container identification of an access container of the container to be unregistered, and a network interface, configured to send the unregistration request packet to an authority container name server of the container to be unregistered, so that the authority container name server deletes from a database a mapping relationship between the container to be unregistered and the access container of the container to be unregistered according to the container identification of the access container of the container to be unregistered.

17. The network node according to claim 16, wherein the network interface is further configured to receive a resolution response packet corresponding to the resolution request packet, wherein the resolution response packet comprises the container identification of the access container of the container to be resolved.

18. The network node according to claim 17, wherein the resolution request packet is an interest packet, and the resolution response packet is a data packet.

19. The network node according to claim 16, wherein the network interface is further configured to receive a registration response packet corresponding to the registration request packet, wherein the registration response packet comprises information used to indicate whether registration is successful and information used to indicate that information in the registration response packet is un-cacheable.

20. The network node according to claim 19, wherein the registration request packet is an interest packet, and the registration response packet is a data packet.

21. The network node according to claim 16, wherein the network interface is further configured to receive an unregistration response packet corresponding to the unregistration request packet, wherein the unregistration response packet comprises information used to indicate whether unregistration is successful and information used to indicate that information in the registration response packet is un-cacheable.

22. The network node according to claim 21, wherein the unregistration request packet is an interest packet, and the unregistration response packet is a data packet.

23. The network node according to any one of claims 16-22, wherein
the network interface is further configured to receive a content request packet, wherein the content request packet carries a content name of requested content and container information of the requested content, and the container information of the requested content comprises a container identification which is used to identify a container storing the requested content;
the execution engine is specifically configured to generate the resolution request packet, wherein the container identification of the container to be resolved is a container identification of the container of the requested content.

24. The network node according to claim 23, wherein the container information of the requested content further comprises a resolution identification corresponding to the container identification, wherein the resolution identification is used to identify whether a container corresponding to the container identification is resolvable,
the network interface is further configured to receive a resolution result sent by the container name server, wherein the resolution result comprises the container identification of the access container of the container to be resolved;
wherein the execution engine is further configured to match the container identification in the container information of the requested content and container identifications of access containers of all resolvable containers of the requested content with a preset container identification in a forwarding information base FIB, to determine whether there is in the FIB a forwarding entry matching the container identification in the container information of the requested content and the container identifications of the access containers;
the network interface is further configured to: when there is in the FIB the forwarding entry matching the container identification in the container information of the requested content or the container identification of the access container of the container to be resolved, send the content request packet according to an interface in the matching forwarding entry.

25. The network node according to claim 24, wherein the execution engine is further configured to add container information of the access containers of all the resolvable containers of the requested content acquired through resolution into the container information of the requested content.

26. The network node according to claim 23, wherein the container information further comprises a resolution identification corresponding to the container identification, wherein the resolution identification is used to identify whether a container corresponding to the container identification is resolvable;
the execution engine is further configured to determine whether there is in an FIB a forwarding entry matching the container identification in the container information of the requested content, wherein the forwarding entry in the FIB comprises a preset container identification and an interface corresponding to the preset container identification; when there isn't in the FIB the forwarding entry matching the container identification in the container information of the requested content, acquire the container identification of the access container of the container from the container name server through resolution according to the resolution identification; match the container identification of the access container acquired through the resolution with the preset container identification in the FIB to determine whether there is in the FIB a forwarding entry matching the container identification of the access container acquired through the resolution.

27. The network node according to claim 26, wherein the execution engine is further configured to add container information of the access container acquired through the resolution into the container information of the requested content.

28. The network node according to any one of claims 16-27, wherein the container is a storage space which is configured to store a group of content.

29. The network node according to any one of claims 16-28, wherein the container comprises at least one routing node, and through one or more routing nodes of the at least one routing node, content stored by the container can be routed to within the container, or the content stored by the container can be routed to via the container.

30. The network node according to any one of claims 16-28, wherein the content stored by the container is corresponding to one or more attribute containers, and the attribute container of the content is a container which can directly route to the content.

31. The network node according to any one of claims 16-30, wherein the container is an access container of one or more first further containers; and/or
one or more second further containers are access containers of the container;
wherein the access container is a container which comprises a further container in a topological relation and in which there is a forwarding entry routing a content request packet corresponding to the content stored by the container to the further container.

32. The network node according to any one of claims 24-31, wherein the FIB comprises a global container forwarding entry, wherein the global container forwarding entry comprises a container identification of a global container and a first interface corresponding to the container identification of the global container, the first interface is an interface which connects a current node to a next hop routing node to reach the global container, the global container is a globally routable container, and the global container comprises a topology-related global container and/or a topology-unrelated global container.

33. The network node according to claim 32, wherein the FIB further comprises a topology-related container forwarding entry used to perform routing based on the topology-related container, and through the topology-related container forwarding entry, a route of a lower level container of a container to which the current node belongs is enabled to serve as an internal route of the current node without diffusing out of the container to which the current node belongs;
wherein the topology-related container is a container which forms a topological relation with a further container, and the topological relation comprises: a higher level container comprising one or more lower level containers, and/or a lower level container being comprised by one or more higher level containers.

34. The network node according to claim 33, wherein the topology-related container forwarding entry comprises a container identification of the lower level container of the container to which the current node belongs and a second interface corresponding to the container identification of the lower level container, wherein the second interface is an interface which connects the current node to the lower level container;
wherein through the topology-related container forwarding entry, the route of the lower level container of the container to which the current node belongs being enabled to serve as the internal route of the current node without diffusing out of the container to which the current node belongs, comprises:
through the container identification of the lower level container and the second interface corresponding to the container identification of the lower level container in the topology-related container forwarding entry, the route of the lower level container of the container to which the current node belongs is enabled to serve as the internal route of the current node without diffusing out of the container to which the current node belongs.

35. The network node according to claim 33 or 34, wherein a container identification corresponding to the topology-related container has a nature which can reflect a level of the topology-related container, thus indicating the topological relation formed between the topology-related container and a further container.

36. The network node according to any one of claims 32-35, wherein the FIB further comprises a topology-unrelated small container forwarding entry, wherein the topology-unrelated small container forwarding entry comprises a container identification of a topology-unrelated small container and a third interface corresponding to the container identification of the topology-unrelated small container, and the third interface is an interface which connects the current node to a next hop routing node to reach the topology-unrelated small container.

37. A method for container name resolution, comprising:
receiving a resolution request packet sent by a network node, wherein the resolution request packet comprises a container identification of a container to be resolved; and
acquiring, according to the container identification of the container to be resolved, a container identification of an access container of the container to be resolved.

38. The method according to claim 37, further comprising:
sending a resolution response packet to the network node sending the resolution request packet, wherein the resolution response packet comprises the container identification of the access container of the container to be resolved.

39. The method according to claim 38, wherein the receiving the resolution request packet sent by the network node comprises:
receiving the resolution request packet sent by the network node, wherein the resolution request packet is an interest packet; and
the sending the resolution response packet to the network node sending the resolution request packet comprises:
sending the resolution response packet to the network node sending the resolution request packet, wherein the resolution response packet is a data packet.

40. The method according to any one of claims 37-39, wherein the acquiring, according to the container identification of the container to be resolved, the container identification of the access container of the container to be resolved comprises:
querying, according to the container identification of the container to be resolved, a database for the container identification of the access container of the container to be resolved, wherein the database stores a mapping relationship between the container to be resolved and the access container of the container to be resolved.

41. The method according to anyone of claims 37-40, further comprising:
receiving a registration request packet sent by the network node, wherein the registration request packet comprises a container identification of a container to be registered and a container identification of an access container of the container to be registered; and
storing a mapping relationship between the container to be registered and the access container of the container to be registered so as to acquire the container identification of the access container of the container to be registered according to the container identification of the container to be registered.

42. The method according to claim 41, wherein the receiving the registration request packet sent by the network node comprises:
receiving the registration request packet sent by the network node, wherein the registration request packet is an interest packet.

43. The method according to claim 41 or 42, further comprising:
sending a registration response packet to the network node sending the registration request packet, wherein the registration response packet comprises information used to indicate whether registration is successful and information used to indicate that information in the registration response packet is un-cacheable.

44. The method according to claim 43, wherein the sending the registration response packet to the network node sending the registration request packet comprises:
sending the registration response packet to the network node sending the registration request packet, wherein the registration response packet is a data packet.

45. The method according to any one of claims 37-44, further comprising:
receiving an unregistration request packet sent by the network node, wherein the unregistration request packet comprises a container identification of a container to be unregistered and a container identification of an access container of the container to be unregistered;
deleting from a database a mapping relationship between the container to be unregistered and the access container of the container to be unregistered.

46. The method according to claim 45, wherein the receiving the unregistration request packet sent by the network node comprises:
receiving the unregistration request packet sent by the network node, wherein the unregistration request packet is an interest packet.

47. The method according to claim 37, wherein the acquiring, according to the container identification of the container to be resolved, the container identification of the access container of the container to be resolved comprises:
querying, according to the container identification of the container to be resolved, a database for the container identification of the access container of the container to be resolved;
when the container identification of the access container is not found, determining, according to the container identification of the container to be resolved, an authority container name server of the container to be resolved, wherein the authority container name server is configured to register, unregister and resolve the container to be resolved;
forwarding the resolution request packet to the authority container name server.

48. The method according to any one of claims 37-47, wherein the container is a storage space which is configured to store a group of content.

49. The method according to any one of claims 37-48, wherein the container comprises at least one routing node, and through one or more routing nodes of the at least one routing node, content stored by the container can be routed to within the container, or the content stored by the container can be routed to via the container.

50. The method according to any one of claims 37-48, wherein content stored by the container is corresponding to one or more attribute containers, and the attribute container of the content is a container which can directly route to the content.

51. The method according to any one of claims 37-50, wherein the container is an access container of one or more first further containers; and/or
one or more second further containers are access containers of the container;
wherein the access container is a container which comprises a further container in a topological relation and in which there is a forwarding entry routing a content request packet corresponding to the content stored by the container to the further container.

52. A method for container name resolution, comprising:
acquiring a resolution request packet, wherein the resolution request packet comprises a container identification of a container to be resolved, and sending the resolution request packet to a container name server, so that the container name server acquires a container identification of an access container of the container to be resolved according to the container identification of the container to be resolved; or
acquiring a registration request packet, wherein the registration request packet comprises a container identification of a container to be registered and a container identification of an access container of the container to be registered, and sending the registration request packet to an authority container name server of the container to be registered, so that the authority container name server stores a mapping relationship between the container to be registered and the access container of the container to be registered; or
acquiring a unregistration request packet, wherein the unregistration request packet comprises a container identification of a container to be unregistered and a container identification of an access container of the container to be unregistered, and sending the unregistration request packet to an authority container name server of the container to be unregistered, so that the authority container name server deletes from a database a mapping relationship between the container to be unregistered and the access container of the container to be unregistered according to the container identification of the access container of the container to be unregistered.

53. The method according to claim 52, further comprising:
receiving a resolution response packet corresponding to the resolution request packet, wherein the resolution response packet comprises the container identification of the access container of the container to be resolved.

54. The method according to claim 53, wherein the resolution request packet is an interest packet, and the resolution response packet is a data packet.

55. The method according to claim 52, further comprising:
receiving a registration response packet corresponding to the registration request packet, wherein the registration response packet comprises information used to indicate whether registration is successful and information used to indicate that information in the registration response packet is un-cacheable.

56. The method according to claim 55, wherein the registration request packet is an interest packet, and the registration response packet is a data packet.

57. The method according to claim 52, further comprising:
receiving an unregistration response packet corresponding to the unregistration request packet, wherein the unregistration response packet comprises information used to indicate whether unregistration is successful and information used to indicate that information in the registration response packet is un-cacheable.

58. The method according to claim 57, wherein the unregistration request packet is an interest packet, and the unregistration response packet is a data packet.

59. The method according to any one of claims 52-58, wherein the acquiring the resolution request packet comprises:
receiving a content request packet, wherein the content request packet carries a content name of requested content and container information of the requested content, and the container information of the requested content comprises a container identification which is used to identify a container storing the requested content;
generating the resolution request packet, wherein the container identification of the container to be resolved is the container identification of the container of the requested content.

60. The method according to claim 59, wherein the container information of the requested content further comprises a resolution identification corresponding to the container identification, wherein the resolution identification is used to identify whether a container corresponding to the container identification is resolvable,
the method further comprises:
receiving a resolution result sent by the container name server, wherein the resolution result comprises the container identification of the access container of the container to be resolved;
matching the container identification in the container information of the requested content and container identifications of access containers of all resolvable containers of the requested content with a preset container identification in a forwarding information base FIB, to determine whether there is in the FIB a forwarding entry matching the container identification in the container information of the requested content and the container identifications of the access containers;
when there is in the FIB a forwarding entry matching the container identification in the container information of the requested content or the container identification of the access container of the container to be resolved, sending the content request packet according to an interface in the matching forwarding entry.

61. The method according to claim 60, wherein the method further comprises:
adding container information of the access containers of all resolvable containers of the requested content acquired through resolution into the container information of the requested content.

62. The method according to claim 59, wherein the container information further comprises a resolution identification corresponding to the container identification, wherein the resolution identification is used to identify whether a container corresponding to the container identification is resolvable;
the method further comprises:
determining whether there is in an FIB a forwarding entry matching the container identification in the container information of the requested content, wherein the forwarding entry in the FIB comprises a preset container identification and an interface corresponding to the preset container identification;
when there isn't in the FIB the forwarding entry matching the container identification in the container information of the requested content, acquiring the container identification of the access container of the container from the container name server through resolution according to the resolution identification;
matching the container identification of the access container acquired through the resolution with the preset container identification in the FIB to determine whether there is in the FIB a forwarding entry matching the container identification of the access container acquired through the resolution.

63. The method according to claim 62, wherein the method further comprises:
adding container information of the access container acquired through the resolution into the container information of the requested content.

64. The method according to any one of claims 52-63, wherein the container is a storage space which is configured to store a group of content.

65. The method according to any one of claims 52-64, wherein the container comprises at least one routing node, and through one or more routing nodes of the at least one routing node, content stored by the container can be routed to within the container, or the content stored by the container can be routed to via the container.

66. The method according to any one of claims 52-64, wherein content stored by the container is corresponding to one or more attribute containers, and the attribute container of the content is a container which can directly route to the content.

67. The method according to any one of claims 52-66, wherein the container is an access container of one or more first further containers; and/or
one or more second further containers are access containers of the container;
wherein the access container is a container which comprises a further container in a topological relation and which has a forwarding entry routing a content request packet corresponding to the content stored by the container to the further container.

68. The method according to any one of claims 60-67, wherein the FIB comprises a global container forwarding entry, wherein the global container forwarding entry comprises a container identification of a global container and a first interface corresponding to the container identification of the global container, the first interface is an interface which connects a current node to a next hop routing node to reach the global container, the global container is a globally routable container, and the global container comprises a topology-related global container and/or a topology-unrelated global container.

69. The method according to claim 68, wherein the FIB further comprises a topology-related container forwarding entry used to perform routing based on the topology-related container, and through the topology-related container forwarding entry, a route of a lower level container of a container to which the current node belongs is enabled to serve as an internal route of the current node without diffusing out of the container to which the current node belongs;
wherein the topology-related container is a container which forms a topological relation with a further container, and the topological relation comprises: a higher level container comprising one or more lower level containers, and/or a lower level container being comprised by one or more higher level containers.

70. The method according to claim 69, wherein the topology-related container forwarding entry comprises a container identification of the lower level container of the container to which the current node belongs and a second interface corresponding to the container identification of the lower level container, wherein the second interface is an interface which connects the current node to the lower level container;
wherein through the topology-related container forwarding entry, the route of the lower level container of the container to which the current node belongs being enabled to serve as the internal route of the current node without diffusing out of the container to which the current node belongs, comprises:
through the container identification of the lower level container and the second interface corresponding to the container identification of the lower level container in the topology-related container forwarding entry, the route of the lower level container of the container to which the current node belongs is enabled to serve as the internal route of the current node without diffusing out of the container to which the current node belongs.

71. The method according to claim 69 or 70, wherein a container identification corresponding to the topology-related container has a nature which can reflect a level of the topology-related container, thus indicating the topological relation formed between the topology-related container and a further container.

72. The method according to any one of claims 68-71, wherein the FIB further comprises a topology-unrelated small container forwarding entry, wherein the topology-unrelated small container forwarding entry comprises a container identification of a topology-unrelated small container and a third interface corresponding to the container identification of the topology-unrelated small container, and the third interface is an interface which connects the current node to a next hop routing node to reach the topology-unrelated small container.
